# EUROPEAN PATENT APPLICATION

(11) **EP 2 631 067 A1**
(43) Date of publication of application: **28.08.2013**
(21) Application number: 11834258.3
(22) Date of filing: 13.10.2011
(51) Int. Cl.: B32B 27/18

(54) **HIGHLY FLAME-RETARDANT POLYMER MEMBER, FLAME-RETARDANT ARTICLE, AND FLAME-RETARDING METHOD**

(30) Priority: 10.02.2011 JP 2011027324; 19.10.2010 JP 2010234562
(71) Applicant: Nitto Denko Corporation, Ibaraki-shi, Osaka 567-8680 (JP)
(72) Inventor: DOI, Kohei, Ibaraki-shi Osaka 567-8680 (JP); NAGASAKI, Kunio, Ibaraki-shi Osaka 567-8680 (JP); SUGINO, Yusuke, Ibaraki-shi Osaka 567-8680 (JP); HIDA, Takafumi, Ibaraki-shi Osaka 567-8680 (JP)
(74) Representative: Müller-Boré & Partner Patentanwälte
(86) International application number: PCT/JP2011/073536
(87) International publication number: WO 2012/053418

(57) **Abstract**

Provided is a flame-retardant member having transparency, flexibility, and a high level of flame retardancy. A highly flame-retardant polymer member of the present invention is a highly flame-retardant polymer member including a polymer layer (**B**), an inorganic base material (**L**), and a flame-retardant layer (**A**) in the stated order, in which the flame-retardant layer (**A**) is a layer containing a layered inorganic compound (**f**) in a polymer.

## Description

### Technical Field

The present invention relates to a highly flame-retardant polymer member. The highlyflame-retardant polymer member of the present invention is excellent in transparency and flexibility, and can make various adherends flame-retardant by being flexibly attached to the various adherends. In addition, the member can provide an article provided with flame retardancy by being attached to any one of the various adherends.

### Background Art

Criteria for combustibility are classified into five stages, i.e., noncombustible, extremely flame-retardant, flame-retardant, slow-burning, and combustible in order of decreasing difficulty in combustion. In a printed matter to be attached to a building material such as an interior material, exterior material, or decorative laminate for a building or housing, or to an interior material or glass portion in a carrier such as a railway vehicle, a ship, or an aircraft, flame retardancy that can be adopted is specified for each of its applications.

A printed matter to be attached to a wall surface in an ordinary shop or the like, a wall surface in a railway vehicle, or a glass portion inside or outside the railway vehicle is as described below. A pattern to be displayed is printed on one surface of a base material sheet such as paper or a film, a pressure-sensitive adhesive layer is provided on the other surface thereof, and the printed matter is attached through the pressure-sensitive adhesive layer. However, such printed matter is combustible and hence most of the printed matter burns out when its combustion is left.

Accordingly, a possible approach to imparting flame retardancy to the base material sheet is to use a flame-retardant resin sheet as the base material sheet. A halogen-based resin such as a fluorine-based resin or a vinyl chloride resin has been conventionally used as such flame-retardant resin sheet (Patent Literature 1). However, the use of a halogen-based resin sheet has started to be regulated because of such problems of a halogen-containing substance as described below. The substance produces a toxic gas or produces dioxin when burnt. Accordingly, in recent years, the following method has been widely known for imparting flame retardancy to the resin material of a resin sheet (Patent Literature 2). A non-halogen-based flame retardant such as a phosphate or a metal hydrate is added to the resin. In this case, however, a large amount of the flame retardant must be added, with the result that a problem in that the transparency of the resin sheet reduces or a problem such as a defect in the external appearance of the resin sheet is induced.

To laminate, from above the printed matter on which the pattern has been printed, the flame-retardant resin sheet through the pressure-sensitive adhesive layer is also conceivable. In this case, however, a problem in that the clarity of the pattern on the printed matter reduces arises because the resin sheet is laminated on the printed matter through the pressure-sensitive adhesive layer, though flame retardancy is obtained as in the foregoing.

In addition, a material for the flame-retardant resin sheet is a resin. Accordingly, the sheet shows some degree of flame retardancy but does not have such flame retardancy as to be capable of blocking a flame, and hence its flame retardancy when the sheet is in direct contact with the flame is not sufficient.

In addition, a float glass such as a window glass involves the following risk. The glass breaks and shatters owing to its combustion. Accordingly, when shatterproof property can be imparted to a flame-retardant sheet having high transparency to be attached to the float glass such as a window glass, the sheet can express both the flame retardancy and the shatterproof property even when exposed to combustion at the time of, for example, a fire, and hence has extremely high practicality.

In addition, an interior material or a building timber is basically a combustible material and hence involves the following risk. The interior material or the building timber burns at the time of, for example, a fire to expand fire spreading. In view of the foregoing, when fire spreading-preventing property by which the expansion of combustion at the time of, for example, a fire can be prevented can be expressed by attaching a flame-retardant sheet having high transparency to the interior material or the building timber, the resultant has extremely high practicality.

### Citation List

### Patent Literature

[PTL 1] Japanese Patent Application Laid-open No. 2005-015620
[PTL 2] Japanese Patent Application Laid-open No. 2001-040172

### Summary of Invention

### Technical Problem

An object of the present invention is to provide a flame-retardant member having transparency, flexibility, and a high degree of flame retardancy.

In addition, another object of the present invention is to provide a flame-retardant article obtained by attaching the flame-retardant member to any one of the various adherends.

Further, another object of the present invention is to provide a flame-retarding method for an adherend including attaching the flame-retardant member to any one of the various adherends.

### Solution to Problem

The inventors of the present invention have made extensive studies to solve the problems, and as a result, have found that the problems can be solved with the following flame-retardant polymer member. Thus, the inventors have completed the present invention.

A highly flame-retardant polymer member of the present invention is a highly flame-retardant polymer member, including a polymer layer (**B**), an inorganic base material (**L**), and a flame-retardant layer (**A**) in the stated order, in which the flame-retardant layer (**A**) includes a layer containing a layered inorganic compound (**f**) in a polymer (**X**).

In a preferred embodiment, the inorganic base material (**L**) includes a fibrous inorganic base material.

In a preferred embodiment, the fibrous inorganic base material includes a glass cloth.

In a preferred embodiment, in a horizontal firing test involving horizontally placing the highly flame-retardant polymer member with its side of the flame-retardant layer (**A**) as a lower surface so that the lower surface is in contact with air, placing a Bunsen burner so that a flame port of the Bunsen burner is positioned at a lower portion distant from the lower surface on the side of the flame-retardant layer (**A**) by 45 mm, and bringing a flame of the Bunsen burner having a height of 55 mm from the flame port into contact with the lower surface of the flame-retardant layer (**A**) for 30 seconds while preventing the flame from being in contact with an end portion of the highly flame-retardant polymer member, the highly flame-retardant polymer member of the present invention has flame retardancy capable of blocking the flame.

In a preferred embodiment, a thickness of the flame-retardant layer (**A**) accounts for 50% or less of a total thickness of the flame-retardant layer (**A**) and the polymer layer (**B**).

In a preferred embodiment, the flame-retardant layer (**A**) has a thickness of 3 to 1,000 µm.

In a preferred embodiment, a content of ash in the flame-retardant layer (**A**) is 3 wt% or more and less than 70 wt%.

In a preferred embodiment, the layered inorganic compound (**f**) in the flame-retardant layer (**A**) includes a layered clay mineral.

In a preferred embodiment, the flame-retardant layer (**A**) and/or the polymer layer (**B**) each have/has pressure-sensitive adhesive property.

In a preferred embodiment, the highly flame-retardant polymer member of the present invention has a total light transmittance of 80% or more.

In a preferred embodiment, the highly flame-retardant polymer member of the present invention is obtained by laminating a syrupy polymerizable composition layer **(a)** formed of a polymerizable composition (**α**) containing a polymerizable monomer (**m**) and the layered inorganic compound (**f**), the inorganic base material (**L**), and a solid monomer-absorbing layer (**b**) containing a polymer (**p**) and capable of absorbing the polymerizable monomer (**m**), and performing polymerization.

In a preferred embodiment, the highly flame-retardant polymer member of the present invention is obtained by laminating a solid layered inorganic compound-containing polymer layer (**a**'), which is obtained by polymerizing a polymerizable composition layer (**a**) formed of a polymerizable composition (**α**) containing a polymerizable monomer (**m**) and the layered inorganic compound (**f**), the inorganic base material (**L**), and a solid monomer-absorbing layer (**b**) containing a polymer (**p**) and capable of absorbing the polymerizable monomer (**m**).

In a preferred embodiment, the highly flame-retardant polymer member of the present invention is obtained by laminating a syrupy polymerizable composition layer (**a'**) formed of a polymerizable composition (**α**) containing a polymerizable monomer (**m1**) and the layered inorganic compound (**f**), the inorganic base material (**L**), and a syrupy polymerizable composition layer (**b'**) containing a polymerizable monomer (**m2**) and a polymer (**p2**), and performing polymerization.

Another embodiment of the present invention provides a flame-retardant article. The flame-retardant article of the present invention is obtained by attaching the highly flame-retardant polymer member of the present invention to an adherend.

In a preferred embodiment, the adherend includes paper, lumber, a plastic material, a metal, a plaster board, glass, or a composite containing one or more thereof.

Another embodiment of the present invention provides a flame-retarding method for an adherend. The flame-retarding method for an adherend of the present invention includes attaching the highly flame-retardant polymer member of the present invention to an adherend to make the adherend flame-retardant.

In a preferred embodiment, the adherend includes paper, lumber, a plastic material, a metal, a plaster board, glass, or a composite containing one or more thereof.

### Advantageous Effects of Invention

A highly flame-retardant polymer member of the present invention includes a polymer layer (**B**), an inorganic base material (**L**), and a flame-retardant layer (**A**), which is a layer containing a layered inorganic compound (**f**) in a polymer (**X**), in the stated order.

In such construction as described above, the highly flame-retardant polymer member of the present invention has the inorganic base material (**L**). As a result, the member can express excellent flame retardancy. For example, when the member is attached to a window glass or the like, the window glass or the like can be effectively prevented from breaking and shattering owing to its combustion. In addition, when the member is attached to a timber or the like, the expansion of its combustion can be effectively prevented.

The flame-retardant layer (**A**) exerts a high degree of flame retardancy by virtue of the fact that the layer is a layer containing the layered inorganic compound (**f**) in the polymer (**X**). Despite the fact that the highly flame-retardant polymer member of the present invention has the polymer, the member does not burn and can block a flame for some time even when the member is in direct contact with the flame.

As the flame-retardant layer (**A**) has the polymer (**X**), the member can favorably maintain its flexibility, and has so wide a scope of applications as to be applicable to various applications.

There is no need to incorporate any halogen-based resin into the highly flame-retardant polymer member of the present invention.

In addition, the member is excellent in transparency because the ratio of the layered inorganic compound (**f**) in the polymer (**X**) in the flame-retardant layer (**A**) can be controlled so as to be relatively small. In particular, the member can exert flame retardancy even when the content of ash in the flame-retardant layer (**A**) is a content as small as less than 70 wt%. As described above, the highly flame-retardant polymer member of the present invention can effectively exert its flame retardancy while satisfying its flexibility and transparency.

In addition, the highly flame-retardant polymer member of the present invention is excellent in flame retardancy particularly when the highly flame-retardant polymer member of the present invention is obtained by laminating a syrupy polymerizable composition layer (**a**) formed of a polymerizable composition (**α**) containing a polymerizable monomer (**m**) and the layered inorganic compound (**f**), the inorganic base material (**L**), and a.solid monomer-absorbing layer (**b**) containing a polymer (**p**) and capable of absorbing the polymerizable monomer (**m**), and performing polymerization, and when the highly flame-retardant polymer member of the present invention is obtained by laminating a syrupy polymerizable composition layer (**a'**) formed of a polymerizable composition (**α**) containing a polymerizable monomer **(m1)** and the layered inorganic compound (**f**), the inorganic base material (**L**), and a syrupy polymerizable composition layer (**b'**) containing a polymerizable monomer (**m2**) and a polymer (**p2**), and performing polymerization.

The highly flame-retardant polymer member of the present invention is environmentally advantageous because there is no need to remove a volatile component (such as an organic solvent or an organic compound) in the polymerizable composition (**α**) through evaporation upon its production and hence a load on an environment can be reduced.

### Brief Description of Drawings

FIG. **1** is an example of a schematic sectional view of a highly flame-retardant polymer member of the present invention.
FIG. **2** is a schematic view of a method for a horizontal firing test for evaluating the highly flame-retardant polymer member of the present invention for its flame retardancy.
FIG. **3** is an example of a schematic sectional view of the highly flame-retardant polymer member of the present invention and a production method therefor.
FIG. **4** is an example of a schematic sectional view of the highly flame-retardant polymer member of the present invention and the production method therefor.

### Description of Embodiments

### <<1. Highly flame-retardant polymer member>>

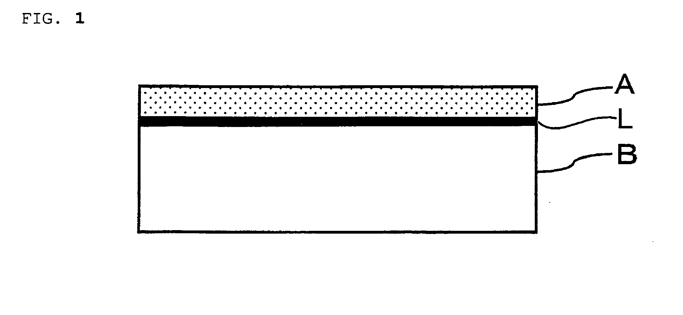

A highly flame-retardant polymer member of the present invention includes a polymer layer (**B**), an inorganic base material (**L**), and a flame-retardant layer (**A**), which is a layer containing a layered inorganic compound (**f**) in a polymer (**X**), in the stated order. The flame-retardant layer (**A**) is a layer containing a layered inorganic compound (**f**) in a polymer (**X**)**.** The polymer (**X**) may contain a cross-linked polymer. The structure of a polymer in the polymer layer (**B**) may be an uncross-linked structure or a semi-interpenetrating polymer network structure. The term "semi-interpenetrating polymer network structure" as used herein refers to a structure also referred to as "semi-IPN structure." When two kinds of polymers A and B are present in a system, such a structure that the polymer A has a cross-linked structure formed only of the polymer A and the polymer B has a cross-linked structure formed only of the polymer B is referred to as "interpenetrating polymer network structure (IPN structure)." In contrast, such a structure that the polymer A has an uncross-linked structure and the polymer B has a cross-linked structure is referred to as "semi-interpenetrating polymer network structure." FIG. **1** illustrates a schematic view of the highly flame-retardant polymer member of the present invention. Although the flame-retardant layer (**A**) is provided on one side of the polymer layer (**B**) in FIG. **1****,** the flame-retardant layer (**A**) can be provided on each of both sides of the polymer layer (**B**)**.** At least one of the outermost layers of the highly flame-retardant polymer member of the present invention may be a pressure-sensitive adhesive layer (**H**). Any appropriate pressure-sensitive adhesive layer can be adopted as the pressure-sensitive adhesive layer (**H**) as long as the layer can express re-peelability or strong pressure-sensitive adhesive property. The pressure-sensitive adhesive layer (**H**) is, for example, a layer formed from an acrylic pressure-sensitive adhesive, a urethane-based pressure-sensitive adhesive, a silicone-based pressure-sensitive adhesive, a natural rubber-based pressure-sensitive adhesive, a synthetic rubber-based pressure-sensitive adhesive, or a vinyl acetate-based pressure-sensitive adhesive. The pressure-sensitive adhesive layer (**H**) may be an applied layer formed by application, or may be a formed layer formed by extrusion molding or the like. Any appropriate thickness can be adopted as the thickness of the pressure-sensitive adhesive layer (**H**) depending on the kind of its pressure-sensitive adhesive and its degree of re-peelability. The thickness of the pressure-sensitive adhesive layer (**H**) is preferably 1 to 1,000 µm, more preferably 5 to 500 µm in order that the layer can express excellent re-peelability. The thickness of the pressure-sensitive adhesive layer (**H**) is preferably 1 to 3,000 µm, more preferably 5 to 1,000 µm in order that the layer can express strong pressure-sensitive adhesive property. A flavoring agent may be incorporated into at least one of the flame-retardant layer (**A**) and polymer layer (**B**) of the highly flame-retardant polymer member of the present invention. A weathering agent may be incorporated into at least one of the flame-retardant layer (**A**) and polymer layer (**B**) of the highly flame-retardant polymer member of the present invention. A heat-resistant resin may be incorporated into at least one of the flame-retardant layer (**A**) and polymer layer (**B**) of the highly flame-retardant polymer member of the present invention. Inorganic particles may be incorporated into the polymer layer (**B**) of the highly flame-retardant polymer member of the present invention.

### <1-1. Polymer layer (B)>

The structure of a polymer in the polymer layer (**B**) may be an uncross-linked structure or a semi-interpenetrating polymer network structure. When the structure of the polymer in the polymer layer (**B**) is an uncross-linked structure or a semi-interpenetrating polymer network structure, the highly flame-retardantpolymermember of the present invention can express excellent curl resistance. The polymer layer (**B**) contains various polymers at preferably 40 wt% or more, more preferably 45 wt% or more, still more preferably 50 wt% or more.

Examples of the polymer in the polymer layer (**B**) include: an acrylic resin; an urethane-based resin; an olefin-based resin containing α-olefin as a monomer component such as a polyethylene (PE), a polypropylene (PP), an ethylene-propylene copolymer, or an ethylene-vinyl acetate copolymer (EVA); a polyester-based resin such as a polyethylene terephthalate (PET), a polyethylene naphthalate (PEN), or a polybutylene terephthalate (PBT); a vinyl acetate-based resin, a polyphenylene sulfide (PPS); a polyamide (nylon); an amide-based resin such as an all-aromatic polyamide (aramid) ; a polyimide-based resin; a polyether ether ketone (PEEK) ; an epoxy resin; an oxetane-based resin; a vinyl ether-based resin; a natural rubber; and a synthetic rubber. The polymer in the polymer layer (**B**) is preferably an acrylic resin and a urethane-based resin.

The number of kinds of polymers in the polymer layer (**B**) may be only one, or may be two or more.

The number of kinds of polymerizable monomers that can be used for obtaining the polymer in the polymer layer (**B**) may be only one, or may be two or more.

Any appropriate polymerizable monomer can be adopted as a polymerizable monomer that can be used for obtaining the polymer in the polymer layer (**B**).

Examples of the polymerizable monomer that can be used for obtaining the polymer in the polymer layer (**B**) include a monofunctional monomer, a polyfunctional monomer, a polar group-containing monomer, and any other copolymerizable monomer. Any appropriate content can be adopted as the content of each monomer component such as the monofunctional monomer, the polyfunctional monomer, the polar group-containing monomer, or the other copolymerizable monomer in the polymerizable monomer that can be used for obtaining the polymer in the polymer layer (**B**) depending on target physical properties of the polymer to be obtained.

Any appropriate monofunctional monomer can be adopted as the monofunctional monomer as long as the monomer is a polymerizable monomer having only one polymerizable group. The number of kinds of the monofunctional monomers may be only one, or may be two or more.

The monofunctional monomer is preferably an acrylic monomer. The acrylic monomer is preferably an alkyl (meth)acrylate having an alkyl group. The number of kinds of the alkyl (meth) acrylates each having an alkyl group may be only one, or may be two or more. It should be noted that the term " (meth) acryl" refers to "acryl" and/or "methacryl."

Examples of the alkyl (meth)acrylate having an alkyl group include an alkyl (meth)acrylate having a linear or branched alkyl group, and an alkyl (meth) acrylate having a cyclic alkyl group. It should be noted that the alkyl (meth)acrylate as used herein means a monofunctional alkyl (meth)acrylate.

Examples of the alkyl (meth)acrylate having a linear or branched alkyl group include an alkyl (meth) acrylate having an alkyl group having 1 to 20 carbon atoms such as methyl (meth) acrylate, ethyl meth(acrylate), propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth) acrylate, isooctyl (meth) acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, or eicosyl (meth)acrylate. Of those, an alkyl (meth)acrylate having an alkyl group having 2 to 14 carbon atoms is preferred, and an alkyl (meth)acrylate having an alkyl group having 2 to 10 carbon atoms is more preferred.

Examples of the alkyl (meth)acrylate having a cyclic alkyl group include cyclopentyl (meth)acrylate, cyclohexyl (meth)acrylate, and isobornyl (meth)acrylate.

Any appropriate polyfunctional monomer can be adopted as the polyfunctional monomer. By adopting the polyfunctional monomer, a cross-linked structure may be given to the polymer in the polymer layer (**B**). The number of kinds of the polyfunctional monomers may be only one, or may be two or more.

Examples of the polyfunctional monomer include 1,9-nonanedioldi(meth)acrylate, 1,6-hexanedioldi(meth)acrylate, 1,4-butanediol di(meth)acrylate, (poly)ethylene glycol di(meth)acrylate, (poly)propylene glycol di(meth)acrylate, neopentylglycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, and urethane acrylate. Of those, an acrylate-based polyfunctional monomer is preferred, and 1,9-nonanediol di(meth)acrylate and 1,6-hexanediol di(meth)acrylate are more preferred in terms of having high reactivity and possibly expressing excellent cigarette resistance.

Any appropriate polar group-containing monomer can be adopted as the polar group-containing monomer. The adoption of the polar group-containing monomer can improve the cohesive strength of the polymer in the polymer layer (**B**)**,** or can increase the adhesive strength of the polymer layer (**B**)**.** The number of kinds of the polar group-containing monomers may be only one, or may be two or more.

Examples of the polar group-containing monomer include: carboxyl group-containing monomers such as (meth)acrylic acid, itaconic acid, maleic acid, fumalic acid, crotonic acid, and isocrotonic acid, or anhydride thereof (for example, maleic anhydride) ; hydroxy group-containing monomers such as hydroxyalkyl (meth) acrylate such as hydroxyethyl (meth)acrylate, hydroxypropyl (meth) acrylate, or hydroxybutyl (meth) acrylate, vinyl alcohol, and allyl alcohol; amide group-containing monomers such as (meth)acrylamide, N,N-dimethyl (meth)acrylamide, N-methylol (meth)acrylamide, N-methoxymethyl (meth)acrylamide, and N-butoxymethyl (meth)acrylamide; amino group-containing monomers such as aminoethyl (meth)acrylate, dimethylaminoethyl (meth)acrylate, and t-butylaminoethyl (meth)acrylate; glycidyl group-containing monomers such as glycidyl (meth)acrylate and methylglycidyl (meth) acrylate; cyano group-containing monomers such as acrylonitrile and methacrylonitrile; heterocycle-containing vinyl-based monomers such as N-vinyl-2-pyrrolidone and (meth)acryloyl morpholine, as well as N-vinylpyridine, N-vinylpiperidone, N-vinylpyrimidine, N-vinylpiperazine, N-vinylpyrrole, N-vinylimidazole, and N-vinyloxazole; alcoxyalkyl (meth) acrylate-based monomers such as methoxyethyl (meth)acrylate and ethoxyethyl (meth)acrylate; sulfonate group-containing monomers such as sodium vinylsulfonate; phosphate group-containing monomers such as 2-hydroxyethyl acryloyl phosphate; imide group-containing monomers such as cyclohexyl maleimide and isopropyl maleimide; and isocyanate group-containing monomers such as 2-methacryloyloxyethyl isocyanate. The polar group-containing monomer is preferably a carboxyl group-containing monomer or an anhydride thereof, more preferably acrylic acid.

Any appropriate other copolymerizable monomer can be adopted as the other copolymerizable monomer. The adoption of the other copolymerizable monomer can improve the cohesive strength of the polymer in the polymer layer (**B**)**,** or can increase the adhesive strength of the polymer layer (**B**)**.** The number of kinds of the other copolymerizable monomers may be only one, or may be two or more.

Examples of the other copolymerizable monomer include: an alkyl (meth) acrylate such as a (meth) acrylate having an aromatic hydrocarbon group such as phenyl (meth) acrylate; vinyl esters such as vinyl acetate and vinyl propionate; aromatic vinyl compounds such as styrene and vinyl toluene; olefins and dienes such as ethylene, butadiene, isoprene, and isobutylene; vinyl ethers such as a vinyl alkyl ether; vinyl chloride; alcoxyalkyl (meth)acrylate-based monomers such as methoxyethyl (meth)acrylate and ethoxyethyl (meth) acrylate; sulfonate group-containing monomers such as sodium vinyl sulfonate; phosphate group-containing monomers such as 2-hydroxyethyl acryloyl phosphate; imide group-containing monomers such as cyclohexylmaleimide and isopropylmaleimide; isocyanate group-containing monomers such as 2-methacryloyloxyethyl isocyanate; fluorine atom-containing (meth)acrylates; and silicone atom-containing (meth)acrylates.

Any additive may be incorporated into the polymer layer (**B**). Examples of such additive include a flame retardant (such as organic flame retardants such as a phosphorus-based flame retardant or inorganic flame retardants such as magnesium hydroxide, aluminum hydroxide, and a layered silicate), a plasticizer, a filler, an age resister, an antioxidant, a colorant (such as a pigment or a dye), and a solvent (such as an organic solvent).

The polymer layer (**B**) may contain the layered inorganic compound (**f**) as a flame retardant as in the flame-retardant layer (**A**)**.** In this case, the ratio at which the layered inorganic compound (**f**) is filled into the polymer layer (**B**) is preferably set so as to be lower than the ratio at which the layered inorganic compound (**f**) is filled into the flame-retardant layer (**A**). Thus, the flame-retardant layer (**A**) and the polymer layer (**B**) are differentiated fromeach other in terms of degree of flame retardancy.

Any appropriate thickness can be adopted as the thickness of the polymer layer (**B**)**.** The thickness of the polymer layer (**B**) is, for example, preferably 1 to 3,000 µm, more preferably 2 to 2,000 µm, still more preferably 5 to 1,000 µm. In addition, the polymer layer (**B**) may be a single layer, or may be a laminate formed of a plurality of layers.

Pressure-sensitive adhesive property can be imparted to the polymer layer (**B**) through the selection of a polymer that is a material for forming the layer. For example, an acrylic resin, an epoxy resin, an oxetane-based resin, a vinyl ether-based resin, an urethane-based resin, and a polyester-based resin function as a base polymer for an acrylic pressure-sensitive adhesive, a base polymer for an epoxy-based pressure-sensitive adhesive, a base polymer for an oxetane-based pressure-sensitive adhesive, a base polymer for a vinyl ether-based pressure-sensitive adhesive, a base polymer for a urethane-based pressure-sensitive adhesive, and a base polymer for a polyester-based pressure-sensitive adhesive, respectively.

### <1-2. Flame-retardant layer (A)>

The same examples as those of the polymer that can be incorporated into the polymer layer (**B**) can be given as examples of the polymer (**X**) in the flame-retardant layer (**A**). The polymer (**X**) in the flame-retardant layer (**A**) may contain a cross-linked polymer. The highly flame-retardant polymer member of the present invention can express excellent cigarette resistance when the polymer (**X**) in the flame-retardant layer (**A**) contains the cross-linked polymer. When the polymer (**X**) contains the cross-linked polymer, the content of the cross-linked polymer in the polymer (**X**) is preferably 50 to 100 wt%, more preferably 70 to 100 wt%, still more preferably 90 to 100 wt%, particularly preferably 95 to 100 wt%, most preferably substantially 100 wt%. The highly flame-retardant polymer member of the present invention can express excellent cigarette resistance as long as the content of the cross-linked polymer in the polymer (**X**) falls within the range. The cross-linked polymer in the polymer (**X**) is preferably obtained by polymerizing a polymerizable monomer containing a polyfunctional monomer. The content of the polyfunctional monomer in the polymerizable monomer that can be used for obtaining the cross-linked polymer is preferably 10 to 100 wt%, more preferably 30 to 100 wt%, still more preferably 50 to 100 wt%, particularly preferably 70 to 100 wt%, most preferably 90 to 100 wt%. The highly flame-retardant polymer member of the present invention can express additionally excellent cigarette resistance as long as the content of the polyfunctional monomer in the polymerizable monomer that can be used for obtaining the cross-linked polymer falls within the range. It should be noted that the number of kinds of the polyfunctional monomers may be only one, or may be two or more. The same examples as those of the polymerizable monomer that can be used for forming the polymer that can be incorporated into the polymer layer (**B**) can be given as examples of the polymerizable monomer that can be used for obtaining the cross-linked polymer. The use of the polyfunctional monomer enables the highly flame-retardant polymer member of the present invention to express excellent cigarette resistance. Further, the use can improve its heat resistance and can improve the flaw-preventing property of its surface. The polymer (**X**) in the flame-retardant layer (**A**) can be formed from a polymerizable monomer. The polymerizable monomer is a compound that can be polymerized by utilizing light energy or thermal energy irrespective of its reaction mechanism such as radical polymerization or cationic polymerization. Examples of such polymerizable monomer include: radically polymerizable monomers such as an acrylic monomer that forms an acrylic polymer; cationically polymerizable monomers such as an epoxy-based monomer that forms an epoxy-based resin, an oxetane-based monomer that forms an oxetane-based resin, and a vinyl ether-based monomer that forms a vinyl ether-based resin; a combination of a polyisocyanate that forms a urethane-based resin and a polyol; and a combination of a polycarboxylic acid that forms a polyester-based resin and a polyol. It should be noted that one kind of the polymerizable monomers may be used alone, or two or more kinds thereof may be used in combination. Pressure-sensitive adhesive property can be imparted to the flame-retardant layer (**A**) through the selection of a polymer material that forms the layer. For example, an acrylic resin, an epoxy resin, an oxetane-based resin, a vinyl ether-based resin, a urethane-based resin, and a polyester-based resin function as, for example, a base polymer for an acrylic pressure-sensitive adhesive, a base polymer for an epoxy-based pressure-sensitive adhesive, a base polymer for an oxetane-based pressure-sensitive adhesive, a base polymer for a vinyl ether-based pressure-sensitive adhesive, a base polymer for a urethane-based pressure-sensitive adhesive, and a base polymer for a polyester-based pressure-sensitive adhesive, respectively.

### <1-3. Layered inorganic compound (f)>

Examples of the layered inorganic compound (**f**) to be incorporated into the flame-retardant layer (**A**) include a layered inorganic substance and an organically treated product thereof. The layered inorganic compound (**f**) may be a solid, or may have flowability. The number of kinds of the layered inorganic compounds may be only one, or may be two or more.

Examples of inorganics which can form a layered inorganic substance include a silicate and a clay mineral. Of those, a layered clay mineral is preferred as the layered inorganic substance.

Examples of the layered clay mineral include: a smectite such as montmorillonite, beidellite, hectorite, saponite, nontronite, or stevensite; vermiculite; bentonite; and a layered sodium silicate such as kanemite, kenyaite, or makatite. Such layered clay mineral may be yielded as a natural mineral, or may be produced by a chemical synthesis method.

The organically treated product of the layered inorganic substance is a product obtained by treating the layered inorganic substance with an organic compound. An example of the organic compound is an organic cationic compound. Examples of the organic cationic compound include a cationic surfactant having a cation group such as a quarternary ammonium salt and a quarternary phosphonium salt. The cationic surfactant has a cationic group such as a quarternary ammonium salt or a quarternary phosphonium salt on a propylene oxide skeleton, an ethylene oxide skeleton, an alkyl skeleton, or the like. Such cationic group forms a quarternary salt with a halide ion (such as a chloride ion).

Examples of the cationic surfactant which has a quarternary ammonium salt include lauryltrimethylammonium salt, stearyltrimethylammonium salt, trioctylammonium salt, distearyldimethylammonium salt, distearyldibenzylammonium salt, and an ammonium salt having a methyldiethylpropylene oxide skeleton.

Examples of the cationic surfactant which has a quarternary phosphonium salt include dodecyltriphenyl phosphonium salt, methyltriphenylphosphonium salt, lauryltrimethyl phosphonium salt, stearyltrimethyl phosphonium salt, distearyldimethyl phosphonium salt, and distearylbenzyl phosphonium salt.

The layered inorganic substance such as the layered clay mineral is treated with the organic cationic compound. As a result, a cation between layers can undergo ion exchange with a cationic group of a quaternary salt or the like. Examples of the cation of the clay mineral include metal cations such as a sodium ion and a calcium ion. The layered clay mineral treated with the organic cationic compound is easily swollen and dispersed in the polymer or the polymerizable monomer. An example of the layered clay mineral treated with the organic cationic compound is LUCENTITE series (Co-op Chemical Co., Ltd.). As LUCENTITE series (Co-op Chemical Co., Ltd.), more specifically, LUCENTITE SPN, LUCENTITE SAN, LUCENTITE SEN, and LUCENTITE STN are given.

Examples of the organically treated product of the layered inorganic substance include products obtained by subjecting the surface of the layered inorganic substance to surface treatments with various organic compounds (such as a surface tension-lowering treatment with a silicone-based compound or a fluorine-based compound).

The ratio of the organic compound to the layered inorganic substance in the organically treated product of the layered inorganic substance varies depending on the cation-exchange capacity ("CEC") of the layered inorganic substance. The CEC relates to the ion-exchange capacity of the layered inorganic compound (**f**) or the total quantity of positive charge that can be caused to adsorb on the surface of the layered inorganic substance, and is represented by positive charge per unit mass of colloid particles, that is, "coulomb (s) per unit mass" in an SI unit. The CEC may be represented by milliequivalent(s) per gram (meq/g) or milliequivalent(s) per 100 grams (meq/100 g). A CEC of 1 meq/g corresponds to 96.5 C/g in the SI unit. Several CEC values concerning representative clay minerals are as described below. The CEC of montmorillonite falls within the range of 70 to 150 meq/100 g, the CEC of halloysite falls within the range of 40 to 50 meq/100 g, and the CEC of kaolin falls within the range of 1 to 10 meq/100 g.

The ratio of the organic compound to the layered inorganic substance in the organically treated product of the layered inorganic substance is such that the amount of the organic compound is preferably 1,000 parts by weight or less, more preferably 3 to 700 parts by weight, more preferably 5 to 500 parts by weight with respect to 100 parts by weight of the layered inorganic substance.

With regard to the particle diameter (average particle diameter) of the layered inorganic compound (**f**), its particles are preferably packed as densely as possible in a portion in the flame-retardant layer (**A**) where the layered inorganic compound (**f**) is distributed from such a viewpoint that good flame retardancy is obtained. For example, the average of primary particle diameters when the layered inorganic compound (**f**) is dispersed in a dilute solution is preferably 5 nm to 10 µm, more preferably 6 nm to 5 µm, still more preferably 7 nm to 1 µm in terms of a median diameter in a laser scattering method or a dynamic light scattering method. It should be noted that a combination of two or more kinds of particles having different particle diameters may be used as the particles.

The shape of each of the particles may be any shape, e.g., a spherical shape such as a true spherical shape or an ellipsoidal shape, an amorphous shape, a needle-like shape, a rod-like shape, a flat plate-like shape, a flaky shape, or a hollow tubular shape. The shape of each of the particles is preferably a flat plate-like shape or a flaky shape. In addition, the surface of each of the particles may have a pore, a protrusion, or the like.

The average of maximum primary particle diameters is preferably 5 µm or less, more preferably 5 nm to 5 µm because the transparency of the highly flame-retardant polymer member may be problematic as the particle diameter of the layered clay mineral increases.

It should be noted that the Lucentite SPN (manufactured by Co-op Chemical Co., Ltd.) is obtained by subjecting the layered clay mineral to an organizing treatment with an organic compound having a quaternary ammonium salt, and the ratio of the organic compound is 62 wt%. With regard to its particle diameter, the Lucentite SPN has a 25% average primary particle diameter of 19 nm, a 50% average primary particle diameter of 30 nm, and a 99% average primary particle diameter of 100 nm. The Lucentite SPN has a thickness of 1 nm and an aspect ratio of about 30.

When particles are used as the layered inorganic compound (**f**), the layered inorganic compound (**f**) can contribute to, for example, the formation of surface unevenness by the particles in the surface of the flame-retardant layer (**A**) in some cases.

In addition, when the product obtained by treating the layered clay mineral with the organic cationic compound is used as the layered inorganic compound (**f**), the surface resistance value of the flame-retardant layer (**A**) can be preferably set to 1×10¹⁴ (Ω/□) or less, and hence antistatic property can be imparted to the flame-retardant layer (**A**). The antistatic property can be controlled to desired antistatic property by controlling, for example, the kind, shape, size, and content of the layered inorganic compound (**f**), and the composition of the polymer component of the flame-retardant layer (**A**).

As the layered inorganic compound (**f**) and the polymer are mixed in the flame-retardant layer (**A**), the layer can exert a characteristic based on the polymer, and at the same time, can exert a characteristic of the layered inorganic compound (**f**).

The content of ash in the flame-retardant layer (**A**) (the content of the layered inorganic compound (**f**) with respect to the total amount of the formation materials for the flame-retardant layer (**A**), provided that when the layered inorganic compound (**f**) is an organically treated product of a layered inorganic substance, the content of the layered inorganic substance that has not been subjected to any organic treatment) can be appropriately set depending on the kind of the layered inorganic compound (**f**)**.** The content is preferably 3 wt% or more and less than 70 wt%. When the content is 70 wt% or more, the layered inorganic compound (**f**) may not be favorably dispersed. As a result, a lump is apt to be produced and hence it becomes difficult to produce the flame-retardant layer (**A**) in which the layered inorganic compound (**f**) has been uniformly dispersed in some cases. When the content is 70 wt% or more, the transparency and flexibility of the flame-retardant polymer member may reduce. On the other hand, when the content is less than 3 wt%, the flame-retardant layer (**A**) does not have flame retardancy in some cases. The content of the layered inorganic compound (**f**) in the flame-retardant layer (**A**) is preferably 3 to 60 wt%, more preferably 5 to 50 wt%.

### <1-4. Additive>

Any appropriate additive may be incorporated into the flame-retardant layer (**A**). Examples of such additive include a surfactant (such as an ionic surfactant, a silicone-based surfactant, or a fluorine-based surfactant), a cross-linking agent (such as a polyisocyanate-based cross-linking agent, a silicone-based cross-linking agent, an epoxy-based cross-linking agent, or an alkyl-etherified melamine-based cross-linking agent), a plasticizer, a filler, an age resister, an antioxidant, a colorant (such as a pigment or a dye), and a solvent (such as an organic solvent).

Any appropriate pigment (coloring pigment) may be incorporated into the flame-retardant layer (**A**) from the viewpoints of, for example, design and optical characteristics. When a black color is desired, carbon black is preferably used as the coloring pigment. The usage of the pigment (coloring pigment) is, for example, preferably 0.15 part by weight or less, more preferably 0.001 to 0. 15 part by weight, still more preferably 0.02 to 0. 1 part by weight with respect to 100 parts by weight of the polymer in the flame-retardant layer (**A**) from such a viewpoint that the degree of coloring and the like are not inhibited.

The flame-retardant layer (**A**) has a thickness of preferably 3 to 1,000 µm, more preferably 4 to 500 µm, still more preferably 5 to 200 µm. When the thickness of the flame-retardant layer (**A**) deviates from the range, its flame retardancy may be problematic.

### <1-5. Inorganic base material (L)>

Any appropriate inorganic base material can be adopted as the inorganic base material (**L**) as long as a liquid product such as a monomer or a syrupy polymer can permeate the inorganic base material. Examples of the inorganic base material (**L**) include inorganic base materials having voids such as a fibrous inorganic base material and a network inorganic base material.

The form of the fibrous inorganic base material is, for example, a woven fabric or a non-woven fabric.

Specific examples of the fibrous inorganic base material include a glass cloth, asbestos, a carbon fiber, and a fibrous metal oxide.

The network inorganic base material is specifically, for example, a metal mesh.

Any appropriate thickness can be adopted as the thickness of the inorganic base material (**L**) depending on its kind. The thickness is preferably, for example, 1 to 500 µm.

Any appropriate component such as a constituent for the flame-retardant layer (**A**) or the polymer layer (**B**), or a formation material component for the flame-retardant layer (**A**) or the polymer layer (**B**) may be incorporated into a void portion of the inorganic base material (**L**).

### <1-6. Highly flame-retardant polymer member>

The thickness of the entirety of the highly flame-retardant polymer member is preferably 10 to 5,000 µm, more preferably 20 to 4,000 µm, still more preferably 30 to 3,000 µm because of the following reasons. When the thickness is excessively small, the member may not show sufficient flame retardancy. When the thickness is excessively large, the member is hard to wind in a sheet shape and is hence poor in handleability in some cases. It should be noted that the thickness of the entirety of the highly flame-retardant polymer member means the total of the thickness of the flame-retardant layer (**A**), the thickness of the inorganic base material (**L**), and the thickness of the polymer layer (**B**).

In addition, the ratio of the thickness of the flame-retardant layer (**A**) to the thickness of the entirety of the highly flame-retardant polymer member (the total of the thickness of the flame-retardant layer (**A**), the thickness of the inorganic base material (**L**), and the thickness of the polymer layer (**B**)) is preferably 50% or less, more preferably 50 to 0.1%, still more preferably 40 to 1%. When the ratio of the thickness of the flame-retardant layer (**A**) deviates from the range, its flame retardancy may be problematic or the strength of the flame-retardant layer (**A**) may be problematic.

### <1-7. Flame retardancy>

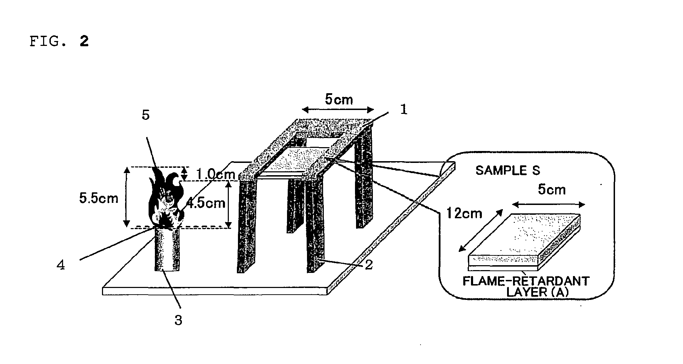

The highly flame-retardant polymer member of the present invention preferably satisfies the following flame retardancy. That is, in a horizontal firing test involving horizontally placing the highly flame-retardant polymer member of the present invention with its side of the flame-retardant layer (**A**) as a lower surface so that the lower surface is in contact with air, placing a Bunsen burner so that the flame port of the Bunsen burner is positioned at a lower portion distant from the lower surface on the side of the flame-retardant layer (**A**) by 45 mm, and bringing the flame of the Bunsen burner having a height of 55 mm from the flame port into contact with the lower surface of the flame-retardant layer (**A**) for 30 seconds, the member has flame retardancy capable of blocking the flame. The horizontal firing test is a test for blocking property against a flame from the side of the flame-retardant layer (**A**) of the highly flame-retardant polymer member. Therefore, in the horizontal firing test, the flame of the Bunsen burner is brought into contact from the side of the flame-retardant layer (**A**) while being prevented from being in contact with the end portion of the highly flame-retardant polymer member. In ordinary cases, the test is performed by placing the Bunsen burner so that the flame of the Bunsen burner is in contact with a site distant from each of all end portions of the highly flame-retardant polymer member by at least 50 mm or more. Any appropriate size can be adopted as the size of the highly flame-retardant polymer member to be subjected to the horizontal firing test. For example, a rectangle measuring 5 to 20 cm wide by 10 to 20 cm long can be used as the size of the highly flame-retardant polymer member. In FIG. **2** and Examples, a member of a rectangular shape measuring 5 cm by 12 cm is used.

The horizontal firing test is specifically performed as described below. As illustrated in FIG. **2****,** both sides of a rectangular, highly flame-retardant polymer member **S** are each horizontally fixed by two upper and lower supporting plates **1** with the side of the flame-retardant layer (**A**) of the rectangle as a lower surface. With regard to the supporting plates **1,** both sides in the lengthwise direction of the lower supporting plate **1** are provided with columns **2** so that the lower surface of the highly flame-retardant polymer member **S** is contact with air and a Bunsen burner **3** can be placed. In FIG. **2****,** the rectangular, highly flame-retardant polymer member **S** measuring 5 cm by 12 cm is used, and each side of the member having a length of 12 cm is fixed by the supporting plates **1** (each having a width of 10 cm). The Bunsen burner **3** is placed so that a distance between its flame port **4** and the lower surface of the highly flame-retardant polymer member **S** is 45 mm. In addition, the flame port **4** of the Bunsen burner **3** is positioned below the center of the highly flame-retardant polymer member **S.** The height of the flame of the Bunsen burner **3** from the flame port is adjusted to 55 mm. Although the Bunsen burner **3** is positioned below the highly flame-retardant polymer member **S,** the Bunsen burner **3** is illustrated outside the supporting plates **1** in FIG. **2** for convenience.

The test for flame retardancy can evaluate the flame-blocking property of the highlyflame-retardant polymer member and the shape-maintaining property of the highly flame-retardant polymer member when the flame of the Bunsen burner having a size of 1 cm (a difference between the height of the flame from the flame port **4** of the Bunsen burner **3,** i.e., 55 mm, and a distance between the lower surface on the side of the flame-retardant layer (**A**) and the flame port **4** of the Bunsen burner **3,** i.e., 45 mm) is brought into contact for 30 seconds. A propane gas is used as the gas of the Bunsen burner and the test is performed in the air.

As described in Examples, the highly flame-retardant polymer member can be evaluated for its flame-blocking property by: placing a White Economy 314-048 (manufactured by Biznet) as copy paper at a position 3 mm above the highly flame-retardant polymer member **S** (above the upper supporting plates **1** on both sides); and observing the presence or absence of the combustion of the copy paper in the horizontal firing test. In addition, with regard to the flame-retardant treatment of paper, the highly flame-retardant polymer member can be evaluated for its shape-maintaining property by: subjecting a sample (article subjected to a flame-retardant treatment) obtained by attaching a White Economy 314-048 (manufactured by Biznet) as copy paper to the side of the polymer layer (**B**) of the highly flame-retardant polymer member to the horizontal firing test; and observing the presence or absence of the combustion of the sample. In addition, with regard to the flame-retardant treatment of a timber, the highly flame-retardant polymer member can be evaluated for its shape-maintaining property by: subjecting a sample (article subjected to a flame-retardant treatment) obtained by attaching a timber (pine plate having a thickness of 6 mm) to the side of the polymer layer (**B**) of the highly flame-retardant polymer member to the horizontal firing test; and observing the presence or absence of the combustion of the sample.

### <1-8. Transparency>

The highly flame-retardant polymer member of the present invention is preferably substantially transparent, and has a total light transmittance of preferably 60% or more, more preferably 70% or more, still more preferably 80% or more, particularly preferably 90% or more.

### <1-9. Flexibility>

The highly flame-retardant polymer member of the present invention has flexibility peculiar to plastic. For example, in the case where no flaw or crack occurs even when both ends of a side having a length of 5 cm of the highly flame-retardant polymer member measuring 5 cm by 10 cm are repeatedly brought into contact with each other 50 times by bending the side in a mountain fold manner and in a valley fold manner, the member can be judged to have good flexibility. In addition, in the case where no flaw or crack occurs in the highly flame-retardant polymer member measuring 5 cm by 10 cm when the highly flame-retardant polymer member measuring 5 cm by 10 cm is wound around a rod having a diameter of 1 cm and then the highly flame-retardant polymer member is peeled, the member can be judged to have good flexibility.

### <1-10. High flame retardancy>

As the highly flame-retardant polymer member of the present invention has the inorganic base material (**L**), the highly flame-retardant polymer member itself can express excellent flame retardancy. Inaddition, an adherend can be subjected to an excellent flame-retardant treatment by attaching the member to the adherend. For example, when the highly flame-retardant polymer member of the present invention is attached to a window glass or the like, the member can express shatterproof property by which the window glass or the like can be effectively prevented from breaking and shattering owing to its combustion. When the member is attached to a timber or the like, the member can express fire spreading-preventing property by which the expansion of the combustion of the timber or the like can be prevented.

The excellent flame retardancy of the highly flame-retardant polymer member itself can be evaluated by a heat-generating property test with a cone calorimeter tester in accordance with the flame-proof and flame-resistant performance test method, and the performance evaluation standard based on Article 2, Item 9 of the Building Standard Law and Article 108-bis of the Building Standard Law Enforcement Order as well.

The shatterproof property can be evaluated, for example, by: attaching the highly flame-retardant polymer member of the present invention to a glass; bringing the flame of a Bunsen burner into contact with the central portion of the highly flame-retardant polymer member until the glass breaks; measuring the weight of shattered glass shards after the break; and calculating the extent to which the original glass can be maintained. Details about a method of evaluating the shatterproof property are described later.

The fire spreading-preventing property can be evaluated, for example, by: attaching the highly flame-retardant polymer member of the present invention to a timber or the like; bringing the flame of a Bunsen burner into contact with the central portion of the highly flame-retardant polymer member; and measuring the ignition of the timber or the like and the deterioration of the timber or the like. Details about a method of evaluating the fire spreading-preventing property are described later.

### <<2. Production of highly flame-retardant polymer member>>

Any appropriate production method can be adopted as a method of producing the highly flame-retardant polymer member of the present invention as long as, for example, a construction including the polymer layer (**B**), the inorganic base material (**L**), and the flame-retardant layer (**A**), which is a layer containing the layered inorganic compound (**f**) in the polymer (**X**), in the stated order is obtained.

### <2-1. Highly flame-retardant polymer member production method (1)>

The production method (1) is preferably adopted for the highly flame-retardant polymer member of the present invention because good flame retardancy is obtained. In the production method (1), the highly flame-retardant polymer member of the present invention is produced by: laminating a syrupy polymerizable composition layer **(a)** formed of a polymerizable composition (**α**) containing a polymerizable monomer (**m**) and the layered inorganic compound (**f**), the inorganic base material (**L**), and a solid monomer-absorbing layer (**b**) containing a polymer (**p**) and capable of absorbing the polymerizable monomer (**m**); and performing polymerization. At this time, a flavoring agent may be incorporated into at least one of the polymerizable composition layer **(a)** and the monomer-absorbing layer (**b**). When the flavoring agent is incorporated into at least one of the polymerizable composition layer **(a)** and the monomer-absorbing layer (**b**), the flavoring agent is finally incorporated into at least one of the flame-retardant layer (**A**) and the polymer layer (**B**)**.** In addition, a weathering agent may be incorporated into at least one of the polymerizable composition layer (**a**) and the monomer-absorbing layer (**b**). When the weathering agent is incorporated into at least one of the polymerizable composition layer **(a)** and the monomer-absorbing layer (**b**), the weathering agent is finally incorporated into at least one of the flame-retardant layer (**A**) and the polymer layer (**B**). In addition, a heat-resistant resin may be incorporated into at least one of the polymerizable composition layer **(a)** and the monomer-absorbing layer (**b**). When the heat-resistant resin is incorporated into at least one of the polymerizable composition layer **(a)** and the monomer-absorbing layer (**b**), the heat-resistant resin is finally incorporated into at least one of the flame-retardant layer (**A**) and the polymer layer (**B**). In addition, inorganic particles may be incorporated into the monomer-absorbing layer (**b**). When the inorganic particles are incorporated into the monomer-absorbing layer (**b**), the inorganic particles are finally incorporated into the polymer layer (**B**).

According to the production method (1), the flame-retardant layer (**A**) and the polymer layer (**B**) can be obtained by: laminating the polymerizable composition layer **(a)** formed of the polymerizable composition (**α**) containing the polymerizable monomer (**m**) and the layered inorganic compound (**f**) incompatible with a polymer obtained by polymerizing the polymerizable monomer on at least one surface of the solid monomer-absorbing layer (**b**) containing the polymer (**p**) and capable of absorbing the polymerizable monomer (**m**) through the inorganic base material (**L**); and then polymerizing the polymerizable monomer.

In the production method (1), as a result of the lamination, part of the polymerizable monomer (**m**) in the polymerizable composition layer **(a)** permeates the inorganic base material (**L**) to be absorbed by the monomer-absorbing layer (**b**). On the other hand, the layered inorganic compound (**f**) in the polymerizable composition layer (**a**) is substantially free of being absorbed by the monomer-absorbing layer (**b**). Accordingly, an unevenly distributed polymerizable composition layer (**a1**) is obtained, in which the layered inorganic compound (**f**) is unevenly distributed toward the side opposite to the monomer-absorbing layer (**b**) and is distributed toward a void portion of the inorganic base material (**L**) as well under certain circumstances. At this time, the inorganic base material (**L**) is present between an unevenly distributed portion (**a11**) and non-unevenly distributed portion (**a12**) of the layered inorganic compound (**f**). The void portions of the inorganic base material (**L**) may contain the polymerizable monomer (**m**) and the layered inorganic compound (**f**). Then, the polymerizable monomer (**m**) in the unevenly distributed polymerizable composition layer (**a1**) and the polymerizable monomer (**m**) in the monomer-absorbing layer (**b**) are polymerized and cured by the polymerizing step (**2**). Thus, the flame-retardant layer (**A**) and the polymer layer (**B**) are obtained. It shouldbe noted that when a void portion of the inorganic base material (**L**) contains the polymerizable monomer (**m**), the polymerizable monomer (**m**) can also be polymerized and cured by the polymerizing step (**2**). An unevenly distributed portion (**a21**) of the layered inorganic compound (**f**) in an unevenly distributed polymer layer (**a2**) obtained by curing the unevenly distributed polymerizable composition layer (**a1**), in which the layered inorganic compound (**f**) is unevenly distributed, corresponds to the flame-retardant layer (**A**). A non-unevenly distributed portion (**a22**) of the layered inorganic compound (**f**) in the unevenly distributed polymer layer (**a2**) and a cured monomer-absorbing layer (**b2**) formed by polymerizing a monomer-absorbing layer (**b1**) obtained by the absorption of the polymerizable monomer (**m**) by the monomer-absorbing layer (**b**) correspond to the polymer layer (**B**). In other words, a portion obtained by combining the non-unevenly distributed portion (**a22**) and the cured monomer-absorbing layer (**b2**) corresponds to the polymer layer (**B**). The inorganic base material (**L**) is present between the flame-retardant layer (**A**) and the polymer layer (**B**).

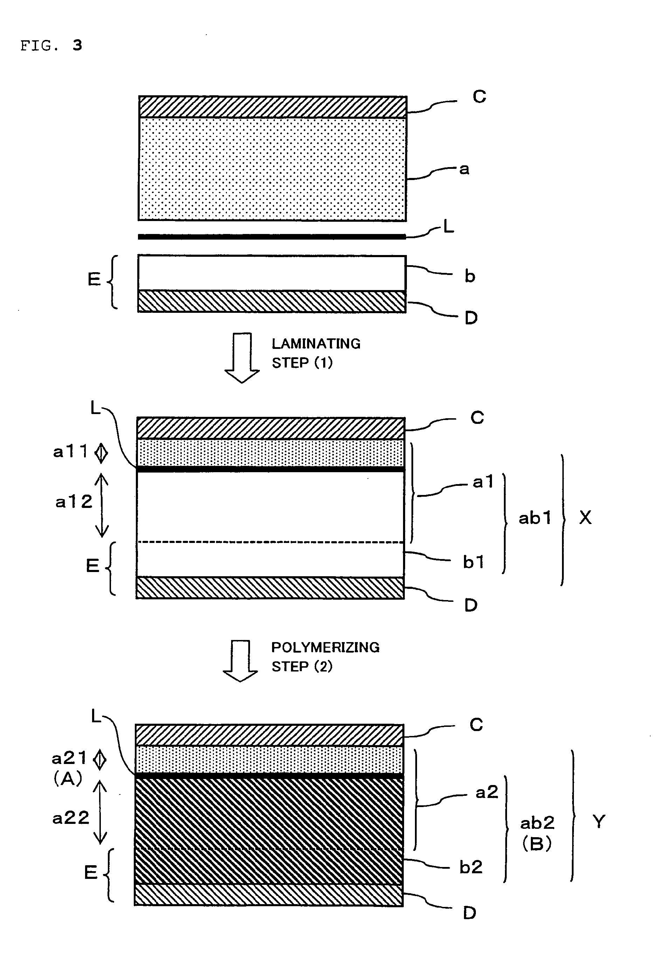

Hereinafter, the highly flame-retardant polymer member production method (1) is described with reference to FIG. **3****.**

First, in a laminating step (**1**), a laminate (**X**) is obtained by laminating the polymerizable composition layer (**a**), the inorganic base material (**L**), and the monomer-absorbing layer (**b**). The polymerizable composition layer (**a**) contains the layered inorganic compound (**f**) and the polymerizable monomer (**m**) (not shown) . Although the polymerizable composition layer (**a**) can be laminated on at least one side of the monomer-absorbing layer (**b**), FIG. **3** illustrates the case where the layer is laminated only on one side of the monomer-absorbing layer (**b**). In FIG. **3****,** a cover film (**C**) is provided on the side of the polymerizable composition layer (**a**) not laminated on the monomer-absorbing layer (**b**). In addition, in FIG. **3****,** the monomer-absorbing layer (**b**) is provided on a base material film (**D**) and then the entirety is used as a monomer-absorbable sheet (**E**) with a base material.

In the laminate (**X**) obtained by the laminating step (**1**), part of the polymerizable monomer (**m**) in the polymerizable composition layer (**a**) permeates the inorganic base material (**L**) to be absorbed by the monomer-absorbing layer (**b**) (not shown). Meanwhile, the layered inorganic compound (**f**) in the polymerizable composition layer (**a**) is substantially free of being absorbed by the monomer-absorbing layer (**b**). Accordingly, the layered inorganic compound (**f**) is unevenly distributed toward the side opposite to the monomer-absorbing layer (**b**) and is distributed toward a void portion of the inorganic base material (**L**) as well under certain circumstances. Thus, the unevenly distributed polymerizable composition layer (**a1**) having an unevenly distributed portion (**a11**) and non-unevenly distributed portion (**a12**) of the layered inorganic compound (**f**) is obtained. At this time, the inorganic base material (**L**) is present between an unevenly distributed portion (**a11**) and non-unevenly distributed portion (**a12**) of the layered inorganic compound (**f**). The void portions of the inorganic base material (**L**) may contain the polymerizable monomer (**m**) and the layered inorganic compound (**f**). That is, part of the polymerizable monomer (**m**) in the polymerizable composition layer (**a**) permeates the inorganic base material (**L**) to be absorbed by the monomer-absorbing layer (**b**) as a result of the lamination of the polymerizable composition layer (**a**) and the monomer-absorbing layer (**b**) through the inorganic base material (**L**). Thus, the unevenly distributed polymerizable composition layer (**a1**) is obtained.

The phenomenon of the uneven distribution of the layered inorganic compound (**f**) in the unevenly distributed polymerizable composition layer (**a1**) is assumed to be caused by the swelling of the monomer-absorbing layer (**b**) due to the permeation of part of the polymerizable monomer (**m**) through the inorganic base material (**L**). That is, the monomer-absorbing layer (**b**) absorbs part of the polymerizable monomer (**m**) that permeates the inorganic base material (**L**) to swell. Meanwhile, the layered inorganic compound (**f**) is substantially free of being absorbed by the monomer-absorbing layer (**b**). Accordingly, the layered inorganic compound (**f**) maybe unevenly distributed in such a manner as to remain in the polymerizable composition layer (**a**). Therefore, when a base material that does not absorb the polymerizable monomer (**m**) is used, the base material does not swell with respect to the polymerizable monomer (**m**). Accordingly, even when the polymerizable composition layer (**a**) is laminated on the base material, the layered inorganic compound (**f**) is not unevenly distributed and hence the unevenly distributed polymerizable composition layer (**a1**) is not obtained.

In the highly flame-retardant polymer member production method (1), the laminate (**X**) can be subjected to a heating step. The unevenly distributed polymerizable composition layer (**a1**) including the unevenly distributed portion (**a11**) in which the layered inorganic compound (**f**) is unevenly distributed at a high density is obtained by the heating step. A heating temperature and a heating time for the laminate (**X**) are controlled by the heating step. When such heating step is performed, the monomer-absorbing layer (**b**) of the laminate (**X**) absorbs a larger amount of the polymerizable monomer (**m**) in the polymerizable composition layer (**a**) than that in the case where the laminating step (**1**) is merely performed, and hence high-density unevenly distributed structure of the layered inorganic compound (**f**) becomes significant. As described above, the unevenly distributed portion (**a11**) in which the layered inorganic compound (**f**) is unevenly distributed at a high density is obtained by the heating step. Accordingly, even when the unevenly distributed polymerizable composition layer (**a1**) and the unevenly distributed polymer layer (**a2**) are thin layers, the layered inorganic compound (**f**) can be unevenly distributed with efficiency and hence a laminate (**Y**) having the thin-layered unevenly distributed polymer layer (**a2**) can be obtained.

The polymerizable monomer (**m**) in the polymerizable composition layer **(a)** is subjected to a polymerizing step (**2**) after part thereof has been absorbed by the monomer-absorbing layer (**b**)**.** Accordingly, adhesiveness between the unevenly distributed polymer layer (**a2**) and the cured monomer-absorbing layer (**b2**) is excellent in the laminated structure of the unevenly distributed polymer layer (**a2**) and the cured monomer-absorbing layer (**b2**).

The monomer-absorbing layer (**b1**) in the laminate (**X**) is in a swollen state as a result of the absorption of the polymerizable monomer (**m**) by the monomer-absorbing layer (**b**). Accordingly, an interface between the non-unevenly distributed portion (**a12**) of the layered inorganic compound (**f**) in the unevenly distributed polymerizable composition layer (**a1**) and the monomer-absorbing layer (**b1**) cannot be observed (a composite site of these layers is represented as **ab1** in FIG. **3**). In FIG. **3****,** the interface is indicated by a broken line for convenience.

Next, the polymerizable monomer (**m**) in the unevenly distributed polymerizable composition layer (**a1**) is polymerized by subjecting the laminate (**X**) to the polymerizing step (**2**). Thus, the laminate (**Y**) including the unevenly distributed polymer layer (**a2**) is obtained. The unevenly distributed polymer layer (**a2**) is obtained by curing the unevenly distributed polymerizable composition layer (**a1**) while maintaining the unevenly distributed structure in the layer. The unevenly distributed polymer layer (**a2**) has the unevenly distributed portion (**a21**) of the layered inorganic compound (**f**) and the non-unevenly distributed portion (**a22**) of the layered inorganic compound (**f**). At this time, the inorganic base material (**L**) is present between the unevenly distributed portion (**a21**) and non-unevenly distributed portion (**a22**) of the layered inorganic compound (**f**). As the polymerizable monomer (**m**) is absorbed by the monomer-absorbing layer (**b1**), the monomer-absorbing layer (**b1**) is turned into the cured monomer-absorbing layer (**b2**) by the polymerizing step (**2**). Although an interface between the non-unevenly distributed portion (**a22**) of the layered inorganic compound (**f**) in the unevenly distributed polymer layer (**a2**) and the cured monomer-absorbing layer (**b2**) cannot be observed in the laminate (**Y**) (a composite site of these layers is represented as **ab2** in FIG. **3**), the interface is indicated by a broken line in FIG. **3** for convenience. The production method (1) preferably includes a drying step (**3**). The drying step (**3**) can be performed after the polymerizing step (**2**). An odor component remaining in the laminate (**Y**) can be removed by providing the drying step (**3**) after the polymerizing step (**2**). Accordingly, the amount of the outgas from the highly flame-retardant polymer member can be reduced. A drying temperature in the drying step (**3**) is preferably 50 to 200°C, more preferably 70 to 180°C, still more preferably 80 to 160°C, particularly preferably 90 to 140°C. An outgas-reducing effect can be additionally expressed by setting the drying temperature in the drying step (**3**) in the range. A drying time in the drying step (**3**) is preferably 1 minute to 3 hours, more preferably 1.5 minutes to 2 hours, still more preferably 2 minutes to 1 hour, particularly preferably 3 minutes to 30 minutes. The outgas-reducing effect can be additionally expressed by setting the drying time in the drying step (**3**) in the range.

### (2-1-1. Laminating step (1))

In the laminating step (**1**), a laminate (**X**) having a structure "monomer-absorbing layer (**b**)/inorganic base material (**L**) /polymerizable composition layer (**a**)" is produced by laminating the polymerizable composition layer (**a**) on at least one side of the monomer-absorbing layer (**b**) through the inorganic base material (**L**). The polymerizable composition layer (**a**) is a layer formed of the polymerizable composition (**a**).

### (2-1-1-1. Polymerizable composition (α))

The polymerizable composition (**α**) contains at least the polymerizable monomer (**m**) that can be polymerized and the layered inorganic compound (**f**).

The polymerizable composition (**α**) may be a partially polymerized composition obtained by polymerizing part of the polymerizable monomer (**m**) in terms of, for example, handleability and application property.

The description of the polymerizable monomer in the section <1-1. polymer layer (**B**) > can be cited as specific description of the polymerizable monomer (**m**). The polymerizable monomer (**m**) may contain a polyfunctional monomer. When the polymerizable monomer (**m**) contains the polyfunctional monomer, the highly flame-retardant polymer member of the present invention can express excellent cigarette resistance. When the polymerizable monomer (**m**) contains the polyfunctional monomer, the content of the polyfunctional monomer in the polymerizable monomer (**m**) is preferably 10 to 100 wt%, more preferably 30 to 100 wt%, still more preferably 50 to 100 wt%, particularly preferably 70 to 100 wt%, most preferably 90 to 100 wt%. As long as the content of the polyfunctional monomer in the polymerizable monomer (**m**) falls within the range, the highly flame-retardant polymer member of the present invention can express additionally excellent cigarette resistance.

The physical properties of the unevenly distributed polymer layer (**a2**) can be controlled by adjusting the content of the polyfunctional monomer with respect to the total amount of the polymerizable monomer (**m**) and the content of a polar group-containing monomer with respect thereto, and the glass transition temperature (Tg) of the polymerizable monomer. Thus, the highly flame-retardant polymer member can be used in each of an application where the unevenly distributed polymer layer (**a2**) is required to have hard physical property and an application where the layer is required to have pressure-sensitive adhesiveness.

When the highly flame-retardant polymer member is used in an application where pressure-sensitive adhesive property is demanded of the unevenly distributed polymer layer (**a2**), the content of an alkyl (meth)acrylate is preferably 70 wt% or more, more preferably 80 wt% or more with respect to the total amount of the polymerizable monomer (**m**).

When highly flame-retardant polymer member is used in an application where hard physical property is demanded of the unevenly distributed polymer layer (**a2**) (e.g., a film application), the content of an alkyl (meth) acrylate is preferably 95 wt% or less, more preferably 0.01 to 95 wt%, still more preferably 1 to 70 wt% with respect to the total amount of the polymerizable monomer (m).

The description in the section <1-3. layered inorganic compound (**f**)> can be cited as specific description of the layered inorganic compound (f).

The polymerizable composition (**α**) may contain any appropriate additive. The description in the section <1-4. additive> can be cited as specific description of such additive. A flavoring agent may be incorporated into the polymerizable composition (**α**). A weathering agent may be incorporated into the polymerizable composition (**α**). A heat-resistant resin may be incorporated into the polymerizable composition (**α**).

The polymerizable composition (**α**) can contain any appropriate polymerization initiator. Examples of the polymerization initiator include a photopolymerization initiator and a thermal polymerization initiator.

The number of kinds of the polymerization initiators may be only one, or may be two or more.

As the photopolymerization initiator, any appropriate photopolymerization initiator may be adopted.

Examples of the photopolymerization initiator include a benzoin ether-based photopolymerization initiator, an acetophenone-based photopolymerization initiator, an α-ketol-based photopolymerization initiator, an aromatic sulfonyl chloride-based photopolymerization initiator, a photoactive oxime-based photopolymerization initiator, a benzoin-based photopolymerization initiator, a benzyl-based photopolymerization initiator, a benzophenone-based photopolymerization initiator, a ketal-based photopolymerization initiator, and a thioxanthone-based photopolymerization initiator.

The number of kinds of the photopolymerization initiators may be only one, or may be two or more.

An example of the ketal-based photopolymerization initiator is 2,2-dimethoxy-1,2-diphenylethan-1-one (such as "Irgacure 651" (trade name; manufactured by Ciba Speciality Chemicals Inc.)). Examples of the acetophenone-based photopolymerization initiator include 1-hydroxycyclohexyl phenyl ketone (such as "Irgacure 184" (trade name; manufactured by Ciba Speciality Chemicals Inc.)), 2,2-diethoxyacetophenone, 2,2-dimethoxy-2-phenylacetophenone, 4-phenoxydichloroacetophenone, and 4-(t-butyl)dichloroacetophenone. Examples of the benzoin ether-based photopolymerization initiator include benzoin methyl ether, benzoin ethyl ether, benzoin propyl ether, benzoin isopropyl ether, and benzoin isobutyl ether. An example of the acylphosphine oxide-based photopolymerization initiator is "Lucirin TPO" (trade name; manufactured by BASF Japan Ltd.). Examples of the α-ketol-based photopolymerization initiator include 2-methyl-2-hydroxy propiophenone and 1-[4-(2-hydroxyethyl)phenyl]-2-methylpropan-1-one. An example of the aromatic sulfonyl chloride-based photopolymerization initiator is 2-naphthalenesulfonyl chloride. An example of the photoactive oxime-based photopolymerization initiator is 1-phenyl-1,1-propanedione-2-(o-ethoxycarbonyl)-oxime. An example of the benzoin-based photopolymerization initiator is benzoin. An example of the benzyl-based photopolymerization initiator is benzyl. Examples of the benzophenone-based photopolymerization initiator include benzophenone, benzoylbenzoic acid, 3,3'-dimethyl-4-methoxybenzophenone, polyvinyl benzophenone, and α-hydroxycyclohexyl phenyl ketone. Examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

The usage of the photopolymerization initiator is, for example, preferably 5 parts by weight or less, more preferably 0.01 to 5 parts by weight, still more preferably 0.05 to 3 parts by weight with respect to 100 parts by weight of the polymerizable monomer (**m**) in the polymerizable composition (**α**).

Examples of the thermal polymerization initiator include an azo-based polymerization initiator (such as 2,2'-azobisisobutyronitrile, 2,2'-azobis-2-methylbutyronitrile, 2,2'-azobis(2-methylpropionate)dimethyl, 4,4'-azobis-4-cyanovaleric acid, azobisisovaleronitrile, 2,2'-azobis(2-amidinopropane)dihydrochloride, 2,2'-azobis[2-(5-methyl-2-imidazolin-2-yl)propane]dihydrochlor ide, 2,2'-azobis(2-methylpropionamidine) disulfate, or 2,2'-azobis(N,N'-dimethyleneisobutylamidine)dihydrochloride), a peroxide-based polymerization initiator (such as dibenzoyl peroxide or tert-butyl permaleate), and a redox-based polymerization initiator (such as a combination of : an organic peroxide and a vanadium compound; an organic peroxide and dimethylaniline; a metal naphthenate and butylaldehyde, aniline, or acetylbutyrolactone).

The usage of the thermal polymerization initiator is, for example, preferably 5 parts by weight or less, more preferably 0.01 to 5 parts by weight, still more preferably 0.05 to 3 parts by weight with respect to 100 parts by weight of the polymerizable monomer (**m**) in the polymerizable composition (**α**).

The use of a redox-based polymerization initiator as the thermal polymerization initiator enables the polymerization of the composition at normal temperature.

Whether or not a substance is a substance incompatible with a polymer can be judged by means of visual observation, an optical microscope, a scanning electron microscope (SEM), a transmission electron microscope (TEM), X-ray diffraction, or the like on the basis of the size of the substance or an aggregate thereof dispersed in the polymer in a general method (such as: a method involving dissolving the substance in a polymerizable monomer, polymerizing the polymerizable monomer to provide a polymer, and performing the judgment; a method involving dissolving the polymer in a solvent that dissolves the polymer, adding the substance to the solution, stirring the mixture, removing the solvent after the stirring, and performing the judgment; or a method involving heating the polymer, when the polymer is a thermoplastic polymer, to dissolve the polymer, compounding the substance into the dissolved polymer, cooling the mixture, and performing the judgment after the cooling). Criteria for the judgment are as described below. When the substance or the aggregate thereof can be approximated as a spherical shape such as a sphere, a cube, or an amorphous shape, the substance or the aggregate thereof should have a diameter of 5 nm or more. In addition, when the substance or the aggregate thereof can be approximated as a cylindrical shape such as a rod-like shape, a thin-layer shape, or a rectangular parallelopiped shape, the length of its longest side should be 10 nm or more.

Upon dispersion of the substance in the polymer, when the substance or the aggregate thereof in the polymer can be approximated as a spherical shape such as a sphere, a cube, or an amorphous shape, and the substance or the aggregate thereof which is of a spherical shape has a diameter of 5 nm or more, the substance can be regarded as being incompatible with the polymer. In addition, when the substance or the aggregate thereof in the polymer can be approximated as a cylindrical shape such as a rod-like shape, a thin-layer shape, or a rectangular parallelopiped shape, and the length of the longest side of the substance or the aggregate thereof which is of a cylindrical shape is 10 nm or more, the substance can be regarded as being incompatible with the polymer.

A method of dispersing the layered inorganic compound (**f**) in the polymerizable composition (**α**) is, for example, a method involving mixing the polymerizable monomer (**m**), the layered inorganic compound (**f**), and as required, any other component (such as a polymerization initiator), and uniformly dispersing the contents by means of ultrasonic dispersion or the like.

The content of the layered inorganic compound (**f**) in the polymerizable composition (**α**) is preferably 1 to 300 parts by weight, more preferably 3 to 200 parts by weight, still more preferably 5 to 100 parts by weight with respect to 100 parts by weight of the polymerizable monomer (**m**). When the content of the layered inorganic compound (**f**) exceeds 300 parts by weight with respect to 100 parts by weight of the polymerizable monomer (**m**)**,** it may become difficult to produce the highly flame-retardant polymer member or a problem in that the strength of the highly flame-retardant polymer member after the production reduces may arise. When the content of the layered inorganic compound (**f**) is less than 1 part by weight with respect to 100 parts by weight of the polymerizable monomer (**m**), it may become hard to obtain the unevenly distributed polymerizable composition layer (**a1**) or the unevenly distributed polymer layer (**a2**) after the laminate has been obtained in the laminating step (**1**), or the unevenly distributed polymer layer (**a2**) may not have any flame retardancy.

Any appropriate content can be adopted as the content of the layered inorganic compound (**f**) in the polymerizable composition (**α**) depending on, for example, the kind of the layered inorganic compound (**f**). For example, when particles are used as the layered inorganic compound (**f**), the content of the layered inorganic compound (**f**) is preferably 0.001 to 70 parts by weight, more preferably 0.01 to 60 parts by weight, still more preferably 0.1 to 50 parts by weight with respect to 100 parts by weight of the polymerizable monomer (**m**). When the content of the layered inorganic compound (**f**) as particles is less than 0.001 part by weight with respect to the polymerizable monomer (**m**), it maybecome difficult to provide the entirety of the surface to be utilized of a surface uneven sheet with an uneven structure in an average manner. When the content of the layered inorganic compound (**f**) as particles exceeds 70 parts by weight with respect to the polymerizable monomer (**m**), the particles may drop during the production of the surface uneven sheet or a problem in that the strength of the surface uneven sheet reduces may arise.

The polymerizable composition (**α**) is preferably provided with a moderate viscosity suitable for an application operation because the composition is typically formed into a sheet shape by, for example, being applied onto a base material.

The viscosity of the polymerizable composition (**α**) can be adjusted by, for example, compounding any one of the various polymers such as an acrylic rubber and a thickening additive, or polymerizing part of the polymerizable monomer (**m**) in the polymerizable composition (**α**) through photoirradiation, heating, or the like. It should be noted that a desired viscosity is as described below. A viscosity set with a BH viscometer under the conditions of a rotor of a No. 5 rotor, a rotational frequency of 10 rpm, and a measurement temperature of 30°C is preferably 5 to 50 Pa·s, more preferably 10 to 40 Pa·s. When the viscosity is less than 5 Pa·s, the liquid may flow when applied onto the base material. When the viscosity exceeds 50 Pa·s, the viscosity is so high that it may become difficult to apply the liquid.

### (2-1-1-2. Polymerizable composition layer (a))

The polymerizable composition layer (**a**) is a layer formed of the polymerizable composition (**α**).

The polymerizable composition layer (**a**) is obtained by, for example, applying the polymerizable composition (**α**) onto a base material such as a PET film to form the composition into a sheet shape.

For the application of the polymerizable composition (**α**), any appropriate coater may be used, for example. Examples of such coater include a comma roll coater, a die roll coater, a gravure roll coater, a reverse roll coater, a kiss roll coater, a dip roll coater, a bar coater, a knife coater, and a spray coater.

The thickness of the polymerizable composition layer (**a**) is, for example, preferably 3 to 3,000 µm, more preferably 10 to 1, 000 µm, still more preferably 20 to 500 µm. When the thickness of the polymerizable composition layer (**a**) is less than 3 µm, it may be unable to perform uniform application or the unevenly distributed polymer layer (**a2**) may not have any flame retardancy. On the other hand, when the thickness of the polymerizable composition layer (**a**) exceeds 3,000 µm, there is a possibility that waviness occurs in the highly flame-retardant polymer member and hence a smooth highly flame-retardant polymer member is not obtained.

### (2-1-1-3. Monomer-absorbing layer (b))

The monomer-absorbing layer (b) is a layer capable of absorbing part of the polymerizable monomer (**m**) from the polymerizable composition layer (**a**) through the inorganic base material (**L**). It is preferred that the monomer-absorbing layer (**b**) have a high affinity for the polymerizable monomer (**m**) and be capable of absorbing the polymerizable monomer (**m**) at a high rate. It should be noted that a surface provided by the monomer-absorbing layer (**b**) is referred to as "monomer-absorbing surface."

The absorption of the polymerizable monomer (**m**) in the monomer-absorbing layer (**b**) occurs at the time point when a laminate is formed by the laminating step **(1)** of laminating the polymerizable composition layer (**a**) on the monomer-absorbing surface of the monomer-absorbing layer (**b**) through the inorganic base material (L). The absorption of the polymerizable monomer (**m**) in the monomer-absorbing layer (**b**) occurs more effectively when the heating step is performed. It should be noted that the time point when the absorption of the polymerizable monomer (**m**) in the monomer-absorbing layer (**b**) occurs is not limited to any stage prior to the polymerizing step (**2**) and the absorption may occur at the stage of the polymerizing step (**2**).

The monomer-absorbing layer (**b**) can be such a sheet-shaped structure including at least one monomer-absorbing layer (**b**) that the monomer-absorbing surface of the monomer-absorbing layer (**b**) can be in contact with the polymerizable composition layer (**a**) through the inorganic base material (**L**) (hereinafter, referred to as "monomer-absorbable sheet").

Examples of the monomer-absorbable sheet include a monomer-absorbable sheet constituted only of the monomer-absorbing layer (**b**) (hereinafter, referred to as "base material-less monomer-absorbable sheet") and a monomer-absorbable sheet obtained by providing the monomer-absorbing layer (**b**) on a base material (hereinafter, referred to as "monomer-absorbable sheet with a base material"). It should be noted that when the monomer-absorbable sheet is a base material-less monomer-absorbable sheet, each surface of the sheet may be used as a monomer-absorbing surface. In addition, when the monomer-absorbable sheet is a monomer-absorbable sheet with a base material, the surface on the side of the monomer-absorbing layer (**b**) serves as a monomer-absorbing surface.

The monomer-absorbing layer (**b**) contains the polymer (**p**). The content of the polymer (**p**) in the monomer-absorbing layer (**b**) is preferably 80 wt% or more, more preferably 90 wt% or more, still more preferably 95 wt% or more, particularly preferably 98 wt% or more, most preferably substantially 100 wt%. The number of kinds of the polymers (**p**) in the monomer-absorbing layer (**b**) may be only one, or may be two or more.

The description of the polymerizable monomer in the section <1-1. polymer layer (**B**)> can be cited as specific description of a monomer component to be used for obtaining the polymer (**p**).

At least one of the monomer components to be used for obtaining the polymer (**p**) is preferably common to at least one of the polymerizable monomers (**m**) in the polymerizable composition (**α**).

The polymer (**p**) is preferably an acrylic resin obtained by polymerizing a monomer component containing an acrylic monomer.

The polymer (**p**) can be obtained by any appropriate polymerization method as long as the monomer component to be used for obtaining the polymer (**p**) can be polymerized by the method. The description of a polymerization method in a section (2-1-3. polymerizing step (**2**)) to be described later can be cited as specific description of a preferred polymerization method.

The polymer (**p**) may be a polymer obtained by polymerizing a polymerizable composition having the same composition as that of the polymerizable composition (**α**) except that the layered inorganic compound (**f**) is removed from the polymerizable composition (**α**).

The monomer-absorbing layer (**b**) may contain any appropriate additive. The description in the section <1-4. additive> can be cited as specific description of such additive.

The monomer-absorbing layer (**b**) may contain a flame retardant as in the polymer layer (**B**).

The monomer-absorbing layer (**b1**) in the laminate (**X**) preferably shows a weight 1.1 or more times as large as the weight of the monomer-absorbing layer (**b**) to be used in the laminating step (**1**) as a result of the absorption of the polymerizable monomer (**m**) in the polymerizable composition layer (**a**) by the monomer-absorbing layer (**b**). When the weight increase ratio as a result of the absorption of the polymerizable monomer (**m**) by the monomer-absorbing layer (**b**) becomes 1.1 or more, the layered inorganic compound (**f**) can be unevenly distributed in an effective manner. The weight increase ratio is more preferably 2 or more, still more preferably 3 or more, particularly preferably 4 or more. The weight increase ratio is preferably 50 or less in terms of the maintenance of the smoothness of the monomer-absorbing layer (**b**).

The weight increase ratio can be calculated as described below. After a lapse of the same time period as the time period from the immersion of the monomer-absorbing layer (**b**) in the polymerizable monomer (**m**) through the lamination of the polymerizable composition layer (**a**) on the monomer-absorbing layer (**b**) to the performance of the polymerizing step (**2**), and at the same temperature as the temperature at which the foregoing process is performed, the weight of the monomer-absorbing layer (**b**) is measured and then the ratio is calculated as a ratio of the weight after the absorption of the polymerizable monomer (**m**) to the weight before the absorption of the polymerizable monomer (**m**).

The volume of the monomer-absorbing layer (**b**) after the absorption of the polymerizable monomer (**m**) may be constant as compared with that before the absorption, or may change as compared with that before the absorption.

Any appropriate value can be adopted as the gel fraction of the monomer-absorbing layer (**b**). The highly flame-retardant polymer member of the present invention can be obtained irrespective of whether cross-linking has progressed to attain a gel fraction of about 98 wt% in the monomer-absorbing layer (**b**) or nearly no cross-linking has occurred in the layer (e.g., the gel fraction is 10 wt% or less).

Sufficient heat resistance and sufficient solvent resistance can be imparted to the polymer layer (**B**) in the highly flame-retardant polymer member to be obtained by providing the monomer-absorbing layer (**b**) with a high degree of cross-linking (such as a gel fraction of 90 wt% or more). Sufficient flexibility and sufficient stress-relaxing property can be imparted to the polymer layer (**B**) in the highly flame-retardant polymer member to be obtained by providing the monomer-absorbing layer (**b**) with a low degree of cross-linking (such as a gel fraction of 10 wt% or less). In order that the highly flame-retardant polymer member of the present invention may express excellent curl resistance, the gel fraction of the polymer (**p**) is preferably 10 wt% or less, more preferably 8 wt% or less, still more preferably 5 wt% or less, particularly preferably 3 wt% or less. A lower limit for the gel fraction of the polymer (**p**) is preferably 0 wt%. Sufficient flexibility and sufficient stress-relaxing property can be imparted to the polymer layer (**B**) in the highly flame-retardant polymer member to be obtained by providing the polymer (**p**) with a low degree of cross-linking (such as a gel fraction of 10 wt% or less), and hence the member can express excellent curl resistance.

The gel fraction can be calculated from, for example, a weight change amount when a measuring object is wrapped with a TEMISH (manufactured by, for example, Nitto Denko Corporation) as a mesh made of tetrafluoroethylene, the wrapped product is immersed in ethyl acetate for 1 week, and then the measuring object is dried.

The highly flame-retardant polymer member of the present invention can be obtained irrespective of whether the monomer-absorbing layer (**b**) is a hard layer or a soft layer. When a hard layer (such as a layer having a 100% modulus of 100 N/cm² or more) is used as the monomer-absorbing layer (**b**), the monomer-absorbing layer (**b**) can be used as a support (base material). When a soft layer (such as a layer having a 100% modulus of 30 N/cm² or less) is used as the monomer-absorbing layer (**b**), the monomer-absorbing layer (**b**) can be used as a pressure-sensitive adhesive layer.

Any appropriate thickness can be adopted as the thickness of the monomer-absorbing layer (**b**) before the absorption of the polymerizable monomer (**m**). The thickness of the monomer-absorbing layer (**b**) before the absorption of the polymerizable monomer (**m**) is, for example, preferably 1 to 3,000 µm, more preferably 2 to 2,000 µm, still more preferably 5 to 1,000 µm. When the thickness of the monomer-absorbing layer (**b**) before the absorption of the polymerizable monomer (**m**) is less than 1 µm, the monomer-absorbing layer (**b**) may deform in the case where the layer has absorbed a large amount of the polymerizable monomer (**m**), or the absorption of the polymerizable monomer (**m**) may not be sufficiently performed. When the thickness of the monomer-absorbing layer (**b**) before the absorption of the polymerizable monomer (**m**) exceeds 3, 000 µm, there is a possibility that the highly flame-retardant polymer member to be finally obtained is hard to wind in a sheet shape and is hence poor in handleability.

The monomer-absorbing layer (**b**) may be a single layer, or may be a laminate of two or more layers.

The monomer-absorbing layer (**b**) can be produced by applying a composition as a material for forming the monomer-absorbing layer (**b**) (hereinafter, referred to as "monomer-absorbing layer (**b**)-forming composition") onto a predetermined surface of any appropriate support such as a release-treated surface of a base material or cover film to be described later with any appropriate coater or the like. The monomer-absorbing layer (**b**)-forming composition applied onto the support is subjected to drying and/or curing (such as curing with light) as required.

The viscosity of the monomer-absorbing layer (**b**)-forming composition may be adjusted so as to be suitable for the application by any appropriate method.

Examples of the base material used when the monomer-absorbing layer (**b**) is a monomer-absorbable sheet with a base material (base material for a monomer-absorbable sheet) include: a paper-based base material such as paper; a fiber-based base material such as cloth, non-woven fabric, or net; a metal-based base material such as a metal foil or a metal plate; a plastic-based base material such as a plastic film or sheet; a rubber-based base material such as a rubber sheet; a foam body such as a foamed sheet; and a laminate thereof (such as a laminate of a plastic-based base material and other base material or a laminate of plastic films (or sheets)). Such base material is preferably a plastic-based material such as a plastic film or sheet. Examples of such plastic include: an olefin-based resin containing α-olefin as a monomer component such as a polyethylene (PE), a polypropylene (PP), an ethylene-propylene copolymer, or an ethylene-vinyl acetate copolymer (EVA); a polyester-based resin such as a polyethylene terephthalate (PET), a polyethylene naphthalate (PEN), or a polybutylene terephthalate (PBT); a polyvinyl chloride (PVC); a vinyl acetate-based resin; a polyphenylene sulfide (PPS); an amide-based resin such as a polyamide (nylon) or an all-aromatic polyamide (aramid); a polyimide-based resin; and a polyether ether ketone (PEEK). The number of kinds of plastics may be only one, or may be two or more.

When the monomer-absorbing layer (b) is curable with an active energy ray, the base material for a monomer-absorbable sheet is preferably a sheet that does not inhibit the transmission of the active energy ray.

The surface of the base material for a monomer-absorbable sheet is preferably subjected to any appropriate surface treatment for improving its adhesiveness with the monomer-absorbing layer (**b**). Examples of such surface treatment include: an oxidation treatment by a chemical or physical method such as a corona treatment, a chromic acid treatment, ozone exposure, flame exposure, high-voltage electric shock exposure, or an ionizing radiation treatment; and a coating treatment with an undercoating agent, a releasing agent, or the like.

Any appropriate thickness can be adopted as the thickness of the base material for a monomer-absorbable sheet depending on, for example, its strength, flexibility, and intended use. The thickness of the base material for a monomer-absorbable sheet is, for example, preferably 400 µm or less, more preferably 1 to 350 µm, still more preferably 10 to 300 µm.

The base material for a monomer-absorbable sheet may be a single layer, or may be a laminate of two or more layers.

### (2-1-1-4. Laminate (X))

The laminate (**X**) can be produced by, for example, applying the polymerizable composition (**α**) to the monomer-absorbing surface of the monomer-absorbing layer (**b**) through the inorganic base material (**L**) to laminate the syrupy polymerizable composition layer (**a**), or applying the polymerizable composition (**α**) onto any appropriate support to form the syrupy polymerizable composition layer (**a**) and then transferring the polymerizable composition layer (**a**) onto the monomer-absorbing layer (**b**) through the inorganic base material (**L**).

The ratio of the thickness of the polymerizable composition layer (**a**) to the thickness of the monomer-absorbing layer (**b**) is preferably 300% or less, more preferably 200% or less, still more preferably 100% or less. When the ratio of the thickness of the polymerizable composition layer (**a**) to the thickness of the monomer-absorbing layer (**b**) exceeds 300%, it may become difficult to produce the highly flame-retardant polymer member or a problem in that the strength of the highly flame-retardant polymer member after the production reduces may arise. As the ratio of the thickness of the polymerizable composition layer (**a**) to the thickness of the monomer-absorbing layer (**b**) reduces, the ease with which the layered inorganic compound (**f**) is unevenly distributed is improved, and hence the layered inorganic compound (**f**) can be unevenly distributed in the unevenly distributed polymerizable composition layer (**a1**) at a higher density. It shouldbe noted that the ratio of the thickness of the polymerizable composition layer (**a**) to the thickness of the monomer-absorbing layer (**b**) is preferably set to 1% or more because the layer can be uniformly produced.

### (2-1-1-5. Cover film)

Upon production of the laminate (**X**), a cover film can be used as the support of the polymerizable composition layer (**a**). The cover film may have peelability. It should be noted that when a photopolymerization reaction is used in the polymerizing step (**2**), oxygen in the air is preferably blocked with the cover film in the polymerizing step (**2**) because the reaction is inhibited by oxygen in the air.

As the cover film, any appropriate cover film may be adopted as long as the cover film is a thin sheet which has low oxygen permeation. When a photopolymerization reaction is used, a preferred cover film is a transparent film such as any appropriate release paper. Specific examples of the cover film include a base material having a layer release-treated (peel-treated) with a release treatment agent (a peel treatment agent) on at least one of its surfaces, a low adhesive base material formed of a fluorine-based polymer (such as a polytetrafluoroethylene, a polychlorotrifluoroethylene, a polyvinyl fluoride, a polyvinylidene fluoride, a copolymer of tetrafluoroethylene and hexafluoropropylene, or a copolymer of chlorofuluoroethylene and vinylidene fluoride), and a low adhesive base material formed of a non-polar polymer (such as an olefin-based resin such as a polyethylene or a polypropylene). The release-treated surface of the base material having a release-treated layer on at least one of its surfaces may be used as a release surface. Each of both surfaces of the low adhesive base material may be used as a release surface.

Examples of the base material that can be used in the base material having a release-treated layer on at least one of its surfaces include: a plastic-based base material film such as a polyester film (such as a polyethylene terephthalate film), an olefin-based resin film (such as a polyethylene film or a polypropylene film), a polyvinyl chloride film, a polyimide film, a polyamide film (nylon film), and a rayon film; papers (such as woodfree paper, Japanese paper, kraft paper, glassine paper, synthetic paper, and top coated paper) ; and a multi-layered laminate obtained by lamination or co-extrusion thereof (laminate of 2 to 3 layers). As such base material, a plastic-based base material film having high transparency is preferred, and a polyethylene terephthalate film is particularly preferred.

A release treatment agent that can be used in the base material having a release-treated layer on at least one of its surfaces is, for example, a silicone-based release treatment agent, a fluorine-based release treatment agent, or a long-chain alkyl-based release treatment agent. Only one kind of the release treatment agents may be used, or two or more kinds thereof may be used.

Any appropriate thickness can be adopted as the thickness of the cover film. The thickness of the cover film is, for example, preferably 12 to 250 µm, more preferably 20 to 200 µm in terms of handleability and economical efficiency.

The cover film may be a single layer, or may be a laminate of two or more layers.

### (2-1-2. Heating step)

In the production method (**1**), the laminate (**X**) obtained by laminating the polymerizable composition layer (**a**) on the monomer-absorbing layer (**b**) through the inorganic base material (**L**) can be subjected to a heating step before being subjected to the polymerizing step (**2**). As a result of the heating step, the layered inorganic compound (**f**) can be unevenly distributed in the unevenly distributed polymerizable composition layer (**a1**) at an additionally high density, and hence such a highly flame-retardant polymer member that the distribution of the layered inorganic compound (**f**) in the unevenly distributed polymer layer (**a2**) is made additionally dense can be obtained.

The heating temperature is preferably 25°C or more and 200°C or less, more preferably 30°C or more and 180°C or less, still more preferably 40°C or more and 160°C or less, particularly preferably 50°C or more and 150°C or less. The time for the heating step is preferably 1 second or more and 120 minutes or less, more preferably 10 seconds or more and 60 minutes or less, still more preferably 1 minute or more and 30 minutes or less. In particular, a highly flame-retardant polymer member having a higher density can be obtained as the temperature increases in the heating temperature range or as the time for the heating step lengthens in the range of the time for the heating step. When the heating temperature is less than 25°C, the polymerizable monomer (**m**) may not be sufficiently absorbed by the monomer-absorbing layer (**b**). When the heating temperature exceeds 200°C, the polymerizable monomer (**m**) may volatilize or the cover film may deform. When the time for the heating step is less than 1 second, it may become difficult to perform the step. When the time for the heating step exceeds 120 minutes, there is a possibility that waviness occurs in the highly flame-retardant polymer member and hence a smooth highly flame-retardant polymer member is not obtained.

The polymerizable composition layer (**a**), the inorganic base material (**L**), and the monomer-absorbing layer (**b**) may be exposed to the temperature condition before the laminating step (**1**). In addition, the polymerizable composition (**α**) may also be exposed to the temperature condition.

Any appropriate heating method can be adopted as a method of heating the laminate (**X**) in the heating step. Examples of the method of heating the laminate (**X**) in the heating step include a heating method involving using an oven, a heating method involving using an electrothermal heater, and a heating method involving using an electromagnetic wave such as an infrared ray.

As a result of the laminating step (**1**) and the heating step to be performed as required, in the laminate (**X**), part of the polymerizable monomer (**m**) in the polymerizable composition layer (**a**) permeates the inorganic base material (**L**) to be absorbed by the monomer-absorbing layer (**b**). On the other hand, the layered inorganic compound (**f**) in the polymerizable composition layer (**a**) is substantially free of being absorbed by the monomer-absorbing layer (**b**). Accordingly, the unevenly distributed polymerizable composition layer (**a1**) is obtained, in which the layered inorganic compound (**f**) is unevenly distributed toward the side opposite to the monomer-absorbing layer (**b**) and is distributed toward a void portion of the inorganic base material (**L**) as well under certain circumstances, and which has, as a result of the distribution, the unevenly distributed portion (**a11**) and non-unevenly distributed portion (**a12**) of the layered inorganic compound (**f**). At this time, the inorganic base material (**L**) is present between the unevenly distributed portion (**a11**) and non-unevenly distributed portion (**a12**) of the layered inorganic compound (**f**). The void portions of the inorganic base material (**L**) may contain the polymerizable monomer (**m**) and the layered inorganic compound (**f**). That is, the polymerizable composition layer (**a**) is laminated on the monomer-absorbing layer (**b**) through the inorganic base material (**L**) and hence part of the polymerizable monomer (**m**) in the polymerizable composition layer (**a**) permeates the inorganic base material (**L**) to be absorbed by the monomer-absorbing layer (**b**). Thus, the unevenly distributed polymerizable composition layer (**a1**) is obtained. Meanwhile, the monomer-absorbing layer (**b**) absorbs the polymerizable monomer (**m**) and hence the monomer-absorbing layer (**b1**) is obtained.

### (2-1-3. Polymerizing step (2))

A laminate (**Y**) of the unevenly distributed polymer layer (**a2**) and the cured monomer-absorbing layer (**b2**) is obtained by performing the polymerizing step (**2**) of polymerizing the polymerizable monomer (**m**) in the unevenly distributed polymerizable composition layer (**a1**) and the polymerizable monomer (**m**) in the monomer-absorbing layer (**b1**) (and when a void portion of the inorganic base material (**L**) contains the polymerizable monomer (**m**), the polymerizable monomer (**m**) is also polymerized). It should be noted that the unevenly distributed polymer layer (**a2**) includes the unevenly distributed portion (**a21**) of the layered inorganic compound (**f**), the inorganic base material (**L**), and the non-unevenly distributed portion (**a22**) of the layered inorganic compound (**f**).

The polymerizing step (**2**) can be performed by, for example, photoirradiation. Any appropriate condition can be adopted as a condition such as a light source, irradiation energy, an irradiation method, or an irradiation time.

An active energy ray to be used in the photoirradiation is, for example, an ionizing radiation such as an α-ray, a β-ray, a γ-ray, a neutron beam, or an electron beam, or UV light. Of those, UV light is preferred.

Irradiation with the active energy ray is performed by using, for example, a black-light lamp, a chemical lamp, a high-pressure mercury lamp, or a metal halide lamp.

Heating may be performed in the polymerizing step (**2**). Any appropriate heating method can be adopted as a heating method. Examples of the heating method include a heating method involving using an electrothermal heater and a heating method involving using an electromagnetic wave such as an infrared ray.

The thickness of the unevenly distributed portion (**a21**) of the layered inorganic compound (**f**) in the unevenly distributed polymer layer (**a2**) in the laminate (**Y**) is preferably 80% or less, more preferably 60% or less, still more preferably 50% or less with respect to the thickness of the polymerizable composition layer (**a**) (before the lamination). When the ratio of the thickness of the unevenly distributed portion (**a21**) of the layered inorganic compound (**f**) to the thickness of the polymerizable composition layer (**a**) (before the lamination) exceeds 80%, adhesiveness between the unevenly distributed polymer layer (**a2**) and the cured monomer-absorbing layer (**b2**) may be problematic, or the strength of the unevenly distributed polymer layer (**a2**) may be problematic.

The thickness of the unevenly distributed portion (**a21**) of the layered inorganic compound (**f**) can be controlled by adjusting the amount of the layered inorganic compound (**f**).

The unevenly distributed portion (**a21**) of the layered inorganic compound (**f**) and the non-unevenly distributed portion (**a22**) of the layered inorganic compound (**f**) can be clearly distinguished from each other because the unevenly distributed portion (**a21**) of the layered inorganic compound (**f**) has a layer shape. This is because the unevenly distributed portion (**a21**) of the layered inorganic compound (**f**) has a layered form, and the inorganic base material (L) is present between the unevenly distributed portion (**a21**) of the layered inorganic compound (f) and the non-unevenly distributed portion (**a22**) of the layered inorganic compound (f).

A trace amount of the layered inorganic compound (f) may be dispersed in the non-unevenly distributed portion (**a22**) depending on a combination of the monomer-absorbing layer (b) and the polymerizable monomer (m). However, the layered inorganic compound (f) dispersed in a trace amount in the non-unevenly distributed portion (**a22**) does not affect any characteristic of the highly flame-retardant polymer member.

The unevenly distributed portion (**a21**) of the layered inorganic compound (**f**) corresponds to the flame-retardant layer (**A**).

In the unevenly distributed portion (**a21**) of the layered inorganic compound (**f**), the layered inorganic compound (**f**) and a polymer component of the unevenly distributed polymer layer (**a2**) are mixed. Accordingly, the unevenly distributed portion (**a21**) of the layered inorganic compound (**f**) can exert a characteristic based on the polymer component of the unevenly distributed polymer layer (**a2**), a characteristic of the layered inorganic compound (**f**), and a characteristic based on the uneven distribution of the layered inorganic compound (**f**) in the unevenly distributed polymer layer (**a2**).

Examples of the characteristic based on the polymer component of the unevenly distributed polymer layer (**a2**) include flexibility, hard-coat property, pressure-sensitive adhesive property, stress-relaxing property, and impact resistance. The pressure-sensitive adhesive property is, for example, pressure-sensitive adhesive property upon use of a pressure-sensitive adhesive component as the polymer component.

The characteristic of the layered inorganic compound (**f**) is, for example, a specific function (such as expansivity, shrink property, absorbability, divergence, or conductivity) upon use of the layered inorganic compound (**f**) having the specific function.

Examples of the characteristic based on the uneven distribution of the layered inorganic compound (**f**) in the unevenly distributed polymer layer (**a2**) include: the control of pressure-sensitive adhesive property by the adjustment of the content of the layered inorganic compound upon use of a pressure-sensitive adhesive component as the polymer component; design such as coloring; and the provision of surface unevenness upon use of particles as the layered inorganic compound (**f**) and a characteristic based on the surface unevenness (such as re-peelability, anti-blocking property, an antiglare characteristic, design, and light-scattering property).

When the polymer component of the unevenly distributed polymer layer (**a2**) is a pressure-sensitive adhesive component and the layered inorganic compound (f) is particulate, unevenness is formed on the surface of the unevenly distributed polymer layer (**a2**) by the particulate, layered inorganic compound (**f**), and hence a highly flame-retardant polymer member capable of exerting pressure-sensitive adhesive property (tackiness) and releasability (anti-blocking property) on the surface of the unevenly distributed polymer layer (**a2**) can be obtained. In such highly flame-retardant polymer member, the pressure-sensitive adhesive property (tackiness) and releasability (anti-blocking property) of the surface of the unevenly distributed polymer layer (**a2**) can be controlled by adjusting the amount of the particulate, layered inorganic compound (**f**) to be incorporated.

The size and shape of the unevenness of the surface of the unevenly distributed polymer layer (**a2**) in the case where the unevenly distributed polymer layer (**a2**) contains particles are controlled by adjusting, for example, the particle diameters of the particles, the thickness of the unevenly distributed polymer layer (**a2**), a polymerization method, and the commencing time and ending time of polymerization. For example, the size and shape of the unevenness of the surface of the plane to be utilized of a surface uneven sheet are controlled by adjusting, for example, the particle diameters of particles, the thickness of a photopolymerization-cured layer, a method for photoirradiation, and the commencing time and ending time of the photoirradiation.

The particulate, layered inorganic compound (**f**) in the unevenly distributed portion (**a21**) may exist in such a manner that the entirety of the particulate, layered inorganic compound (**f**) is included in the unevenly distributed portion (**a21**), or may exist in such a manner that part of the particulate, layered inorganic compound (**f**) is exposed to the outside of the unevenly distributed polymer layer (**a2**).

### <2-2. Highly flame-retardant polymer member production method (2)>

In addition to the production method (1), the production method (2) is preferably adopted as the method of producing the highly flame-retardant polymer member of the present invention. In the production method (2), the highly flame-retardant polymer member of the present invention is produced by laminating a solid layered inorganic compound-containing polymer layer (**a**ₚ), which is obtained by polymerizing a polymerizable composition layer (**a**) formed of a polymerizable composition (**α**) containing a polymerizable monomer (**m**) and the layered inorganic compound (**f**), the inorganic base material (**L**), and a solid monomer-absorbing layer (**b**) containing a polymer (**p**) and capable of absorbing the polymerizable monomer (**m**). At this time, a flavoring agent may be incorporated into at least one of the layered inorganic compound-containing polymer layer (**a**ₚ) and the monomer-absorbing layer (**b**). When the flavoring agent is incorporated into at least one of the layered inorganic compound-containing polymer layer (**a**ₚ) and the monomer-absorbing layer (**b**), the flavoring agent is finally incorporated into at least one of the flame-retardant layer (**A**) and the polymer layer (**B**). In addition, a weathering agent may be incorporated into at least one of the layered inorganic compound-containing polymer layer (**a**ₚ) and the monomer-absorbing layer (**b**). When the weathering agent is incorporated into at least one of the layered inorganic compound-containing polymer layer (**a**ₚ) and the monomer-absorbing layer (**b**), the weathering agent is finally incorporated into at least one of the flame-retardant layer (**A**) and the polymer layer (**B**). In addition, a heat-resistant resin may be incorporated into at least one of the layered inorganic compound-containing polymer layer (**a**ₚ) and the monomer-absorbing layer (**b**). When the heat-resistant resin is incorporated into at least one of the layered inorganic compound-containing polymer layer (**a**ₚ) and the monomer-absorbing layer (**b**), the heat-resistant resin is finally incorporated into at least one of the flame-retardant layer (**A**) and the polymer layer (**B**). In addition, inorganic particles may be incorporated into the monomer-absorbing layer (**b**). When the inorganic particles are incorporated into the monomer-absorbing layer (**b**), the inorganic particles are finally incorporated into the polymer layer (**B**).

The solid layered inorganic compound-containing polymer layer (**a**ₚ) can be obtained by: producing the polymerizable composition layer (**a**) by the same method as the method described in the production method (1); and then performing the polymerization of the polymerizable composition layer (**a**) by the same method as that in the polymerizing step (**2**) described in the production method (1). Although the solid layered inorganic compound-containing polymer layer (**a**ₚ) contains a polymer component formed by the polymerization of the polymerizable monomer (**m**), the polymerizable monomer (**m**) that has not been polymerized may remain in the layer.

The solid monomer-absorbing layer (**b**) can be obtained by the same method as the method described in the production method (1).

The lamination of the solid layered inorganic compound-containing polymer layer (**a**ₚ), the inorganic base material (**L**), and the solid monomer-absorbing layer (**b**) can be performed by any appropriate lamination method. A method for the lamination of the solid layered inorganic compound-containing polymer layer (**a**ₚ), the inorganic base material (**L**), and the solid monomer-absorbing layer (**b**) is, for example, a method involving producing the solid layered inorganic compound-containing polymer layer (**a**ₚ) on any appropriate base material, separately preparing the inorganic base material (**L**), separately preparing the monomer-absorbing layer (**b**) to be provided as a monomer-absorbable sheet, and laminating the layers. The production method (**2**) preferably includes a drying step (**3**). The drying step (**3**) can be performed after the polymerizing step (**2**). An odor component remaining in the laminate (**Y**) can be removed by providing the drying step (**3**) after the polymerizing step (**2**). Accordingly, the amount of the outgas from the highly flame-retardant polymer member can be reduced. A drying temperature in the drying step (**3**) is preferably 50 to 200°C, more preferably 70 to 180°C, still more preferably 80 to 160°C, particularly preferably 90 to 140°C. An outgas-reducing effect can be additionally expressed by setting the drying temperature in the drying step (3) in the range. A drying time in the drying step (3) is preferably 1 minute to 3 hours, more preferably 1.5 minutes to 2 hours, still more preferably 2 minutes to 1 hour, particularly preferably 3 minutes to 30 minutes. The outgas-reducing effect can be additionally expressed by setting the drying time in the drying step (3) in the range.

### <2-3. Highly flame-retardant polymer member production method (3)>

In addition to the production methods (1) and (2), the production method (3) is preferably adopted as the method of producing the highly flame-retardant polymer member of the present invention. In the production method (3), the highly flame-retardant polymer member of the present invention is produced by: laminating a syrupy polymerizable composition layer (**a'**) formed of a polymerizable composition (**α**) containing a polymerizable monomer (**m1**) and the layered inorganic compound (**f**), the inorganic base material (L), and a syrupy polymerizable composition layer (**b'**) containing a polymerizable monomer (**m2**) and a polymer (**p2**); and performing polymerization. At this time, a flavoring agent may be incorporated into at least one of the polymerizable composition layer (**a'**) and the polymerizable composition layer (**b'**). When the flavoring agent is incorporated into at least one of the polymerizable composition layer (**a'**) and the polymerizable composition layer (**b'**), the flavoring agent is finally incorporated into at least one of the flame-retardant layer (**A**) and the polymer layer (**B**). In addition, a weathering agent may be incorporated into at least one of the polymerizable composition layer (**a'**) and the polymerizable composition layer (**b'**). When the weathering agent is incorporated into at least one of the polymerizable composition layer (**a'**) and the polymerizable composition layer (**b'**), the weathering agent is finally incorporated into at least one of the flame-retardant layer (**A**) and the polymer layer (**B**). In addition, a heat-resistant resin may be incorporated into at least one of the polymerizable composition layer (**a'**) and the polymerizable composition layer (**b'**). When the heat-resistant resin is incorporated into at least one of the polymerizable composition layer (**a'**) and the polymerizable composition layer (**b'**), the heat-resistant resin is finally incorporated into at least one of the flame-retardant layer (**A**) and the polymer layer (**B**). In addition, inorganic particles may be incorporated into the polymerizable composition layer (**b'**). When the inorganic particles are incorporated into the polymerizable composition layer (**b**'), the inorganic particles are finally incorporated into the polymer layer (**B**).

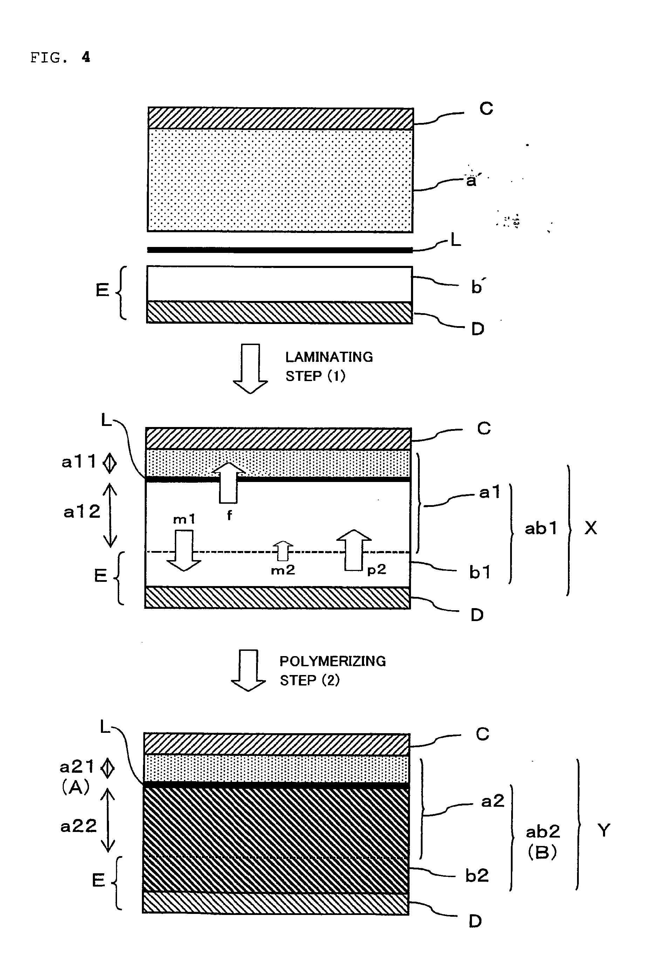

Hereinafter, the highly flame-retardant polymer member production method (3) is described with reference to FIG. **4**.

First, in a laminating step (**1**), a laminate (**X**) is obtained by laminating the polymerizable composition layer (**a'**), the inorganic base material (**L**), and the polymerizable composition layer (**b**'). The polymerizable composition layer (**a'**) contains the polymerizable monomer (**m1**) and the layered inorganic compound (**f**). The polymerizable composition layer (**b'**) contains the polymerizable monomer (**m2**) and the polymer (**p2**). Although the polymerizable composition layer (**a'**) can be laminated on at least one surface of the polymerizable composition layer (**b'**), FIG. **4** illustrates the case where the layer is laminated only on one surface of the polymerizable composition layer (**b'**). In FIG. **4**, a cover film (**C**) is provided on the side of the polymerizable composition layer (**a'**) not laminated on the polymerizable composition layer (**b'**). In addition, in FIG. **4**, the polymerizable composition layer (**b'**) is provided on a base material film (**D**).

It is preferred that the polymerizable monomer (**m1**) in the polymerizable composition layer (**a'**), and the polymerizable monomer (**m2**) and the polymer (**p2**) in the polymerizable composition layer (**b'**) substantially show compatibility. Thus, in the laminate (**X**), part of the polymerizable monomer (**m1**) and part of the polymerizable monomer (**m2**) can each diffuse in the other layer interactively on the polymerizable composition layer (**a'**) and the polymerizable composition layer (**b'**) through the inorganic base material (**L**). Here, when a concentration (c1) of the polymerizable monomer (**m1**) in the polymerizable composition layer (**a'**) is higher than a concentration (c2) of the polymerizable monomer (**m2**) in the polymerizable composition layer (**b'**), the extent to which the polymerizable monomer (**m1**) diffuses in the polymerizable composition layer (**b'**) enlarges, and in accordance therewith, the extent to which the polymer (**p2**) in the polymerizable composition layer (**b'**) diffuses in the polymerizable composition layer (**a'**) enlarges. On the other hand, the layered inorganic compound (**f**) in the polymerizable composition layer (**a'**) is substantially free of being absorbed by the monomer-absorbing layer (**b**). Accordingly, the unevenly distributed polymerizable composition layer (**a1**) is obtained, in which the layered inorganic compound (**f**) is unevenly distributed toward the side opposite to the polymerizable composition layer (**b'**) and is distributed toward a void portion of the inorganic base material (**L**) as well under certain circumstances, and which has, as a result of the distribution, the unevenly distributed portion (**a11**) and non-unevenly distributed portion (**a12**) of the layered inorganic compound (**f**). At this time, the inorganic base material (**L**) is present between the unevenly distributed portion (**a11**) and non-unevenly distributed portion (**a12**) of the layered inorganic compound (**f**). The void portions of the inorganic base material (**L**) may contain the polymerizable monomer (**m**) and the layered inorganic compound (**f**). The monomer-absorbing layer (**b1**) is formed from the polymerizable composition layer (**b'**).

The concentration (c1) of the polymerizable monomer (**m1**) in the polymerizable composition layer (**a'**) is preferably higher than the concentration (**c2**) of the polymerizable monomer (**m2**) in the polymerizable composition layer (**b'**). A concentration difference between the concentration (c1) and the concentration (c2) is preferably 15 wt% or more, more preferably 20 wt% or more, still more preferably 30 wt% or more. When the concentration difference between the concentration (c1) and the concentration (c2) is set to 15 wt% or more, the layered inorganic compound (**f**) in the polymerizable composition layer (**a'**) can be unevenly distributed in an effective manner. It should be noted that when the concentration (c2) is higher than the concentration (c1), there is a possibility that the layered inorganic compound (**f**) in the polymerizable composition layer (**a'**) cannot be unevenly distributed in a sufficient manner.

The phenomenon of the uneven distribution of the layered inorganic compound (**f**) in the unevenly distributed polymerizable composition layer (**a1**) is assumed to be caused by the diffusion of the polymer (**p2**) from the polymerizable composition layer (**b'**) through the inorganic base material (**L**). The polymerizable monomer (**m1**) diffuses in the polymerizable composition layer (**b'**) through the inorganic base material (**L**), and in the meantime, the polymer (**p2**) diffuses in the polymerizable composition layer (**a'**) through the inorganic base material (**L**). Thus, the layered inorganic compound (**f**) that cannot diffuse toward the polymerizable composition layer (**b'**) may be unevenly distributed in such a manner as to remain in the polymerizable composition layer (**a'**). The polymerizable composition layer (**b'**) absorbs the polymerizable monomer (**m1**) to turn into the monomer-absorbing layer (**b1**).

Each component of the polymerizable composition layer (**a'**) and each component of the polymerizable composition layer (**b'**) diffuse interactively in the laminate (**X**). Accordingly, an interface between the non-unevenly distributed portion (**a12**) of the layered inorganic compound (**f**) in the unevenly distributed polymerizable composition layer (**a1**) and the monomer-absorbing layer (**b1**) cannot be observed (a composite site of these layers is represented as **ab1** in FIG. **4**). In FIG. **4**, the interface is indicated by a broken line for convenience.

Next, the polymerizable monomer (**m1**) and the polymerizable monomer (**m2**) in the unevenly distributed polymerizable composition layer (**a1**) and the monomer-absorbing layer (**b1**) are polymerized (and when the void portions of the inorganic base material (**L**) contain the polymerizable monomer (**m1**) and/or the polymerizable monomer (**m2**), the polymerizable monomer (**m1**) and/or the polymerizable monomer (**m2**) are/is also polymerized) by subjecting the laminate (**X**) to the polymerizing step (**2**). Thus, the laminate (**Y**) in which the unevenly distributed polymer layer (**a2**), which has been cured while the unevenly distributed structure has been maintained, and the cured monomer-absorbing layer (**b2**) are laminated is obtained. The unevenly distributed polymer layer (**a2**) has the unevenly distributed portion (**a21**) of the layered inorganic compound (**f**), the inorganic base material (**L**), and the non-unevenly distributed portion (**a22**) of the layered inorganic compound (**f**). It should be noted that the monomer-absorbing layer (**b1**) is turned into the monomer-absorbing layer (**b2**), in which the polymerizable monomer (**m1**) and the polymerizable monomer (**m2**) have been cured, by the polymerizing step (**2**) because the polymerizable monomer (**m1**) and the polymerizable monomer (**m2**) are absorbed by the monomer-absorbing layer (**b1**). Although an interface between the non-unevenly distributed portion (**a22**) of the layered inorganic compound (**f**) in the unevenly distributed polymer layer (**a2**) and the cured monomer-absorbing layer (**b2**) cannot be observed in the laminate (**Y**) (a composite site of these layers is represented as **ab2** in FIG. **4**), the interface is indicated by a broken line in FIG. **4** for convenience.

Details about the laminating step (**1**) and details about the polymerizing step (**2**) are identical to those described in the production method (1). In addition, the heating step described in the production method (**1**) may be included. The production method (3) preferably includes a drying step (**3**). The drying step (**3**) can be performed after the polymerizing step (**2**). An odor component remaining in the laminate (**Y**) can be removed by providing the drying step (**3**) after the polymerizing step (**2**). Accordingly, the amount of the outgas from the highly flame-retardant polymer member can be reduced. A drying temperature in the drying step (**3**) is preferably 50 to 200°C, more preferably 70 to 180°C, still more preferably 80 to 160°C, particularly preferably 90 to 140°C. An outgas-reducing effect can be additionally expressed by setting the drying temperature in the drying step (**3**) in the range. A drying time in the drying step (**3**) is preferably 1 minute to 3 hours, more preferably 1.5 minutes to 2 hours, still more preferably 2 minutes to 1 hour, particularly preferably 3 minutes to 30 minutes. The outgas-reducing effect can be additionally expressed by setting the drying time in the drying step (**3**) in the range.

### <<3. Shape of highly flame-retardant polymer member>>

Any appropriate shape can be adopted as the shape of the highly flame-retardant polymer member. Examples of the shape of the highly flame-retardant polymer member include a sheet shape and a tape shape. When the shape of the highly flame-retardant polymer member is a sheet shape, the member can be used as a flame-retardant sheet. The highly flame-retardant polymer member may have such a shape that the member of a sheet shape or a tape shape is wound in a roll shape. Alternatively, the highly flame-retardant polymer member may have such a shape that members of sheet shapes or tape shapes are laminated.

When the outermost layer of the highly flame-retardant polymer member is a pressure-sensitive adhesive layer, the highly flame-retardant polymer member can be used as a pressure-sensitive adhesive tape or a pressure-sensitive adhesive sheet. It should be noted that the "tape" and the "sheet" may be collectively referred to as "tape" or "sheet" in a simple manner.

The highly flame-retardant polymer member of the present invention can also be used as a pressure-sensitive adhesive tape or a pressure-sensitive adhesive sheet by further providing the highly flame-retardant polymer member with a pressure-sensitive adhesive layer formed of any appropriate pressure-sensitive adhesive (such as an acrylic pressure-sensitive adhesive, a rubber-based pressure-sensitive adhesive, a vinyl alkyl ether-based pressure-sensitive adhesive, a silicone-based pressure-sensitive adhesive, a polyester-based pressure-sensitive adhesive, a polyamide-based pressure-sensitive adhesive, a urethane-based pressure-sensitive adhesive, a fluorine-based pressure-sensitive adhesive, or an epoxy-based pressure-sensitive adhesive).

The surface of the flame-retardant layer (A) in the highly flame-retardant polymer member of the present invention may be protected with a cover film. The cover film can be peeled upon use of the highly flame-retardant polymer member of the present invention.

The highly flame-retardant polymer member of the present invention may have any other layer (such as an intermediate layer or an undercoat layer) to such an extent that the effect of the present invention is not impaired. The member may have, as such other layer, an environment-resistant functional layer such as a photocatalyst layer, an antifouling layer, a moisture-conditioning layer, a moisture-preventing layer, a water-resistant layer, a water-repellent layer, a hydrophilic layer, or an oil-repellent layer. In addition, the member may have, as such other layer, a hygienic functional layer such as an antibacterial layer, an antifungal layer, or a deodorant layer. In addition, the member may have, as such other layer, a physical functional layer such as a conductive layer, an anti-fingerprint layer, a hard coat layer, an ink-absorbing layer, an inorganic particle-containing layer, an antireflection layer, or a light selective transmission layer. In addition, the member may have, as such other layer, a chemical functional layer such as an alkali-resistant layer, an acid-resistant layer, or a solvent-resistant layer. In addition, the member may have, as such other layer, a thermal functional layer such as a heat-shielding layer, a heat-conductive layer, or a heat-insulating layer.

### <3-1. Environment-resistant functional layer>

Any appropriate layer can be adopted as the environment-resistant functional layer as long as the layer can express environment-resistant functionality. Preferred examples of such environment-resistant functional layer include a photocatalyst layer, an antifouling layer, a moisture-conditioning layer, a moisture-preventing layer, a water-resistant layer, a water-repellent layer, a hydrophilic layer, and an oil-repellent layer.

The thickness of the environment-resistant functional layer is preferably 0.1 to 100 µm, more preferably 1 to 100 µm. As long as the thickness of the environment-resistant functional layer falls within the range, the layer can express sufficient environment-resistant functionality without impairing the flame retardancy of the highly flame-retardant polymer member of the present invention.

### (3-1-1. Photocatalyst layer)

The photocatalyst layer contains a photocatalyst. Although the form of the photocatalyst may be any form, photocatalyst particles are preferred because photocatalyst performance can be sufficiently expressed.

The photocatalyst layer may be a layer formed only from the photocatalyst, or may be a layer formed from the photocatalyst and any appropriate component except the photocatalyst. Examples of the appropriate component except the photocatalyst include additives such as an inorganic binder and a dispersion stabilizer.

Examples of the photocatalyst particles include: metal oxides such as titanium oxide, zinc oxide, tin oxide, lead oxide, ferric oxide, dibismuth trioxide, tungsten trioxide, and strontium titanate; and products obtained by adding metals such as Fe, Co, Ni, Cu, Zn, Ru, Rh, Pd, Ag, Pt, and Au to the metal oxides. Of those, titanium oxide is preferred because it is non-hazardous, chemically stable, and inexpensive. Although any one of anatase type titanium oxide, rutile type titanium oxide, and brookite type titanium oxide can be used as the titanium oxide, titanium oxide that uses the anatase type titanium oxide highly active for a photocatalytic reaction as a main component is preferred.

The average particle diameter of the photocatalyst particles is preferably 0.005 to 0.1 µm, more preferably 0.01 to 0.1 µm. As long as the average particle diameter of the photocatalyst particles falls within the range, the transparency of the photocatalyst layer (L) can be secured and its photocatalytic activity can be retained at a high level.

The photocatalyst layer may be formed only of one layer, or may be formed of two or more layers.

The thickness of the photocatalyst layer is preferably 0.1 to 100 µm, more preferably 1 to 100 µm. As long as the thickness of the photocatalyst layer falls within the range, the layer can express sufficient photocatalytic activity without impairing the flame retardancy of the highly flame-retardant polymer member of the present invention.

The inorganic binder enhances adhesion between the photocatalyst particles and improves the strength of the layer based on the photocatalyst. Any appropriate inorganic compound can be adopted as the inorganic binder as long as the compound functions as a binder. The inorganic binder is preferably, for example, a silica compound. Tetra-, tri-, and bifunctional alkoxysilanes, and condensates and hydrolysates of these alkoxysilanes, a silicone varnish, and the like can each be used as the silica compound. The tri- and bifunctional alkoxysilanes are generally referred to as "silane coupling agents" in some cases. Specifically, examples of the tetrafunctional alkoxysilane include tetramethoxysilane, tetraethoxysilane, and tetrapropoxysilane, examples of the trifunctional alkoxysilane include methyltrimethoxysilane, methyltriethoxysilane, phenyltrimethoxysilane, phenyltriethoxysilane, vinyltrimethoxysilane, vinyltriethoxysilane, methacryloxypropyltrimethoxysilane, glycidopropoxytrimethoxysilane, glycidopropylmethyldiethoxysilane, aminopropyltriethoxysilane, aminoethylaminopropyltrimethoxysilane, and mercaptopropyltrimethoxysilane, and examples of the difunctional alkoxysilane include dimethyldimethoxysilane, dimethyldiethoxysilane, diphenyldimethoxysilane, and diphenyldiethoxysilane. Examples of the condensates of the alkoxysilanes include condensates of the tetrafunctional alkoxysilane such as Ethyl Silicate 40, Ethyl Silicate 48, and Methyl Silicate 51. Examples of the hydrolysates of the alkoxysilanes include products obtained by hydrolyzing the alkoxysilanes with an organic solvent, water, and a catalyst. Of those silica compounds, in particular, tetramethoxysilane, tetraethoxysilane, Ethyl Silicate 40, Ethyl Silicate 48, Methyl Silicate 51, and alcoholic silica sols as hydrolysis products thereof are particularly preferred because each of them can firmly fix the photocatalyst and is relatively inexpensive.

### (3-1-2. Antifouling layer)

Any appropriate layer can be adopted as the antifouling layer as long as an antifouling effect is obtained.

The antifouling layer is preferably, for example, a layer containing at least one kind selected from a fluorine-based resin and a silicone-based resin.

The fluorine-based resin is, for example, a fluorine-containingsilane compound (general formula (1)) described in Japanese Patent Application Laid-open No. Hei 09-258003. The number of kinds of the fluorine-based resins may be only one, or may be two or more.

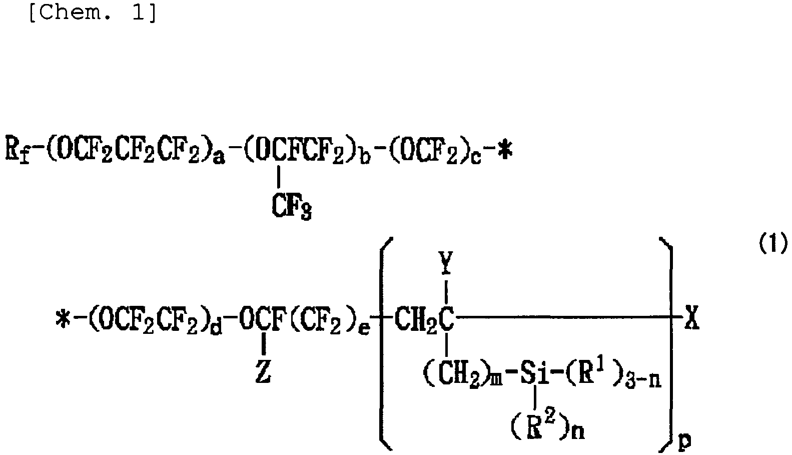

In the general formula (1), R_{f} represents a linear or branched perfluoroalkyl group having 1 to 16 carbon atoms, and preferred examples thereof include CF₃-, C₂F₅-, and C₃F₇-. X represents iodine or hydrogen. Y represents hydrogen or a lower alkyl group. R¹ represents a hydrolyzable group and preferred examples thereof include a halogen, -OR³, -OCOR³, -OC(R³)=C(R⁴)₂, -ON=C(R³)₂, and -ON=CR⁵ (provided that R³ represents an aliphatic hydrocarbon group or an aromatic hydrocarbon group, R⁴ represents hydrogen or a lower aliphatic hydrocarbon group, and R⁵ represents a divalent, aliphatic hydrocarbon group having 3 to 6 carbon atoms). More preferred examples of R¹ include chlorine, -OCH₃, and -OC₂H_{5.} R² represents hydrogen or an inert, monovalent organic group, preferably, for example, a monovalent hydrocarbon group having 1 to 4 carbon atoms. a, b, c, and d each represent an integer of 0 to 200, preferably 1 to 50. e represents 0 or 1. m and n each represent an integer of 0 to 2, preferably 0. p represents an integer of 1 or more, preferably an integer of 1 to 10.

The molecular weight of the fluorine-containing silane compound represented by the general formula (1) is preferably 5×10² to 1×10⁵, more preferably 5×10² to 1×10⁴.

A preferred structure of the fluorine-containing silane compound represented by the general formula (1) is, for example, a structure represented by a general formula (2). In the general formula (2), q represents an integer of 1 to 50, r represents an integer of 1 or more, preferably an integer of 1 to 10, and the other symbols are the same as those described in the general formula (1).

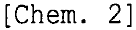

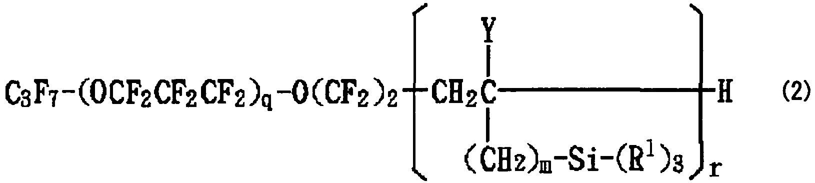

Examples of the silicone-based resin include a dimethylpolysiloxane, a methylhydropolysiloxane, a silicone oil or a silicone varnish, and a silicone-modified acrylic copolymer described in Japanese Patent Application Laid-open No. Hei 09-111185. The number of kinds of the silicone-based resins may be only one, or may be two or more.

The antifouling layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, andamountsof additives to be incorporated into the antifouling layer can be appropriately set depending on purposes.

The antifouling layer may be formed only of one layer, or may be formed of two or more layers.

The thickness of the antifouling layer is preferably 0.1 to 100 µm, more preferably 1 to 100 µm. As long as the thickness of the antifouling layer falls within the range, the layer can express extremely excellent antifouling property without impairing the flame retardancy of the highly flame-retardant polymer member of the present invention.

### (3-1-3. Moisture-conditioning layer)

Any appropriate layer can be adopted as the moisture-conditioning layer as long as a moisture-conditioning effect is obtained.

The moisture-conditioning layer preferably contains a porous substance. The content of the porous substance in the moisture-conditioning layer is preferably 50 to 100 wt%, more preferably 70 to 100 wt%, still more preferably 90 to 100 wt%, particularly preferably 95 to 100 wt%, most preferably substantially 100 wt%.

Any appropriate porous substance can be adopted as the porous substance. Examples of such porous substance include an inorganic oxide, a composite inorganic oxide, and porous carbon. Such porous substance is specifically, for example, at least one kind selected from silica, alumina, magnesia, titania, zirconia, a silica-alumina composite oxide, zeolite, and activated carbon.

The number of kinds of the porous substances in the moisture-conditioning layer may be only one, or may be two or more.

The moisture-conditioning layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the moisture-conditioning layer can be appropriately set depending on purposes.

The moisture-conditioning layer may be formed only of one layer, or may be formed of two or more layers.

The thickness of the moisture-conditioning layer is preferably 0.1 to 100 µm, more preferably 1 to 100 µm. As long as the thickness of the moisture-conditioning layer falls within the range, the layer can express extremely excellent moisture-conditioning property without impairing the flame retardancy of the highly flame-retardant polymer member of the present invention.

### (3-1-4. Moisture-preventing layer)

Any appropriate layer can be adopted as the moisture-preventing layer as long as a moisture-preventing effect is obtained.

The moisture-preventing layer preferably contains a resin having a moisture-preventing effect. Specifically, the moisture-preventing layer preferably contains at least one kind selected from a polyvinylidene chloride-based resin and a polyolefin-based resin. The content of the at least one kind selected from a polyvinylidene chloride-based resin and a polyolefin-based resin in the moisture-preventing layer is preferably 50 to 100 wt%, more preferably 70 to 100 wt%, still more preferably 90 to 100 wt%, particularly preferably 95 to 100 wt%, most preferably substantially 100 wt%.

Any appropriate polyvinylidene chloride-based resin can be adopted as the polyvinylidene chloride-based resin as long as the resin has a constituent unit derived from a polyvinylidene chloride. Specific examples of such polyvinylidene chloride-based resin include a polyvinylidene chloride, a modified body of the polyvinylidene chloride, and a copolymer of vinylidene chloride and any other copolymerizable monomer.

Any appropriate polyolefin-based resin can be adopted as the polyolefin-based resin as long as the resin has a constituent unit derived from an olefin. Specific examples of such polyolefin-based resin include a polyethylene, a copolymer of ethylene and any other copolymerizable monomer, a polypropylene, and a copolymer of propylene and any other copolymerizable monomer.

The number of kinds of the resins each having a moisture-preventing effect in the moisture-preventing layer may be only one, or may be two or more.

The moisture-preventing layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the moisture-preventing layer can be appropriately set depending on purposes.

The moisture-preventing layer may be formed only of one layer, or may be formed of two or more layers.

The thickness of the moisture-preventing layer is preferably 0.1 to 100 µm, more preferably 1 to 100 µm. As long as the thickness of the moisture-preventing layer falls within the range, the layer can express extremely excellent moisture-preventing property without impairing the flame retardancy of the highly flame-retardant polymer member of the present invention.

The moisture-preventing layer may be a layer formed from any appropriate moisture-preventing paint.

### (3-1-5. Water-resistant layer)

Any appropriate layer can be adopted as the water-resistant layer as long as a water-resistant effect is obtained.

The water-resistant layer preferably contains a water-resistant resin. The content of the water-resistant resin in the water-resistant layer is preferably 50 to 100 wt%, more preferably 70 to 100 wt%, still more preferably 90 to 100 wt%, particularly preferably 95 to 100 wt%, most preferably substantially 100 wt%.

Any appropriate water-resistant resin can be adopted as the water-resistant resin. Such water-resistant resin is, for example, at least one kind selected from an epoxy-based resin, a phenol-based resin, a silicone-based resin, and a fluorine-based resin.

The epoxy-based resin is, for example, a cross-linked resin obtained by cross-linking an epoxy group present in an epoxy group-containing monomer or in an epoxy group-containing prepolymer with a curing agent (such as a photopolymerization initiator or a thermal polymerization initiator). Specific examples of the epoxy-based resin include a bisphenol A type epoxy resin, a bisphenol F type epoxy resin, a cresol novolac type epoxy resin, an alicyclic epoxy resin, and a phenol novolac type epoxy resin.

The phenol-based resin is, for example, a cured resin synthesized in the presence of a catalyst by using a phenol (such as phenol or cresol) and formaldehyde as a raw material. Specific examples of the phenol-based resin include a novolac type phenol resin and a resol type phenol resin.

The silicone-based resin is, for example, a resin having a main skeleton having a siloxane bond. Specific examples of the silicone-based resin include a dimethylpolysiloxane, a methylhydropolysiloxane, a silicone oil, a silicone varnish, and a silicone-modified acrylic copolymer described in Japanese Patent Application Laid-open No. Hei 09-111185.

Examples of the fluorine-based resin include a resin obtained by polymerizing an olefin containing fluorine. Specific examples of the fluorine-based resin include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The number of kinds of the water-resistant resins in the water-resistant layer may be only one, or may be two or more.

The water-resistant layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. Thekinds, number, andamountsofadditives that can be incorporated into the water-resistant layer can be appropriately set depending on purposes.

The water-resistant layer may be formed only of one layer, or may be formed of two or more layers.

The thickness of the water-resistant layer is preferably 0.1 to 100 µm, more preferably 1 to 100 µm. As long as the thickness of the water-resistant layer falls within the range, the layer can express extremely excellent water resistance without impairing the flame retardancy of the highly flame-retardant polymer member of the present invention, and its surface hardly deteriorates even when exposed to moisture.

### (3-1-6. Water-repellent layer)

Any appropriate layer can be adopted as the water-repellent layer as long as a water-repellent effect is obtained.

The water-repellent layer preferably contains a water-repellent compound. The content of the water-repellent compound in the water-repellent layer is preferably 1 to 100 wt%, more preferably 2 to 100 wt%, still more preferably 3 to 100 wt%.

Any appropriate water-repellent compound can be adopted as the water-repellent compound. Such water-repellent compound is for example, at least one kind selected from a silicone-based compound and a fluorine-based compound.

The silicone-based compound is, for example, a silicone-based compound that can be used as a water-repellent agent. Such silicone-based compound is, for example, a resin having a main skeleton having a siloxane bond. Specific examples of the silicone-based compound include a dimethylpolysiloxane, a methylhydropolysiloxane, a silicone oil, a silicone varnish, and a silicone-modified acrylic copolymer described in Japanese Patent Application Laid-open No. Hei 09-111185.

The fluorine-based compound is, for example, a fluorine-based compound that can be used as a water-repellent agent. Examples of such fluorine-based compound include a compound having a fluorine-containing chain and a resin obtained by polymerizing an olefin containing fluorine. Specific examples of the fluorine-based compound include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The number of kinds of the water-repellent compound in the water-repellent layer may be only one, or may be two or more.

The water-repellent layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the water-repellent layer can be appropriately set depending on purposes.

The water-repellent layer may be formed only of one layer, or may be formed of two or more layers.

The thickness of the water-repellent layer is preferably 0.1 to 100 µm, more preferably 1 to 100 µm. As long as the thickness of the water-repellent layer falls within the range, the layer can express extremely excellent water repellency without impairing the flame retardancy of the highly flame-retardant polymer member of the present invention, and when its surface is stained with a contaminant, the contaminant can be easily removed with water.

### (3-1-7. Hydrophilic layer)

Any appropriate layer can be adopted as the hydrophilic layer as long as a hydrophilic effect is obtained.

The hydrophilic layer preferably contains at least one kind selected from a hydrophilic inorganic compound and a hydrophilic resin. The number of kinds of the hydrophilic inorganic compounds may be only one, or may be two or more. The number of kinds of the hydrophilic resins may be only one, or may be two or more.

When the hydrophilic layer contains the hydrophilic inorganic compound, the content of the hydrophilic inorganic compound in the hydrophilic layer is preferably 1 to 100 wt%, more preferably 2 to 100 wt%, still more preferably 3 to 100 wt%.

When the hydrophilic layer contains the hydrophilic resin, the content of the hydrophilic resin in the hydrophilic layer is preferably 1 to 100 wt%, more preferably 2 to 100 wt%, still more preferably 3 to 100 wt%.

Any appropriate hydrophilic inorganic compound can be adopted as the hydrophilic inorganic compound. Such hydrophilic inorganic compound is, for example, at least one kind selected from titanium oxide, silica, and alumina.

Any appropriate hydrophilic resin can be adopted as the hydrophilic resin. Examples of such hydrophilic resin include at least one kind selected from: cationic polymers obtained from vinyl monomers each containing a cationic group such as an amino group, an ammonium group, a pyridyl group, an imino group, or a betaine structure; nonionic polymers obtained from vinyl monomers each containing a hydrophilic nonionic group such as a hydroxy group, an amide group, an ester group, or an ether group; and anionic polymers obtained from vinyl monomers each containing an anionic group such as a carboxyl group, a sulfonic acid group, or a phosphoric acid group.

Examples of the vinyl monomer containing a cationic group include the following monomers: a (meth)acrylic acid ester or (meth) acrylamide having a dialkylamino group having 2 to 44 carbon atoms, such as dimethylaminoethyl (meth)acrylate, diethylaminoethyl (meth)acrylate, dipropylaminoethyl (meth)acrylate, diisopropylaminoethyl (meth)acrylate, dibutylaminoethyl (meth)acrylate, diisobutylaminoethyl (meth)acrylate, di(t-butyl)aminoethyl (meth)acrylate, dimethylaminopropyl(meth)acrylamide, diethylaminopropyl(meth)acrylamide, dipropylaminopropyl(meth)acrylamide, diisopropylaminopropyl(meth)acrylamide, dibutylaminopropyl(meth)acrylamide, diisobutylaminopropyl(meth)acrylamide, or di(t-butyl)aminopropyl(meth)acrylamide; styrene having a dialkylamino group having 2 to 44 carbon atoms, such as dimethylaminostyrene or dimethylaminomethylstyrene; vinylpyridine such as 2- or 4-vinylpyridine; an N-vinyl heterocyclic compound such as N-vinylimidazole; a vinyl ether such as aminoethyl vinyl ether or dimethylaminoethyl vinyl ether; acid-neutralized products of those monomers each having an amino group or products obtained by quaternarizing those monomers each having an amino group with alkyl (having 1 to 22 carbon atoms) halides, benzyl halides, alkyl (having 1 to 18 carbon atoms) or aryl (having 6 to 24 carbon atoms) sulfonic acids, or dialkyl (having 2 to 8 carbon atoms in total) sulfates; diallyl type quaternary ammonium salts such as dimethyldiallylammonium chloride and diethyldiallylammonium chloride; and vinyl monomers each having a betaine structure such as N-(3-sulfopropyl)-N-(meth)acryloyloxyethyl-N,N-dimethylammoniu m betaine, N-(3-sulfopropyl)-N-(meth)acryloylamidepropyl-N,N-dimethylammo nium betaine, N-(3-carboxymethyl)-N-(meth)acryloylamidepropyl-N,N-dimethylam monium betaine, and N-carboxymethyl-N-(meth)acryloyloxyethyl-N,N-dimethylammonium betaine.

Examples of the vinyl monomer containing a nonionic group include: vinyl alcohol; a (meth)acrylic acid ester or (meth) acrylamide having a hydroxyalkyl (having 1 to 8 carbon atoms) group, such as N-hydroxypropyl(meth)acrylamide, N-hydroxyethyl (meth)acrylate, or N-hydroxypropyl(meth)acrylamide; a (meth)acrylic acid ester of a polyhydric alcohol, such as polyethylene glycol (meth)acrylate (having a degree of polymerization of ethylene glycol of 1 to 30); (meth)acrylamide; an alkyl (having 1 to 8 carbon atoms) (meth)acrylamide such as N-methyl(meth)acrylamide, N-n-propyl(meth)acrylamide, N-isopropyl(meth)acrylamide, N-t-butyl(meth)acrylamide, or N-isobutyl (meth) acrylamide; a dialkyl (having 2 to 8 carbon atoms in total) (meth)acrylamide such as N,N-dimethyl(meth)acrylamide, N,N-diethyl(meth)acrylamide, N,N-dimethylacrylamide, or N,N-diethylacrylamide; diacetone (meth)acrylamide; an N-vinyl cyclic amide such as N-vinylpyrrolidone; a (meth) acrylic acid ester having an alkyl (having 1 to 8 carbon atoms) group such as methyl (meth)acrylate, ethyl (meth)acrylate, or n-butyl (meth)acrylate; and a (meth)acrylamide having a cyclic amide group such as N-(meth)acryloylmorpholine.

Examples of the vinyl monomer containing an anionic group include: carboxylic acid monomers each having a polymerizable unsaturated group such as (meth)acrylic acid, maleic acid, or itaconic acid and/or acid anhydrides thereof (in the case where two or more carboxyl groups are present in one monomer); sulfonic acid monomers each having a polymerizable unsaturated group such as styrenesulfonic acid and 2-(meth)acrylamide-2-alkyl (having 1 to 4 carbon atoms) propanesulfonic acid; vinylphosphonic acid; and phosphoric acid monomers each having a polymerizable unsaturated group such as a (meth) acryloyloxyalkyl (having 1 to 4 carbon atoms) phosphoric acid.

The hydrophilic layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the hydrophilic layer can be appropriately set depending on purposes.

The hydrophilic layer may be formed only of one layer, or may be formed of two or more layers.

The thickness of the hydrophilic layer is preferably 0.1 to 100 µm, more preferably 1 to 100 µm. As long as the thickness of the hydrophilic layer falls within the range, the layer can express extremely excellent hydrophilic property withoutimpairing the flame retardancy of the highly flame-retardant polymer member of the present invention, and when its surface is stained with a contaminant, the contaminant can be easily washed out.

### (3-1-8. Oil-repellent layer)

Any appropriate layer can be adopted as the oil-repellent layer as long as an oil-repellent effect is obtained.

The oil-repellent layer preferably contains an oil-repellent compound. The content of the oil-repellent compound in the oil-repellent layer is preferably 1 to 100 wt%, more preferably 2 to 100 wt%, still more preferably 3 to 100 wt%.

Any appropriate oil-repellent compound can be adopted as the oil-repellent compound. Such oil-repellent compound is, for example, at least one kind selected from a fluorine-based resin and a fluorine-containing silane compound.

The fluorine-based resin is, for example, a fluorine-based resin that can be used as an oil-repellent agent. Examples of such fluorine-based resin include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The fluorine-containing silane compound is, for example, a fluorine-containing silane compound that can be used as an oil-repellent agent. Such fluorine-containing silane compound is, for example, such a fluorine-containing silane compound described in Japanese Patent Application Laid-open No. Hei 09-258003 as represented by the general formula (1). In the general formula (1), R_{f} represents a linear or branched perfluoroalkyl group having 1 to 16 carbon atoms, and preferred examples thereof include CF₃-, C₂F₅-, and C₃F₇-. X represents iodine or hydrogen. Y represents hydrogen or a lower alkyl group. R¹ represents a hydrolyzable group and preferred examples thereof include a halogen, -OR³, -OCOR³, -OC(R³)=C(R⁴)₂, -ON=C(R³)₂, and -ON=CR⁵ (provided that R³ represents an aliphatic hydrocarbon group or an aromatic hydrocarbon group, R⁴ represents hydrogen or a lower aliphatic hydrocarbon group, and R⁵ represents a divalent, aliphatic hydrocarbon group having 3 to 6 carbon atoms). More preferred examples of R¹ include chlorine, -OCH₃, and -OC₂H₅. R² represents hydrogen or an inert, monovalent organic group, preferably, for example, a monovalent hydrocarbon group having 1 to 4 carbon atoms. a, b, c, and d each represent an integer of 0 to 200, preferably 1 to 50. e represents 0 or 1. m and n each represent an integer of 0 to 2, preferably 0. p represents an integer of 1 or more, preferably an integer of 1 to 10. The molecular weight of the fluorine-containing silane compound represented by the general formula (1) is preferably 5×10² to 1×10⁵, more preferably 5×10² to 1×10⁴. A preferred structure of the fluorine-containing silane compound represented by the general formula (1) is, for example, a structure represented by a general formula (2). In the general formula (2), q represents an integer of 1 to 50, r represents an integer of 1 or more, preferably an integer of 1 to 10, and the other symbols are the same as those described in the general formula (1).

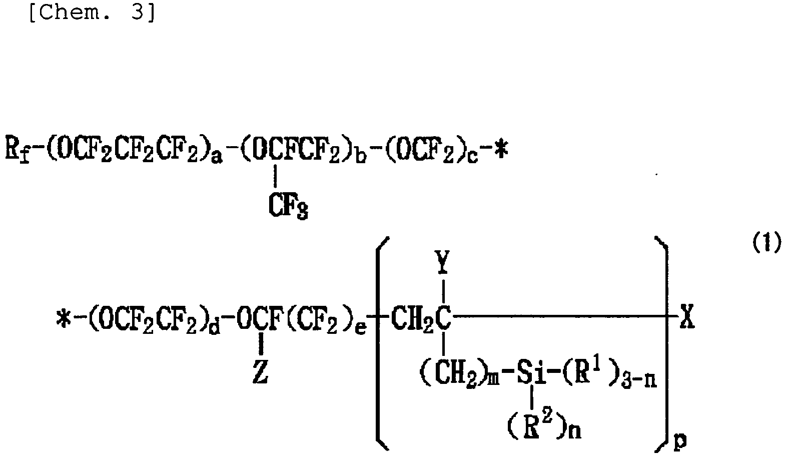

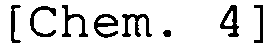

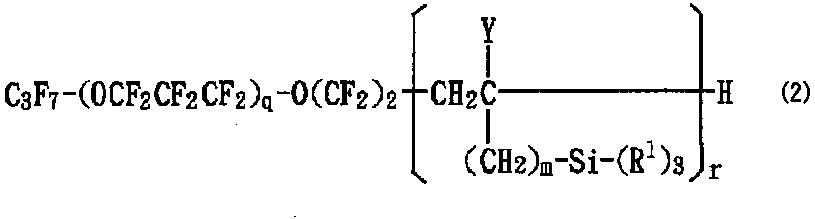

The number of kinds of the oil-repellent compound in the oil-repellent layer may be only one, or may be two or more.

The oil-repellent layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the oil-repellent layer can be appropriately set depending on purposes.

The oil-repellent layer may be formed only of one layer, or may be formed of two or more layers.

The thickness of the oil-repellent layer is preferably 0.1 to 100 µm, more preferably 1 to 100 µm. As long as the thickness of the oil-repellent layer falls within the range, the layer can express extremely excellent oil-repellent property without impairing the flame retardancy of the highly flame-retardant polymer member of the present invention, and when its surface is stained with an oily contaminant, the oily contaminant can be easily removed.

### <3-2. Hygienic functional layer>

Any appropriate layer can be adopted as the hygienic functional layer as long as the layer can express hygienic functionality. Preferred examples of such hygienic functional layer include an antibacterial layer, an antifungal layer, and a deodorant layer.

The thickness of the hygienic functional layer is preferably 0.1 to 100 µm, more preferably 1 to 100 µm. As long as the thickness of the hygienic functional layer falls within the range, the layer can express sufficient hygienic functionality without impairing the flame retardancy of the highly flame-retardant polymer member of the present invention.

### (3-2-1. Antibacterial layer)

Any appropriate layer can be adopted as the antibacterial layer as long as an antibacterial effect is obtained.

The antibacterial layer preferably contains an antibacterial agent. Any appropriate antibacterial agent can be adopted as the antibacterial agent. The content of the antibacterial agent in the antibacterial layer is preferably 0.05 to 20 wt%, more preferably 0.1 to 15 wt%, still more preferably 0.5 to 10 wt%. As long as the content of the antibacterial agent in the antibacterial layer falls within the range, the layer can express extremely excellent antibacterial property without impairing the flame retardancy of the highly flame-retardant polymer member of the present invention.

The antibacterial agent is preferably such that a metal component is carried on an inorganic powder. The carrying amount of the metal component is preferably 0.1 to 30 wt%, more preferably 0. 5 to 20 wt%, still more preferably 1 to 10 wt% in terms of a content in the antibacterial agent. As long as the carrying amount of the metal component falls within the range, the antibacterial layer can express extremely excellent antibacterial property without impairing the flame retardancy of the highly flame-retardant polymer member of the present invention.

Any appropriate inorganic powder can be adopted as the inorganic powder. The inorganic powder is preferably at least one kind selected from zeolite, silica gel, titanium oxide, and aluminum oxide.

Any appropriate metal component can be adopted as the metal component. The metal component is preferably at least one kind selected from silver, copper, zinc, tin, bismuth, cadmium, chromium, and mercury.

The antibacterial layer is more preferably a resin composition containing an antibacterial agent. A resin in such resin composition is, for example: a thermosetting resin such as a phenol-based resin, a urea-based resin, a melamine-based resin, an alkyd-based resin, a diallyl phthalate-based resin, an epoxy-based resin, a polyurethane-based resin, or a silicon-based resin; a resin such as a polyvinyl chloride-based resin, a polyvinylidene chloride-based resin, a fluorine-based resin, a polyvinyl fluoride-based resin, a polyvinylidene fluoride-based resin, a polyvinyl acetate-based resin, a polyvinyl alcohol-based resin, a polyvinyl formal-based resin, a saturated polyester-based resin, a polyethylene-based resin, a polypropylene-based resin, a polystyrene-based resin, an ABS-based resin, an acrylic resin, a polyamide-based resin, a polyacetal-based resin, a chlorinated polyether-based resin, a polycarbonate-based resin, a polyarylate-based resin, an ethylcellulose, a cellulose acetate, or a cellulose nitrate; or an elastomer or rubber such as a natural rubber, an isoprene-based rubber, an acrylonitrile-based rubber, an acrylic rubber, a butadiene-based rubber, a butyl-based rubber, a styrene-based rubber, a chloroprene-based rubber, a chlorohydrin-based rubber, a polyolefin-based rubber, a urethane-based rubber, a polysulfide rubber, a silicone-based rubber, a fluorine-based rubber, or a fluorosilicone-based rubber.

The antibacterial layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the antibacterial layer can be appropriately set depending on purposes.

The antibacterial layer may be formed only of one layer, or may be formed of two or more layers.

The thickness of the antibacterial layer is preferably 0.1 to 100 µm, more preferably 1 to 100 µm. As long as the thickness of the antibacterial layer falls within the range, the layer can express extremely excellent antibacterial property without impairing the flame retardancy of the highly flame-retardant polymer member of the present invention.

### (3-2-2. Antifungal layer)

Any appropriate layer can be adopted as the antifungal layer as long as an antifungal effect is obtained.

The antifungal layer preferably contains an antifungal agent. Any appropriate antifungal agent can be adopted as the antifungal agent. The content of the antifungal agent in the antifungal layer is preferably 0.05 to 20 wt%, more preferably 0.1 to 15 wt%, still more preferably 0.5 to 10 wt%. As long as the content of the antifungal agent in the antifungal layer falls within the range, the layer can express extremely excellent antifungal property without impairing the flame retardancy of the highly flame-retardant polymer member of the present invention.

The antifungal agent is preferably at least one kind selected from an organic antifungal agent and an inorganic antifungal agent.

Any appropriate organic antifungal agent can be adopted as the organic antifungal agent. The organic antifungal agent is preferably at least one kind selected from a thiocarbamate-based compound, a dithiocarbamate-based compound, an allylamine-based compound, an imidazole-based compound, a triazole-based compound, a thiazolone-based compound, a tropolone-based compound, and an organic acid-based compound. Examples of the thiocarbamate-based compound and the dithiocarbamate-based compound include tolnaftate, tolciclate, thiram (tetramethylthiuram disulfide), ferbam, ziram, zineb, maneb, and polycarbamate. Examples of the allylamine-based compound include butenafine. Examples of the imidazole-based compound include imidazole compounds each having a substituent (such as benzimidazole having a thiazolyl group, benzimidazole having a thiazolinyl group, and benzimidazole having a thiadiazolinyl group), clotrimazole, econazole, miconazole, tioconazole, bifonazole, sulconazole, croconazole, isoconazole, oxiconazole, and ketoconazole. Examples of the triazole-based compound include fluconazole. Examples of the thiazolone-based compound include 1,2-benzisothiazolin-3-one. Examples of the tropolone-based compound include hinokitiol. Examples of the organic acid-based compound include dehydroacetic acid, sorbic acid, propionic acid, and aromatic carboxylic acids (such as benzoic acid and a pyridonecarboxylic acid-based compound).

Any appropriate inorganic antifungal agent can be adopted as the inorganic antifungal agent. The inorganic antifungal agent is preferably at least one kind selected from a metal ion-based antifungal agent obtained by causing an inorganic compound to carry a metal ion, and a photocatalyst. Examples of the metal ion include silver, copper, and zinc. Examples of the inorganic compound include: silicic acid salts such as zeolite and silica gel; and phosphoric acid salts such as apatite.

The antifungal layer is more preferably a resin composition containing an antifungal agent. A resin in such resin composition is, for example: a thermosetting resin such as a phenol-based resin, a urea-based resin, a melamine-based resin, an alkyd-based resin, a diallyl phthalate-based resin, an epoxy-based resin, a polyurethane-based resin, or a silicon-based resin; a resin such as a polyvinyl chloride-based resin, a polyvinylidene chloride-based resin, a fluorine-based resin, a polyvinyl fluoride-based resin, a polyvinylidene fluoride-based resin, a poly vinyl acetate-based resin, a polyvinyl alcohol-based resin, a polyvinyl formal-based resin, a saturated polyester-based resin, a polyethylene-based resin, a polypropylene-based resin, a polystyrene-based resin, an ABS-based resin, an acrylic resin, a polyamide-based resin, a polyacetal-based resin, a chlorinated polyether-based resin, a polycarbonate-based resin, a polyarylate-based resin, ethylcellulose, cellulose acetate, or cellulose nitrate; or an elastomer or rubber such as a natural rubber, an isoprene-based rubber, an acrylonitrile-based rubber, an acrylic rubber, a butadiene-based rubber, a butyl-based rubber, a styrene-based rubber, a chloroprene-based rubber, a chlorohydrin-based rubber, a polyolefin-based rubber, a urethane-based rubber, a polysulfide rubber, a silicone-based rubber, a fluorine-based rubber, or a fluorosilicone-based rubber.

The antifungal layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives that can be incorporated into the antifungal layer can be appropriately set depending on purposes.

The antifungal layer may be formed only of one layer, or may be formed of two or more layers.

The thickness of the antifungal layer is preferably 0.1 to 100 µm, more preferably 1 to 100 µm. As long as the thickness of the antifungal layer falls within the range, the layer can express extremely excellent antifungal property without impairing the flame retardancy of the highly flame-retardant polymer member of the present invention.

### (3-2-3. Deodorant layer)

Any appropriate layer can be adopted as the deodorant layer as long as a deodorant effect is obtained.

The deodorant layer preferably contains a deodorant. Any appropriate deodorant can be adopted as the deodorant. The content of the deodorant in the deodorant layer is preferably 0.01 to 20 wt%, more preferably 0.1 to 15 wt%, still more preferably 0.5 to 10 wt%. As long as the content of the deodorant in the deodorant layer falls within the range, the layer can express extremely excellent deodorant property without impairing the flame retardancy of the highly flame-retardant polymer member of the present invention.

The deodorant is preferably such that a metal component is carried on an inorganic powder. The carrying amount of the metal component is preferably 0.1 to 30 wt%, more preferably 0.5 to 20 wt%, still more preferably 1 to 20 wt% in terms of a content in the deodorant. As long as the carrying amount of the metal component falls within the range, the deodorant layer can express extremely excellent deodorant property without impairing the flame retardancy of the highly flame-retardant polymer member of the present invention.

Any appropriate inorganic powder can be adopted as the inorganic powder. The inorganic powder is preferably at least one kind selected from zeolite, silica gel, titanium oxide, aluminum oxide, and activated carbon.

Any appropriate metal component can be adopted as the metal component. The metal component is preferably at least one kind selected from silver, copper, zinc, tin, bismuth, cadmium, chromium, and mercury.

The deodorant layer may contain a resin. Examples of such resin include: a thermosetting resin such as a phenol-based resin, a urea-based resin, a melamine-based resin, an alkyd-based resin, a diallyl phthalate-based resin, an epoxy-based resin, a polyurethane-based resin, or a silicon-based resin; a resin such as a polyvinyl chloride-based resin, a polyvinylidene chloride-based resin, a fluorine-based resin, a polyvinyl fluoride-based resin, a polyvinylidene fluoride-based resin, a polyvinyl acetate-based resin, a polyvinyl alcohol-based resin, a polyvinyl formal-based resin, a saturated polyester-based resin, a polyethylene-based resin, a polypropylene-based resin, a polystyrene-based resin, anABS-based resin, an acrylic resin, a polyamide-based resin, a polyacetal-based resin, a chlorinated polyether-based resin, a polycarbonate-based resin, a polyarylate-based resin, an ethylcellulose, a cellulose acetate, or a cellulose nitrate; and an elastomer or rubber such as a natural rubber, an isoprene-based rubber, an acrylonitrile-based rubber, an acrylic rubber, a butadiene-based rubber, a butyl-based rubber, a styrene-based rubber, a chloroprene-based rubber, a chlorohydrin-based rubber, a polyolefin-based rubber, a urethane-based rubber, a polysulfide rubber, a silicone-based rubber, a fluorine-based rubber, or a fluorosilicone-based rubber.

The deodorant layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives that can be incorporated into the deodorant layer can be appropriately set depending on purposes.

The deodorant layer may be formed only of one layer, or may be formed of two or more layers.

The thickness of the deodorant layer is preferably 0.1 to 100 µm, more preferably 1 to 100 µm. As long as the thickness of the deodorant layer falls within the range, the layer can express extremely excellent deodorant property without impairing the flame retardancy of the highly flame-retardant polymer member of the present invention.

### <3-3. Production of environment-resistant functional layer or hygienic functional layer>

The environment-resistant functional layer or the hygienic functional layer can be produced by any appropriate method. Preferred examples of the method of producing the environment-resistant functional layer or the hygienic functional layer include: a method involving forming the environment-resistant functional layer or the hygienic functional layer on the flame-retardant layer (**A**); and a method involving transferring the environment-resistant functional layer or the hygienic functional layer formed on any appropriate base material onto the flame-retardant layer (**A**). In addition, the environment-resistant functional layer or the hygienic functional layer may be formed by using any appropriate paint.

The production of the environment-resistant functional layer or the hygienic functional layer can be performed at any appropriate timing.

### (3-3-1. Production of photocatalyst layer)

The photocatalyst layer can be produced by any appropriate method. The photocatalyst layer can be preferably produced by applying a photocatalyst coating liquid containing the photocatalyst and drying the liquid as required. The photocatalyst coating liquid can be prepared by mixing the photocatalyst and any appropriate solvent. The photocatalyst is preferably photocatalyst particles. The solvent is preferably, for example, an organic solvent or water. Only one kind of solvent may be used as the solvent, or a mixed solvent of two or more kinds of solvents may be used as the solvent. When the photocatalyst and the solvent are mixed, the photocatalyst may be mixed in a powder state, or may be mixed in a slurry state or a sol state.

When the photocatalyst particles are used, a dispersion stabilizer may be caused to co-exist in the photocatalyst coating liquid in order that a change in particle diameter and sedimentation due to the aggregation of the photocatalyst particles may be prevented. The dispersion stabilizer may be caused to co-exist at the time of the preparation of the photocatalyst particles, or may be added upon preparation of the photocatalyst coating liquid.

Any appropriate dispersion stabilizer can be used as the dispersion stabilizer. For example, titanium oxide is liable to aggregate at a circumneutral pH and hence an acidic or alkaline dispersion stabilizer is preferred.

Examples of the acidic dispersion stabilizer include: mineral acids such as nitric acid and hydrochloric acid; carboxylic acids such as acetic acid, oxalic acid, glycolic acid, lactic acid, tartaric acid, malic acid, and citric acid; oxycarboxylic acids; and polycarboxylic acids. Examples of the alkaline dispersion stabilizer include: alkali metal salts of carboxylic acids, polycarboxylic acids, and the like; ammonia; primary to quaternary amines; and alkanolamines each obtained by adding a hydroxy group to an amine.

The photocatalyst coating liquid may contain an inorganic binder. The inorganic binder enhances adhesion between the photocatalyst particles and improves the strength of the layer based on the photocatalyst. Any appropriate inorganic compound can be adopted as the inorganic binder as long as the compound functions as a binder.

The photocatalyst coating liquid may contain any appropriate other additive depending on purposes and necessity. Such other additive is, for example, a thickener. The thickener is, for example, a water-soluble polymer.

Any appropriate content can be adopted as each of the content of the photocatalyst in the photocatalyst coating liquid and the content of any other component (such as the inorganic binder) therein as long as the photocatalyst layer to be obtained can express photocatalytic performance.

Any appropriate means can be adopted as means for applying the photocatalyst coating liquid. Examples of such means include gravure coating, spray coating, and dip coating.

After the application of the photocatalyst coating liquid containing the photocatalyst, the applied product can be dried as required. A heating temperature for the drying is preferably 80 to 180°C. A heating time for the drying is preferably 10 seconds to 10 minutes.

After the performance of the drying, aging may be performed for a necessary time period. The aging can improve the peel strength of the coating film.

### (3-3-2. Production of antifouling layer)

The antifouling layer can be produced by any appropriate method. The antifouling layer can be preferably produced by: applying a resin composition (such as a resin composition containing at least one kind of resin selected from a fluorine-based resin and a silicone-based resin) as a formation material; and drying the composition as required. Any appropriate solvent may be added as required upon application of the resin composition as a formation material.

Any appropriate means can be adopted as means for applying the resin composition. Examples of such means include gravure coating, spray coating, and dip coating.

When the resin composition is dried after its application, a heating temperature for the drying is preferably 30 to 180°C, more preferably 50 to 150°C. A heating time for the drying is preferably 10 seconds to 10 minutes.

After the application of the resin composition, the antifouling layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the antifouling layer may be aged for a necessary time period. The aging can improve the peel strength of the coating film.

### (3-3-3. Production of moisture-conditioning layer)

The moisture-conditioning layer can be produced by any appropriate method. The moisture-conditioning layer can be produced by, for example, applying a moisture-conditioning paint essentially containing a porous substance and drying the paint as required. Any appropriate solvent may be added as required upon application of the moisture-conditioning paint. Examples of the method involving applying the moisture-conditioning paint to form the moisture-conditioning layer on the flame-retardant layer (**A**) include: a method involving directly applying the moisture-conditioning paint onto the flame-retardant layer (**A**) to form the moisture-conditioning layer; and a method involving transferring the moisture-conditioning layer, which has been formed by applying the moisture-conditioning paint onto any appropriate base material, onto the flame-retardant layer (**A**).

Any appropriate means can be adopted as means for applying the moisture-conditioning paint. Examples of such means include gravure coating, spray coating, and dip coating.

When the moisture-conditioning paint is dried after its application, a heating temperature for the drying is preferably 30 to 180°C, more preferably 50 to 150°C. A heating time for the drying is preferably 10 seconds to 10 minutes.

### (3-3-4. Production of moisture-preventing layer)

The moisture-preventing layer can be produced by any appropriate method. The moisture-preventing layer can be produced by, for example, applying a moisture-preventing paint essentially containing a resin having a moisture-preventing effect and drying the paint as required. Any appropriate solvent may be added as required upon application of the moisture-preventing paint. Examples of the method involving applying the moisture-preventing paint to form the moisture-preventing layer on the flame-retardant layer (**A**) include: a method involving directly applying the moisture-preventing paint onto the flame-retardant layer (**A**) to form the moisture-preventing layer; and a method involving transferring the moisture-preventing layer, which has been formed by applying the moisture-preventing paint onto any appropriate base material, onto the flame-retardant layer (**A**).

Any appropriate means can be adopted as means for applying the moisture-preventing paint. Examples of such means include gravure coating, spray coating, and dip coating.

When the moisture-preventing paint is dried after its application, a heating temperature for the drying is preferably 30 to 180°C, more preferably 50 to 150°C. A heating time for the drying is preferably 10 seconds to 10 minutes.

### (3-3-5. Production of water-resistant layer)

The water-resistant layer can be produced by any appropriate method. Examples of the method of producing the water-resistant layer include: a method involving forming the water-resistant resin on the flame-retardant layer (**A**) ; and a method involving transferring the water-resistant resin formed on any appropriate base material onto the flame-retardant layer (**A**). In addition, the water-resistant layer may be formed by using any appropriate water-resistant paint.

### (3-3-6. Production of water-repellent layer)

The water-repellent layer can be produced by any appropriate method. Examples of the method of producing the water-repellent layer include: a method involving forming the water-repellent layer containing the water-repellent compound on the flame-retardant layer (**A**) ; and a method involving transferring the water-repellent layer containing the water-repellent compound and formed on any appropriate base material onto the flame-retardant layer (**A**). In addition, the water-repellent layer may be formed by using any appropriate water-repellent paint.

### (3-3-7. Production of hydrophilic layer)

The hydrophilic layer can be produced by any appropriate method. Examples of the method of producing the hydrophilic layer include: a method involving forming the hydrophilic layer containing the hydrophilic inorganic compound and/or the hydrophillic resin on the flame-retardant layer (**A**) ; and a method involving transferring the hydrophilic layer containing the hydrophilic inorganic compound and/or the hydrophillic resin and formed on any appropriate base material onto the flame-retardant layer (**A**). In addition, the hydrophilic layer may be formed by using any appropriate hydrophilic paint.

### (3-3-8. Production of oil-repellent layer)

The oil-repellent layer can be produced by any appropriate method. Examples of the method of producing the oil-repellent layer include: a method involving forming the oil-repellent layer containing the oil-repellent compound on the flame-retardant layer (**A**); and a method involving transferring the oil-repellent layer containing the oil-repellent compound and formed on any appropriate base material onto the flame-retardant layer (**A**). In addition, the oil-repellent layer may be formed by using any appropriate oil-repellent paint.

### (3-3-9. Production of antibacterial layer)

The antibacterial layer can be produced by any appropriate method. The antibacterial layer can be preferably produced by: applying a resin composition (such as a resin composition containing an antibacterial agent) as a formation material; and drying the composition as required. Any appropriate solvent may be added as required upon application of the resin composition as a formation material.

Any appropriate means can be adopted as means for applying the resin composition. Examples of such means include gravure coating, spray coating, and dip coating.

When the resin composition is dried after its application, a heating temperature for the drying is preferably room temperature to 150°C, more preferably 40 to 100°C. A heating time for the drying is preferably 10 seconds to 10 minutes.

After the application of the resin composition, the antibacterial layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the antibacterial layer may be aged for a necessary time period. The aging can improve the peel strength of the coating film.

### (3-3-10. Production of antifungal layer)

The antifungal layer can be produced by any appropriate method. The antifungal layer can be preferably produced by: applying a resin composition (such as a resin composition containing an antifungal agent) as a formation material; and drying the composition as required. Any appropriate solvent may be added as required upon application of the resin composition as a formation material.

Any appropriate means can be adopted as means for applying the resin composition. Examples of such means include gravure coating, spray coating, and dip coating.

When the resin composition is dried after its application, a heating temperature for the drying is preferably room temperature to 150°C, more preferably 40 to 100°C. A heating time for the drying is preferably 10 seconds to 10 minutes.

After the application of the resin composition, the antifungal layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the antifungal layer may be aged for a necessary time period. The aging can improve the peel strength of the coating film.

### (3-3-11. Production of deodorant layer)

The deodorant layer can be produced by any appropriate method. Examples of the method of producing the deodorant layer include: a method involving coating the top of the flame-retardant layer (**A**) with a material for the deodorant layer to form the layer; and a method involving depositing the material for the deodorant layer from the vapor (e.g., vacuum deposition) onto the flame-retardant layer (**A**) to form the layer. In addition, the deodorant layer may be formed on the flame-retardant layer (**A**) by laminating the deodorant layer on the flame-retardant layer (**A**). Further, the deodorant layer may be formed on the flame-retardant layer (**A**) by transferring the deodorant layer onto the flame-retardant layer (**A**) after its formation on any appropriate base material.

### <3-4. Physical functional layer>

Any appropriate layer can be adopted as the physical functional layer as long as the layer can express physical functionality. Preferred examples of such physical functional layer include a conductive layer, an anti-fingerprint layer, a hard coat layer, an ink-absorbing layer, an inorganic particle-containing layer, an antireflection layer, and a light selective transmission layer.

The thickness of the physical functional layer is preferably 0.005 to 100 µm, more preferably 0.01 to 100 µm, still more preferably 0.1 to 100 µm, particularly preferably 1 to 100 µm. As long as the thickness of the physical functional layer falls within the range, the layer can express sufficient physical functionality without impairing the flame retardancy of the highly flame-retardant polymer member of the present invention.

### (3-4-1. Conductive layer)

Any appropriate layer can be adopted as the conductive layer as long as the layer can express conductivity.

The conductive layer may be formed only of one layer, or may be formed of two or more layers.

The conductive layer preferably contains a conductive substance. Any appropriate conductive substance can be adopted as the conductive substance as long as the substance can express conductivity. The number of kinds of the conductive substances may be only one, or may be two or more. Examples of the conductive substance include a conductive metal, a conductive metal oxide, a conductive composite metal compound, and a conductive polymer.

Any appropriate conductive metal can be adopted as the conductive metal. Examples of the conductive metal include carbon black, silver, copper, and nickel.

Any appropriate conductive metal oxide can be adopted as the conductive metal oxide. Examples of the conductive metal oxide include indium oxide, tin oxide, zinc oxide, cadmium oxide, and titanium oxide.

Any appropriate conductive composite metal compound can be adopted as the conductive composite metal compound. Examples of the conductive composite metal compound include: compounds each obtained by doping a conductive metal oxide with tin, antimony, aluminum, gallium, or the like (such as tin-containing indium oxide particles (ITO), antimony-containing tin oxide particles (ATO), aluminum-containing zinc oxide particles (AZO), and gallium-containing zinc oxide particles (GZO)); a compound obtained by subjecting ITO to aluminum substitution; and compounds each obtained by coating glass beads, mica, acicular titanium oxide, or the like with a metal or a metal oxide.

Any appropriate conductive polymer can be adopted as the conductive polymer. Examples of the conductive polymer include polyaniline, polypyrrole, and polythiophene.

When the conductive substance is particulate, its average particle diameter is preferably 0.005 to 0.5 µm, more preferably 0.01 to 0.5 µm. When the conductive substance is particulate, as long as its average particle diameter falls within the range, the conductivity of the conductive layer can be expressed at a high level.

The conductive layer may contain any appropriate additive. Examples of such additive include aplasticizer, a filler, a lubricant, a thermal stabilizer, an anti-fogging agent, a stabilizer, an antioxidant, a surfactant, a resin, and a solvent.

The conductive layer can adopt any appropriate form. Examples of such form include an applied layer and a sheet layer.

When the conductive layer is an applied layer, the conductive layer can be formed by applying any appropriate conductive liquid. When the conductive layer is a sheet layer, the conductive layer is, for example, a sheet layer containing a conductive substance. Such sheet layer can be formed by any appropriate forming method.

The thickness of the conductive layer is preferably 0. 1 to 100 µm, more preferably 1 to 100 µm. As long as the thickness of the conductive layer (**L**) falls within the range, the layer can express sufficient conductivity without impairing the flame retardancy of the highly flame-retardant polymer member of the present invention.

### (3-4-2. Anti-fingerprint layer)

Any appropriate layer can be adopted as the anti-fingerprint layer as long as the effect of the present invention is obtained. The layer is preferably a layer containing at least one kind of resin selected from a fluorine-based resin, a silicone-based resin, and a urethane-based resin.

The fluorine-based resin is, for example, a fluorine-containing silane compound (general formula (1)) described in Japanese Patent Application Laid-open No. Hei 09-258003. The number of kinds of the fluorine-based resins may be only one, or may be two or more.

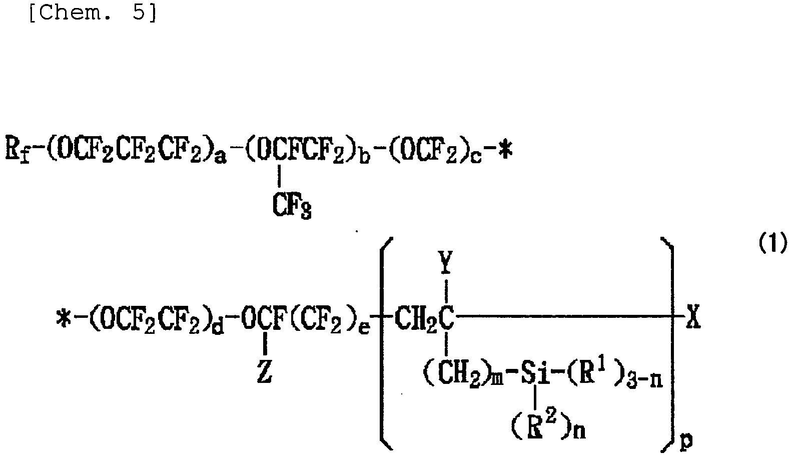

In the general formula (1), R_{f} represents a linear or branched perfluoroalkyl group having 1 to 16 carbon atoms, and preferred examples thereof include CF₃-, C₂F₅-, and C₃F₇-. X represents iodine or hydrogen. Y represents hydrogen or a lower alkyl group. R¹ represents a hydrolyzable group and preferred examples thereof include a halogen, -OR³, -OCOR³, -OC(R³)=C(R⁴)₂, -ON=C(R³)₂, and -ON=CR⁵ (provided that R³ represents an aliphatic hydrocarbon group or an aromatic hydrocarbon group, R⁴ represents hydrogen or a lower aliphatic hydrocarbon group, and R⁵ represents a divalent, aliphatic hydrocarbon group having 3 to 6 carbon atoms) . More preferred examples of R¹ include chlorine, -OCH₃, and -OC₂H₅. R² represents hydrogen or an inert, monovalent organic group, preferably, for example, a monovalent hydrocarbon group having 1 to 4 carbon atoms. a, b, c, and d each represent an integer of 0 to 200, preferably 1 to 50. e represents 0 or 1. m and n each represent an integer of 0 to 2, preferably 0. p represents an integer of 1 or more, preferably an integer of 1 to 10.

The molecular weight of the fluorine-containing silane compound represented by the general formula (1) is preferably 5×10² to 1×10⁵, more preferably 5×10² to 1×10⁴.

A preferred structure of the fluorine-containing silane compound represented by the general formula (1) is, for example, a structure represented by a general formula (2). In the general formula (2), q represents an integer of 1 to 50, r represents an integer of 1 or more, preferably an integer of 1 to 10, and the other symbols are the same as those described in the general formula (1).

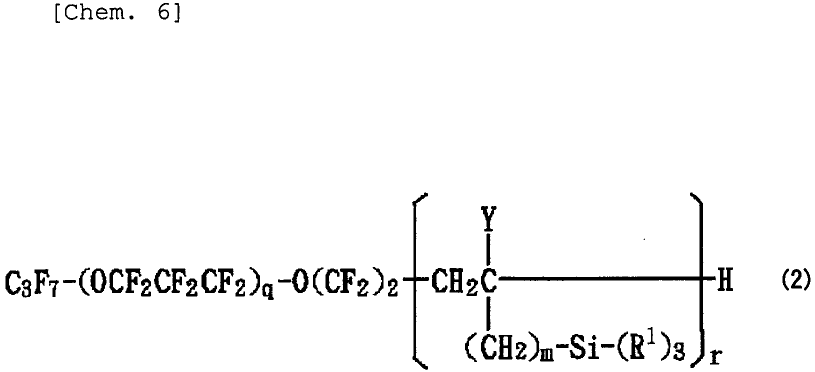

Examples of the silicone-based resin include a dimethylpolysiloxane, a methylhydropolysiloxane, a silicone oil or a silicone varnish, and a silicone-modified acrylic copolymer described in Japanese Patent Application Laid-open No. Hei 09-111185. The number of kinds of the silicone-based resins may be only one, or may be two or more.

Examples of the urethane-based resin include a urethane (meth)acrylate shown in Japanese Patent Application Laid-open No. 2010-248426, and a polyfunctional urethane (meth) acrylate compound obtained by causing a polyfunctional (meth) acrylate compound having active hydrogen and a polyisocyanate compound to react with each other. The number of kinds of the urethane-based resins may be only one, or may be two or more.

Examples of the polyfunctional (meth) acrylate compound having active hydrogen in the polyfunctional urethane (meth) acrylate compound obtained by causing a polyfunctional (meth)acrylate compound having active hydrogen and a polyisocyanate compound to react with each other may include: pentaerythritols such as pentaerythritol tri(meth)acrylate, dipentaerythritol hexa(meth)acrylate, dipentaerythritol penta(meth)acrylate, dipentaerythritol tetra(meth)acrylate, dipentaerythritol tri(meth)acrylate, and dipentaerythritol di(meth)acrylate; methylols such as trimethylolpropane di(meth)acrylate; and epoxy acrylates such as bisphenol A diepoxy acrylate. Preferred examples of such polyfunctional (meth)acrylate compound having active hydrogen include pentaerythritol triacrylate and dipentaerythritol pentaacrylate. The number of kinds of those polyfunctional (meth)acrylates each having active hydrogen may be only one, or may be two or more.

Examples of the polyisocyanate compound in the polyfunctional urethane (meth) acrylate compound obtained by causing a polyfunctional (meth)acrylate compound having active hydrogen and a polyisocyanate compound to react with each other include polyisocyanate compounds each using, as a constituent, a linear saturated hydrocarbon, a cyclic saturated hydrocarbon (alicyclic), or an aromatic hydrocarbon. Specific examples thereof include: linear saturated hydrocarbon polyisocyanates such as tetramethylene diisocyanate, hexamethylene diisocyanate, and 2,2,4-trimethylhexamethylene diisocyanate; cyclic saturated hydrocarbon (alicyclic)polyisocyanates such as isophorone diisocyanate, dicyclohexylmethane diisocyanate, methylenebis(4-cyclohexylisocyanate), hydrogenated diphenylmethane diisocyanate, hydrogenated xylene diisocyanate, and hydrogenated toluene diisocyanate; and aromatic polyisocyanates such as 2,4-tolylene diisocyanate, 1,3-xylylene diisocyanate, p-phenylene diisocyanate, 3,3'-dimethyl-4,4'-diisocyanate, 6-isopropyl-1,3-phenyl diisocyanate, and 1,5-naphthalene diisocyanate. Preferred examples of such polyisocyanate compound include isophorone diisocyanate and hexamethylene diisocyanate. The number of kinds of those polyisocyanate compounds may be only one, or may be two or more.

Upon production of the polyfunctional urethane (meth)acrylate compound, the usage of the polyisocyanate compound with respect to 1 equivalent of an active hydrogen group in the polyfunctional (meth)acrylate compound having active hydrogen is preferably 0.1 to 50 equivalents, more preferably 0.1 to 10 equivalents in terms of an isocyanate group equivalent. A temperature for the reaction is preferably 30 to 150°C, more preferably 50 to 100°C. The end point of the reaction is calculated by a method involving causing the remaining isocyanate amount to react with an excess amount of n-butylamine and subjecting the resultant to back titration with 1N hydrochloric acid, and the time point at which the remaining polyisocyanate amount becomes 0.5 wt% or less is defined as the end.

Upon production of the polyfunctional urethane (meth)acrylate compound, a catalyst may be added for the purpose of reducing the reaction time. Examples of such catalyst include a basic catalyst and an acidic catalyst. Examples of the basic catalyst may include: amines such as pyridine, pyrrole, triethylamine, diethylamine, dibutylamine, and ammonia; and phosphines such as tributylphosphine and triphenylphosphine. Examples of the acidic catalyst include: copper naphthenate, cobalt naphthenate, and zinc naphthenate; metal alkoxides such as tributoxyaluminum, trititanium tetrabutoxide, and zirconium tetrabutoxide; Lewis acids such as aluminum chloride; and tin compounds such as tin 2-ethylhexanoate, octyltin trilaurate, dibutyltin dilaurate, and octyltin diacetate. The addition amount of the catalyst is preferably 0.1 to 1 part by weight with respect to 100 parts by weight of the polyisocyanate.

Upon production of the polyfunctional urethane (meth)acrylate compound, a polymerization inhibitor (such as methoquinone, hydroquinone, methylhydroquinone, or phenothiazine) is preferably used in order that the polymerization of the (meth) acrylate compound during the reaction may be prevented. The usage of such polymerization inhibitor is preferably 0.01 to 1 wt%, more preferably 0.05 to 0.5 wt% with respect to the reaction mixture. A temperature for the reaction is preferably 60 to 150°C, more preferably 80 to 120°C.

The anti-fingerprint layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives to be incorporated into the anti-fingerprint layer can be appropriately set depending on purposes.

The anti-fingerprint layer may be formed only of one layer, or may be formed of two or more layers.

The thickness of the anti-fingerprint layer is preferably 0.1 to 100 µm, more preferably 1 to 100 µm. As long as the thickness of the anti-fingerprint layer falls within the range, the layer can express extremely excellent anti-fingerprint property without impairing the flame retardancy of the highly flame-retardant polymer member of the present invention.

### (3-4-3. Hard coat layer)

Any appropriate layer can be adopted as the hard coat layer as long as the effect of the present invention is obtained. The layer is preferably at least one kind selected from a UV-curing type hard coat layer, a thermosetting type hard coat layer, and an organic-inorganic hybrid type hard coat layer.

The UV-curing type hard coat layer can be formed from a resin composition containing a UV-curable resin. The thermosetting type hard coat layer can be formed from a resin composition containing a thermosetting resin. The organic-inorganic hybrid type hard coat layer can be formed from a resin composition containing an organic-inorganic hybrid resin.

Examples of such resin as described above include an acrylic resin, an oxetane-based resin, an epoxy resin, and a silicone-based resin. A hard coat layer capable of effectively expressing excellent scratch-resisting performance can be obtained by using a resin composition containing such resin in the formation of the hard coat layer. Of those, the acrylic resin is particularly preferred in terms of, for example, handleability.

Any appropriate acrylic resin can be adopted as the acrylic resin as long as the resin has a repeating unit derived from any of various monofunctional or polyfunctional (meth) acrylates. Examples of the monofunctional (meth)acrylate include isobornyl acrylate, tetrahydrofurfuryl acrylate, 2-hydroxy-3-phenoxypropyl acrylate, butoxyethyl acrylate, lauryl acrylate, stearyl acrylate, benzyl acrylate, hexyl diglycol acrylate, 2-hydroxyethyl acrylate, 2-ethylhexyl acrylate, cyclohexyl acrylate, phenoxyethyl acrylate, dicyclopentadiene acrylate, polyethylene glycol acrylate, polypropylene glycol acrylate, and nonylphenoxyethyl cellosolve acrylate. Examples of the polyfunctional (meth)acrylate include: polyfunctional (meth)acrylates such as polyethylene glycol diacrylate, neopentyl glycol diacrylate, trimethylolpropane triacrylate, and pentaerythritol triacrylate; and polyfunctional (meth) acrylate oligomers such as oligourethane (meth)acrylate and oligoester (meth)acrylate. Those (meth)acrylates may be used alone, or two or more kinds thereof may be mixed and used to form a copolymer.

The resin composition may further contain any appropriate additive depending on purposes. Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives to be incorporated into the hard coat layer can be appropriately set depending on purposes.

The pencil hardness of the hard coat layer is preferably 2H to 8H, more preferably 4H to 6H. A hard coat layer having excellent scratch resistance can be obtained by setting the pencil hardness of the hard coat layer in such range.

The hard coat layer may be formed only of one layer, or may be formed of two or more layers.

The thickness of the hard coat layer is preferably 0.1 to 100 µm, more preferably 1 to 100 µm. As long as the thickness of the hard coat layer falls within the range, the layer can express extremely excellent scratch resistance without impairing the flame retardancy of the highly flame-retardant polymer member of the present invention.

### (3-4-4. Ink-absorbing layer)

Any appropriate layer can be adopted as the ink-absorbing layer as long as a printing effect is obtained.

The ink-absorbing layer preferably contains a water-soluble resin. The content of the water-soluble resin in the ink-absorbing layer is preferably 50 to 100 wt%, more preferably 70 to 100 wt%, still more preferably 90 to 100 wt%, particularly preferably 95 to 100 wt%, most preferably substantially 100 wt%.

Any appropriate water-soluble resin can be adopted as the water-soluble resin. Such water-soluble resin is, for example, at least one kind selected from polyvinyl alcohol, polyvinylpyrrolidone, polyacrylic acid, polyethylenimine, and a copolymer of vinylpyrrolidone and vinyl acetate.

The number of kinds of the water-soluble resins in the ink-absorbing layer may be only one, or may be two or more.

The ink-absorbing layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives that can be incorporated into the ink-absorbing layer can be appropriately set depending on purposes.

The ink-absorbing layer may be formed only of one layer, or may be formed of two or more layers.

The thickness of the ink-absorbing layer is preferably 0.1 to 100 µm, more preferably 1 to 100 µm. As long as the thickness of the ink-absorbing layer falls within the range, the layer can express extremely excellent printing property without impairing the flame retardancy of the highly flame-retardant polymer member of the present invention.

### (3-4-5. Inorganic particle-containing layer)

Any appropriate layer can be adopted as the inorganic particle-containing layer as long as the effect of the present invention is obtained. The inorganic particle-containing layer is preferably a layer containing inorganic particles in a polymer.

Any appropriate polymer can be adopted as the polymer to be incorporated into the inorganic particle-containing layer. The same polymers as the various polymers given as examples of the polymers that can be incorporated into the flame-retardant layer **(A)** and the polymer layer **(B)** can be given as examples of the polymer.

The inorganic particle-containing layer contains the inorganic particles. Any appropriate inorganic particles can be adopted as the inorganic particles. Examples of such inorganic particles include silica particles and silica-coated particles. Any appropriate particles can be adopted as the silica-coated particles as long as the surfaces of the particles are coated with silica. Examples of the silica-coated particles include metals whose surfaces are coated with silica. Examples of such metals include metal simple substances, metal oxides, and metal composite oxides. Such metals are preferably the metal oxides, and specific examples thereof include titanium oxide and zinc oxide. The number of kinds of the inorganic particles in the inorganic particle-containing layer may be only one, or may be two or more.

An upper limit for the average particle diameter of the inorganic particles in the inorganic particle-containing layer is preferably 100 nm or less, more preferably 40 nm or less, still more preferably 20 nm or less, particularly preferably 15 nm or less. It should be noted that a lower limit for the average particle diameter of the inorganic particles in the inorganic particle-containing layer is preferably 1 nmormore, more preferably 3 nm or more, still more preferably 5 nm or more. An inorganic particle-containing layer excellent in transparency can be provided as long as the average particle diameter of the inorganic particles in the inorganic particle-containing layer falls within the range.

When the inorganic particles in the inorganic particle-containing layer are hydrophilic inorganic particles made of silica or the like, an oily substance hardly adheres to the surface of the inorganic particle-containing layer and hence its contamination resistance can improve.

The inorganic particle-containing layer can be preferably produced from an inorganic particle-containing layer formation material obtained by compounding, in the polymer, the inorganic particles and, as required, any appropriate additive. More specifically, a method of producing the inorganic particle-containing layer is, for example, a method involving applying the inorganic particle-containing layer formation material onto the flame-retardant layer **(A)** to form the layer, or a method involving independently producing the inorganic particle-containing layer from the inorganic particle-containing layer formation material and then attaching the layer onto the flame-retardant layer **(A).**

Any appropriate form can be adopted as the form of each of the inorganic particles to be compounded for obtaining the inorganic particle-containing layer formation material. Examples of such form of each of the inorganic particles include a colloidal particle, a particle treated with a dispersant, a particle subjected to a coupling treatment, and an encapsulated particle.

The content of the inorganic particles in the inorganic particle-containing layer with respect to the polymer in the inorganic particle-containing layer is preferably 20 to 90 wt%, more preferably 25 to 80 wt%, still more preferably 30 to 70 wt%, particularly preferably 35 to 60 wt%. When the content of the inorganic particles in the inorganic particle-containing layer with respect to the polymer in the inorganic particle-containing layer is less than 20 wt%, it may become difficult to express extremely high flame retardancy. When the content of the inorganic particles in the inorganic particle-containing layer with respect to the polymer in the inorganic particle-containing layer exceeds 90 wt%, the inorganic particle-containing layer may become brittle.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives can be appropriately set depending on purposes.

The inorganic particle-containing layer may be formed only of one layer, or may be formed of two or more layers.

The thickness of the inorganic particle-containing layer is preferably 0.1 to 100 µm, more preferably 1 to 100 µm. As long as the thickness of the inorganic particle-containing layer falls within the range, the layer can express extremely high flame retardancy without impairing the transparency and flexibility of the highly flame-retardant polymer member.

### (3-4-6. Antireflection layer)

Any appropriate layer such as a known antireflection layer can be adopted as the antireflection layer as long as an antireflection effect is obtained.

The antireflection layer may be a single layer formed only of one layer, or may be a plurality of layers formed of two or more layers.

A formation material for the antireflection layer is, for example, a resin-based material such as a UV-curable acrylic resin, a hybrid type material obtained by dispersing inorganic fine particles made of colloidal silica or the like in a resin, or a sol-gel-based material using a metal alkoxide such as tetraethoxysilane or titanium tetraethoxide. Of those formation materials, a formation material containing a fluorine group is preferred for imparting contamination-preventing property to the surface of the layer. Of those formation materials, a formation material having a large inorganic component content is preferred for improving the scratch resistance of the layer. Such formation material having a large inorganic component content is, for example, the sol-gel-based material. The sol-gel-based material may be partially condensed.

An antireflection layer capable of achieving compatibility between scratch resistance and low reflection is, for example, an antireflection layer formed from a material (material described in Japanese Patent Application Laid-open No. 2004-167827) containing: a siloxane oligomer having a number-average molecular weight of from 500 to 10,000 in terms of ethylene glycol; and a fluorine compound having a number-average molecular weight of 5,000 or more in terms of a polystyrene, and having a fluoroalkyl structure and a polysiloxane structure.

An inorganic sol is also given as an example of the formation material for the antireflection layer. Examples of the inorganic sol include silica, alumina, and magnesium fluoride.

Hollow, spherical silicon oxide fine particles may be incorporated into the formation material for the antireflection layer. Examples of such hollow, spherical silicon oxide fine particles include silica-based fine particles disclosed in Japanese Patent Application Laid-open No. 2001-233611.

Any appropriate temperature can be adopted as each of drying and curing temperatures upon formation of the antireflection layer.

For example, application methods such as fountain coating, die coating, spin coating, spray coating, gravure coating, roll coating, and bar coating as wet modes, and vacuum deposition can each be adopted for the formation of the antireflection layer.

When the antireflection layer is a plurality of layers formed of two or more layers, the layer is preferably of, for example, a two-layer structure obtained by laminating a silicon oxide layer having a low refractive index (refractive index: about 1.45) on a titanium oxide layer having a high refractive index (refractive index: about 1.8).

The antireflection layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, andamounts of additives that can be incorporated into the antireflection layer can be appropriately set depending on purposes.

The thickness of the antireflection layer is preferably 0.005 to 30 µm, more preferably 0.01 to 25 µm, still more preferably 0.01 to 20 µm. As long as the thickness of the antireflection layer falls within the range, the layer can express extremely excellent antireflection property without impairing the flame retardancy of the highly flame-retardant polymer member of the present invention.

### (3-4-7. Light selective transmission layer)

Any appropriate layer can be adopted as the light selective transmission layer as long as a light selective transmission effect is obtained. The light selective transmission layer is preferably at least one kind selected from a metal thin film and a dielectric thin film. Any appropriate metal material can be adopted as a metal material for the metal thin film. Any appropriate dielectric material can be adopted as a dielectric material for the dielectric thin film.

A dielectric multilayer film obtained by alternately laminating a dielectric layer A and a dielectric layer B having a higher refractive index than a refractive index which the dielectric layer A has is suitable as the light selective transmission layer.

A material whose refractive index falls within the range of 1.6 or less can be preferably selected as a material for constituting the dielectric layer A, and a material whose refractive index falls within the range of 1.2 to 1.6 can be more preferably selected as the material. Examples of such material include silica, alumina,lanthanum fluoride,magnesium fluoride,andsodium aluminum hexafluoride. The number of kinds of such materials may be only one, or may be two or more.

A material whose refractive index falls within the range of 1.7 or more can be preferably selected as a material for constituting the dielectric layer B, and a material whose refractive index falls within the range of 1.7 to 2.5 can be more preferably selected as the material. Examples of such material include products each obtained by using, as a main component, titanium oxide, zirconium oxide, tantalum pentoxide, niobium pentoxide, lanthanum oxide, yttrium oxide, zinc oxide, zinc sulfide, or indium oxide and incorporating a small amount of titanium oxide, tin oxide, cerium oxide, or the like thereinto. The number of kinds of those materials may be only one, or may be two or more.

The light selective transmission layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the light selective transmission layer can be appropriately set depending on purposes.

The light selective transmission layer may be a single layer formed only of one layer, or may be a plurality of layers formed of two or more layers.

When the light selective transmission layer is a plurality of layers, the light selective transmission layer is preferably at least one kind selected from a multilayer metal thin film and a multilayer dielectric thin film.

The light selective transmission layer is specifically, for example, a multilayer film obtained by alternately laminating a silica layer and a titania layer.

The thickness of the light selective transmission layer is preferably 0.005 to 100 µm, more preferably 0.01 to 50 µm, still more preferably 0.05 to 40 µm, particularly preferably 0.1 to 30 µm. As long as the thickness of the light selective transmission layer falls within the range, the layer can express extremely excellent light selective transmission property without impairing the flame retardancy of the highly flame-retardant polymer member of the present invention, and can impart light selective transmission property to the various adherends.

### <3-5. Chemical functional layer>

Any appropriate layer can be adopted as the chemical functional layer as long as the layer can express chemical functionality. Preferred examples of such chemical functional layer include an alkali-resistant layer, an acid-resistant layer, and a solvent-resistant layer.

The thickness of the chemical functional layer is preferably 0.1 to 100 µm, more preferably 1 to 100 µm. As long as the thickness of the chemical functional layer falls within the range, the layer can express sufficient chemical functionality without impairing the flame retardancy of the highly flame-retardant polymer member of the present invention.

### (3-5-1. Alkali-resistant layer)

Any appropriate layer can be adopted as the alkali-resistant layer as long as an alkali-resistant effect is obtained.

The alkali-resistant layer preferably contains an alkali-resistant resin. The content of the alkali-resistant resin in the alkali-resistant layer is preferably 50 to 100 wt%, more preferably 70 to 100 wt%, still more preferably 90 to 100 wt%, particularly preferably 95 to 100 wt%, most preferably substantially 100 wt%.

Any appropriate alkali-resistant resin can be adopted as the alkali-resistant resin. Examples of such alkali-resistant resin include at least one kind selected from a urethane-based resin, a phenol-based resin, and a fluorine-based resin. Specific examples of the urethane-based resin include an oil-modified polyurethane resin, an alkyd-based polyurethane resin, a polyester-based polyurethane resin, and a polyether-based urethane resin. Specific examples of the phenol-based resin include a novolac type phenol resin and a resol type phenol resin. Specific examples of the fluorine-based resin include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The number of kinds of the alkali-resistant resins in the alkali-resistant layer may be only one, or may be two or more.

The alkali-resistant layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives that can be incorporated into the alkali-resistant layer can be appropriately set depending on purposes.

The alkali-resistant layer may be formed only of one layer, or may be formed of two or more layers.

The thickness of the alkali-resistant layer is preferably 0.1 to 100 µm, more preferably 1 to 100 µm. As long as the thickness of the alkali-resistant layer falls within the range, the layer can express extremely excellent alkali-resistant property without impairing the flame retardancy of the highly flame-retardant polymer member of the present invention.

### (3-5-2. Acid-resistant layer)

Any appropriate layer can be adopted as the acid-resistant layer as long as an acid-resistant effect is obtained.

The acid-resistant layer preferably contains an acid-resistant resin. The content of the acid-resistant resin in the acid-resistant layer is preferably 50 to 100 wt%, more preferably 70 to 100 wt%, still more preferably 90 to 100 wt%, particularly preferably 95 to 100 wt%, most preferably substantially 100 wt%.

Any appropriate acid-resistant resin can be adopted as the acid-resistant resin. Examples of such acid-resistant resin include at least one kind selected from a phenol-based resin, a silicone-based resin, and a fluorine-based resin. Specific examples of the silicone-based resin include dimethylpolysiloxane, methylhydropolysiloxane, a silicone oil or a silicone varnish, and a silicone-modified acrylic copolymer shown in Japanese Patent Application Laid-open No. 09-111185. Specific examples of the phenol-based resin include a novolac type phenol resin and a resol type phenol resin. Specific examples of the fluorine-based resin include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The number of kinds of the acid-resistant resins in the acid-resistant layer may be only one, or may be two or more.

The acid-resistant layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, and amounts of additives that can be incorporated into the acid-resistant layer can be appropriately set depending on purposes.

The acid-resistant layer may be formed only of one layer, or may be formed of two or more layers.

The thickness of the acid-resistant layer is preferably 0.1 to 100 µm, more preferably 1 to 100 µm. As long as the thickness of the acid-resistant layer falls within the range, the layer can express extremely excellent acid-resistant property without impairing the flame retardancy of the highly flame-retardant polymer member of the present invention.

### (3-5-3. Solvent-resistant layer)

Any appropriate layer can be adopted as the solvent-resistant layer as long as a solvent-resistant effect is obtained.

The solvent-resistant layer preferably contains a solvent-resistant resin. The content of the solvent-resistant resin in the solvent-resistant layer is preferably 50 to 100 wt%, more preferably 70 to 100 wt%, still more preferably 90 to 100 wt%, particularly preferably 95 to 100 wt%, most preferably substantially 100 wt%.

Any appropriate solvent-resistant resin can be adopted as the solvent-resistant resin. Examples of such solvent-resistant resin include at least one kind selected from a urethane-based resin, a phenol-based resin, a silicone-based resin, and a fluorine-based resin. Specific examples of the urethane-based resin include an oil-modified polyurethane resin, an alkyd-based polyurethane resin, a polyester-based polyurethane resin, and a polyether-based urethane resin. Specific examples of the phenol-based resin include a novolac type phenol resin and a resol type phenol resin. Specific examples of the silicone-based resin include dimethylpolysiloxane, methylhydropolysiloxane, a silicone oil or a silicone varnish, and a silicone-modified acrylic copolymer shown in Japanese Patent Application Laid-open No. 09-111185. Specific examples of the fluorine-based resin include polytetrafluoroethylene, polychlorotrifluoroethylene, polyvinyl fluoride, polyvinylidene fluoride, a tetrafluoroethylene/hexafluoropropylene copolymer, and a chlorofluoroethylene/vinylidene fluoride copolymer.

The number of kinds of the solvent-resistant resins in the solvent-resistant layer may be only one, or may be two or more.

The solvent-resistant layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, and an antifoaming agent. The kinds, number, and amounts of additives that can be incorporated into the solvent-resistant layer can be appropriately set depending on purposes.

The solvent-resistant layer may be formed only of one layer, or may be formed of two or more layers.

The thickness of the solvent-resistant layer is preferably 0.1 to 100 µm, more preferably 1 to 100 µm. As long as the thickness of the solvent-resistant layer falls within the range, the layer can express extremely excellent solvent-resistant property without impairing the flame retardancy of the highly flame-retardant polymer member of the present invention.

<3-6. Production of physical functional layer or chemical functional layer> The physical functional layer or the chemical functional layer can be produced by any appropriate method. Preferred examples of the method of producing the physical functional layer or the chemical functional layer include: a method involving forming the physical functional layer or the chemical functional layer on the flame-retardant layer **(A);** and a method involving transferring the physical functional layer or the chemical functional layer formed on any appropriate base material onto the flame-retardant layer **(A).** In addition, the physical functional layer or the chemical functional layer may be formed by using any appropriate paint.

The production of the physical functional layer or the chemical functional layer can be performed at any appropriate timing.

### (3-6-1. Production of conductive layer)

The conductive layer can be produced by any appropriate method.

When the conductive layer is an applied layer, the conductive layer can be formed by applying any appropriate conductive liquid. Specifically, for example, the conductive layer is formed by applying a conductive liquid to the surface of a layer to serve as the flame-retardant layer **(A).** After its application, the conductive liquid is dried as required. A commercially available conductive liquid may be used as the conductive liquid, or the liquid can be prepared by mixing any appropriate conductive substance and, as required, any other additive with any appropriate solvent. The solvent is preferably, for example, an organic solvent or water. Only one kind of solvent may be used as the solvent, or a mixed solvent of two or more kinds of solvents may be used as the solvent. When the conductive substance and, as required, the other additive are mixed with the solvent, the conductive substance may be mixed in a powder state, or may be mixed in a slurry state or a sol state.

Any appropriate means can be adopted as means for applying the conductive liquid. Examples of such means include gravure coating, spray coating, and dip coating.

After the application of the conductive liquid, the applied product can be dried as required. A heating temperature for the drying is preferably 50 to 200°C. A heating time for the drying is preferably 10 seconds to 60 minutes.

After the performance of the drying, aging may be performed for a necessary time period. The aging can improve the peel strength of the coating film.

When the conductive layer is a sheet layer, the sheet layer can be formed by any appropriate forming method. Specifically, for example, a sheet-shaped product is formed by any appropriate forming method and the sheet-shaped product is attached to the surface of a layer to serve as the flame-retardant layer **(A).**

### (3-6-2. Production of anti-fingerprint layer)

The anti-fingerprint layer can be produced by any appropriate method. The anti-fingerprint layer can be preferably produced by: applying a resin composition (such as a resin composition containing at least one kind of resin selected from a fluorine-based resin, a silicone-based resin and a urethane-based resin) as a formation material; and drying the composition as required. Any appropriate solvent may be added as required upon application of the resin composition as a formation material.

Any appropriate means can be adopted as means for applying the resin composition. Examples of such means include gravure coating, spray coating, and dip coating.

When the resin composition is dried after its application, a heating temperature for the drying is preferably 30 to 180°C, more preferably 50 to 150°C. A heating time for the drying is preferably 10 seconds to 10 minutes.

After the application of the resin composition, the anti-fingerprint layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the anti-fingerprint layer may be aged for a necessary time period. The aging can improve the peel strength of the coating film.

### (3-6-3. Production of hard coat layer)

The hard coat layer can be produced by any appropriate method. The hard coat layer can be preferably produced by: applying a resin composition (such as a resin composition containing a UV-curable resin, a resin composition containing a thermosetting resin, and a resin composition containing an organic-inorganic hybrid resin) as a formation material; and drying the composition as required. Any appropriate solvent may be added as required upon application of the resin composition as a formation material.

Any appropriate means can be adopted as means for applying the resin composition. Examples of such means include gravure coating, spray coating, and dip coating.

When the resin composition is dried after its application, a heating temperature for the drying is preferably 30 to 180°C, more preferably 50 to 150°C. A heating time for the drying is preferably 10 seconds to 10 minutes.

After the application of the resin composition, the hard coat layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the hard coat layer may be aged for a necessary time period. The aging can improve the peel strength of the coating film.

### (3-6-4. Production of ink-absorbing layer)

The ink-absorbing layer **(L)** can be produced by any appropriate method. The ink-absorbing layer **(L)** can be preferably produced by applying the water-soluble resin and drying the resin as required. Any appropriate solvent may be added as required upon application of the water-soluble resin. Examples of the method involving applying the water-soluble resin to form the ink-absorbing layer on the flame-retardant layer **(A)** include: a method involving directly applying the water-soluble resin onto the flame-retardant layer **(A)** to form the ink-absorbing layer; and a method involving transferring the ink-absorbing layer, which has been formed by applying the water-soluble resin onto any appropriate base material, onto the flame-retardant layer **(A).**

Any appropriate means can be adopted as means for applying the water-soluble resin. Examples of such means include gravure coating, spray coating, and dip coating.

When the water-soluble resin is dried after its application, a heating temperature for the drying is preferably 30 to 180°C, more preferably 50 to 150°C. A heating time for the drying is preferably 10 seconds to 10 minutes.

### (3-6-5. Production of inorganic particle-containing layer)

The inorganic particle-containing layer can be produced by any appropriate method. The inorganic particle-containing layer can be preferably produced from an inorganic particle-containing layer formation material obtained by compounding, in a polymer, inorganic particles and, as required, any appropriate additive. More specifically, a method of producing the inorganic particle-containing layer is, for example, a method involving applying the inorganic particle-containing layer formation material onto the flame-retardant layer **(A)** to form the layer, or a method involving independently producing the inorganic particle-containing layer from the inorganic particle-containing layer formation material and then attaching the layer onto the flame-retardant layer **(A).**

Any appropriate form can be adopted as the form of each of the inorganic particles to be compounded for obtaining the inorganic particle-containing layer formation material. Examples of such form of each of the inorganic particles include a colloidal particle, a particle treated with a dispersant, a particle subjected to a coupling treatment, and an encapsulated particle.

The content of the inorganic particles in the inorganic particle-containing layer formation material with respect to the polymer in the inorganic particle-containing layer formation material is preferably 20 to 90 wt%, more preferably 25 to 80 wt%, still more preferably 30 to 70 wt%, particularly preferably 35 to 60 wt%. When the content of the inorganic particles in the inorganic particle-containing layer formation material with respect to the polymer in the inorganic particle-containing layer formation material is less than 20 wt%, it may become difficult to express extremely high flame retardancy. When the content of the inorganic particles in the inorganic particle-containing layer formation material with respect to the polymer in the inorganic particle-containing layer formation material exceeds 90 wt%, the inorganic particle-containing layer may become brittle.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, andamounts of additives can be appropriately set depending on purposes.

Any appropriate means can be adopted as means for applying the inorganic particle-containing layer formationmaterial. Examples of such means include gravure coating, spray coating, and dip coating.

When the inorganic particle-containing layer formation material is dried after its application, a heating temperature for the drying is preferably 30 to 180°C, more preferably 50 to 150°C. A heating time for the drying is preferably 10 seconds to 10 minutes.

After the application of the inorganic particle-containing layer formation material, the antifouling layer may be cured by, for example, UV irradiation or heating as required. For example, when an inorganic particle-containing layer formation material containing a UV-curable resin is used, the layer is preferably cured by UV irradiation, and when an inorganic particle-containing layer formation material containing a thermosetting resin is used, the layer is preferably cured by heating.

After its production, the inorganic particle-containing layer may be aged for a necessary time period. The aging can improve the peel strength of the coating film.

### (3-6-6. Production of antireflection layer)

The antireflection layer can be produced by any appropriate method. Preferred examples of the method of producing the antireflection layer include: a method involving forming the antireflection layer on the flame-retardant layer **(A) ;** and a method involving transferring the antireflection layer formed on any appropriate base material onto the flame-retardant layer **(A).** In addition, the antireflection layer may be formed by using any appropriate antireflection paint.

### (3-6-7. Production of light selective transmission layer)

The light selective transmission layer can be produced by any appropriate method. Examples of the method of producing the light selective transmission layer include: a method involving coating the top of the flame-retardant layer **(A)** with a material for the light selective transmission layer to form the layer; and a method involving depositing the material for the light selective transmission layer from the vapor (e.g., vacuum deposition) onto the flame-retardant layer **(A)** to form the layer. In addition, the light selective transmission layer may be formed on the flame-retardant layer **(A)** by laminating the light selective transmission layer on the flame-retardant layer **(A).** Further, the light selective transmission layer may be formed on the flame-retardant layer **(A)** by transferring the light selective transmission layer onto the flame-retardant layer **(A)** after its formation on any appropriate base material.

### (3-6-8. Production of alkali-resistant layer)

The alkali-resistant layer can be produced by any appropriate method. The alkali-resistant layer can be preferably produced by applying the alkali-resistant resin and drying the resin as required. Any appropriate solvent may be added as required upon application of the alkali-resistant resin. Examples of the method involving applying the alkali-resistant resin to form the alkali-resistant layer on the flame-retardant layer **(A)** include: a method involving directly applying the alkali-resistant resin onto the flame-retardant layer **(A)** to form the alkali-resistant layer; and a method involving transferring the alkali-resistant layer, which has been formed by applying the alkali-resistant resin onto any appropriate base material, onto the flame-retardant layer **(A).**

Any appropriate means can be adopted as means for applying the alkali-resistant resin. Examples of such means include gravure coating, spray coating, and dip coating.

When the alkali-resistant resin is dried after its application, a heating temperature for the drying is preferably 30 to 180°C, more preferably 50 to 150°C. A heating time for the drying is preferably 10 seconds to 10 minutes.

### (3-6-9. Production of acid-resistant layer)

The acid-resistant layer can be produced by any appropriate method. The acid-resistant layer can be preferably produced by applying the acid-resistant resin and drying the resin as required. Any appropriate solvent may be added as required upon application of the acid-resistant resin. Examples of the method involving applying the acid-resistant resin to form the acid-resistant layer on the flame-retardant layer **(A)** include: a method involving directly applying the acid-resistant resin onto the flame-retardant layer **(A)** to form the acid-resistant layer; and a method involving transferring the acid-resistant layer, which has been formed by applying the acid-resistant resin onto any appropriate base material, onto the flame-retardant layer **(A).**

Any appropriate means can be adopted as means for applying the acid-resistant resin. Examples of such means include gravure coating, spray coating, and dip coating.

When the acid-resistant resin is dried after its application, a heating temperature for the drying is preferably 30 to 180°C, more preferably 50 to 150°C. A heating time for the drying is preferably 10 seconds to 10 minutes.

### (3-6-10. Production of solvent-resistant layer)

The solvent-resistant layer can be produced by any appropriate method. The solvent-resistant layer can be preferably produced by applying the solvent-resistant resin and drying the resin as required. Any appropriate solvent may be added as required upon application of the solvent-resistant resin. Examples of the method involving applying the solvent-resistant resin to form the solvent-resistant layer on the flame-retardant layer **(A)** include: a method involving directly applying the solvent-resistant resin onto the flame-retardant layer **(A)** to form the solvent-resistant layer; and a method involving transferring the solvent-resistant layer, which has been formed by applying the solvent-resistant resin onto any appropriate base material, onto the flame-retardant layer **(A).**

Any appropriate means can be adopted as means for applying the solvent-resistant resin. Examples of such means include gravure coating, spray coating, and dip coating.

When the solvent-resistant resin is dried after its application, a heating temperature for the drying is preferably 30 to 180°C, more preferably 50 to 150°C. A heating time for the drying is preferably 10 seconds to 10 minutes.

### <3-7. Thermal functional layer>

Any appropriate layer can be adopted as the thermal functional layer as long as the layer can express thermal functionality. Preferred examples of such thermal functional layer include a heat-shielding layer, a heat-conductive layer, and a heat-insulating layer.

The thickness of the thermal functional layer is preferably 0.1 to 200 µm, more preferably 0.1 to 150 µm, particularly preferably 1 to 100 µm. As long as the thickness of the thermal functional layer falls within the range, the layer can express sufficient thermal functionality without impairing the flame retardancy of the highly flame-retardant polymer member of the present invention.

### (3-7-1. Heat-shielding layer)

Any appropriate layer can be adopted as the heat-shielding layer as long as the layer can express a heat-shielding effect. The term "heat-shielding effect" specifically refers to the following effect. The generation of thermal energy is suppressed by reflecting a large quantity of infrared rays.

The heat-shielding layer is preferably a layer having an average reflectance for light having any wavelength in the range of 780 nm to 2,100 nm of 50% or more.

The heat-shielding layer may be formed only of one layer, or may be formed of two or more layers.

The heat-shielding layer preferably contains any appropriate heat-shielding substance. Examples of such heat-shielding substance include a pigment, a ceramic, a metal, and microballoons. Only one kind of such heat-shielding substances may be used, or two or more kinds thereof may be used in combination.

When the heat-shielding substance is particulate, its average particle diameter is preferably 0.005 to 10 µm, more preferably 0.01 to 1 µm. When the heat-shielding substance is particulate, as long as its average particle diameter falls within the range, the heat-shielding property of the heat-shielding layer can be expressed at a high level.

Any appropriate pigment can be adopted as the pigment. The pigment is, for example, an inorganic pigment. Preferred examples of the inorganic pigment include: a white pigment such as titanium oxide, manganese dioxide, or cobalt oxide; and a pale color pigment using the white pigment and any other pigment in combination.

A ceramic of any appropriate form can be adopted as the ceramic.

Any appropriate metal can be adopted as the metal. Examples of the metal include aluminum and copper.

Microballoons are hollow fine particles each having a cavity in the inside thereof. Examples of the microballoons include ceramic balloons formed of a glass and a titania composite. Preferred examples thereof include glass beads.

The heat-shielding layer can contain any appropriate additive. Examples of suchadditive include aplasticizer, a filler, a lubricant, a thermal stabilizer, an anti-fogging agent, a stabilizer, an antioxidant, a surfactant, a resin, and a solvent.

The heat-shielding layer can adopt any appropriate form. The heat-shielding layer is preferably at least one kind selected from an applied layer, a sheet layer, a foil layer, a sputtered layer, and a deposited layer.

When the heat-shielding layer is an applied layer, the heat-shielding layer can be formed by applying any appropriate heat-shielding paint.

When the heat-shielding layer is a sheet layer, the heat-shielding layer is, for example, a sheet layer containing a heat-shielding substance. Such sheet layer can be formed by any appropriate forming method.

When the heat-shielding layer is a foil layer, examples of the heat-shielding layer include foil layers formed of metal foils such as an aluminum foil and a copper foil.

When the heat-shielding layer is a sputtered layer or a deposited layer, the layer can be formed by any appropriate sputtering method or deposition method.

The thickness of the heat-shielding layer is preferably 0.1 to 100 µm, more preferably 1 to 100 µm. As long as the thickness of the heat-shielding layer falls within the range, the layer can express sufficient heat-shielding property without impairing the flame retardancy of the highly flame-retardant polymer member of the present invention.

### (3-7-2. Heat-conductive layer)

Any appropriate layer can be adopted as the heat-conductive layer as long as the layer can express heat conductivity.

The heat-conductive layer may be formed only of one layer, or may be formed of two or more layers.

The heat-conductive layer preferably contains a heat-conductive substance. Any appropriate heat-conductive substance can be adopted as the heat-conductive substance as long as the substance can express heat conductivity. The number of kinds of the heat-conductive substances may be only one, or may be two or more. Examples of the heat-conductive substance include an inorganic oxide, an inorganic nitride, and a carbon compound.

Any appropriate inorganic oxide can be adopted as the inorganic oxide. Examples of the inorganic oxide include metal oxides each containing a metal such as Si, Al, Ti, Zr, Cr, or Fe.

Any appropriate inorganic nitride can be adopted as the inorganic nitride. Examples of the inorganic nitride include boron nitride, aluminum nitride, silicon nitride, and gallium nitride.

Any appropriate carbon compound can be adopted as the carbon compound. Examples of the carbon compound include diamond, graphite, and carbon black.

When the heat-conductive substance is particulate, its average particle diameter is preferably 0.005 to 50 µm, more preferably 0.01 to 10 µm. When the heat-conductive substance is particulate, as long as its average particle diameter falls within the range, the heat conductivity of the heat-conductive layer can be expressed at a high level.

The heat-conductive layer can contain any appropriate additive. Examplesofsuch additiveinclude a plasticizer,a filler, a lubricant, a thermal stabilizer, an anti-fogging agent, a stabilizer, an antioxidant, a surfactant, a resin, and a solvent.

The heat-conductive layer can adopt any appropriate form. Examples of such form include an applied layer and a sheet layer.

When the heat-conductive layer is an applied layer, the heat-conductive layer can be formed by applying any appropriate heat-conductive liquid.

When the heat-conductive layer is a sheet layer, the heat-conductive layer is, for example, a sheet layer containing a heat-conductive substance. Such sheet layer can be formed by any appropriate forming method.

The thickness of the heat-conductive layer is preferably 0.1 to 200 µm, more preferably 0. 5 to 100 µm. As long as the thickness of the heat-conductive layer falls within the range, the layer can express sufficient heat conductivity without impairing the flame retardancy of the highly flame-retardant polymer member of the present invention.

### (3-7-3. Heat-insulating layer)

Any appropriate layer can be adopted as the heat-insulating layer as long as a heat-insulating effect is obtained.

The heat-insulating layer preferably contains hollow bead structures. The term "hollow bead structures" refers to structures each including a gas layer in the inside of a bead. Examples of the gas layer include air, nitrogen, and a noble gas. Examples of such hollow bead structures include hollow ceramic beads, hollow silica beads, Shirasu balloons, glass beads, and hollow styrene beads. Of those,the glassbeadsare particularly preferred.

The heat-insulating layer is more preferably a resin composition containing hollow bead structures. A resin to be incorporated into such resin composition is not particularly limited as long as the resin can retain, for example, a heat-insulating material formed of the hollow beads and can be formed into a predetermined shape. Examples thereof include a polyolefin-based resin, an acrylic resin, a urethane resin, a polyester resin, a polystyrene, a vinyl chloride resin, a vinylidene chloride resin, a vinyl acetate-based resin, a polyamide resin, an epoxy resin, a phenol resin, and a fluorine-based resin.

The heat-insulating layer may further contain any appropriate additive depending on purposes.

Examples of the additive include a photopolymerization initiator, a silane coupling agent, a release agent, a curing agent, a curing accelerator, a diluent, an age resister, a modifying agent, a surfactant, a dye, a pigment, a discoloration preventing agent, a UV absorbing agent, a softening agent, a stabilizer, a plasticizer, andanantifoamingagent. The kinds, number, andamounts of additives that can be incorporated into the heat-insulating layer can be appropriately set depending on purposes.

The heat-insulating layer may be formed only of one layer, or may be formed of two or more layers.

The thickness of the heat-insulating layer is preferably 0.1 to 100 µm, more preferably 1 to 100 µm. As long as the thickness of the heat-insulating layer falls within the range, the layer can express extremely excellent heat-insulating property without impairing the flame retardancy of the highly flame-retardant polymer member of the present invention.

### <3-8. Production of thermal functional layer>

The thermal functional layer can be produced by any appropriate method. Preferred examples of the method of producing the thermal functional layer include: a method involving forming the thermal functional layer on the flame-retardant layer **(A);** and a method involving transferring the thermal functional layer formed on any appropriate base material onto the flame-retardant layer **(A).** In addition, the thermal functional layer may be formed by using any appropriate paint.

The production of the thermal functional layer can be performed at any appropriate timing.

### (3-8-1. Production of heat-shielding layer)

The heat-shielding layer can be produced by any appropriate method.

When the heat-shielding layer is an applied layer, the heat-shielding layer can be formed by applying any appropriate heat-shielding paint. Specifically, for example, the heat-shielding layer is formed by applying a heat-shielding paint to the surface of a layer to serve as the flame-retardant layer (**A**). After its application, the heat-shielding paint is dried as required. A commercially available heat-shielding paint may be used as the heat-shielding paint, or the paint can be prepared by mixing any appropriate heat-shielding substance and, as required, any other additive with any appropriate solvent. The solvent is preferably, for example, an organic solvent or water. Only one kind of solvent may be used as the solvent, or a mixed solvent of two or more kinds of solvents may be used as the solvent. When the heat-shielding substance and, as required, any other additive are mixed with the solvent, the heat-shielding substance may be mixed in a powder state, or may be mixed in a slurry state or a sol state.

Any appropriate means can be adopted as means for applying the heat-shielding paint. Examples of such means include gravure coating, spray coating, and dip coating. After the application of the heat-shielding paint, the applied product can be dried as required. A heating temperature for the drying is preferably 50 to 200°C. A heating time for the drying is preferably 10 seconds to 60 minutes. After the performance of the drying, aging may be performed for a necessary time period. The aging can improve the peel strength of the coating film.

When the heat-shielding layer is a sheet layer, the sheet layer can be formed by any appropriate forming method. Specifically, for example, a sheet-shaped product is formed by any appropriate forming method and the sheet-shapedproduct is attached to the surface of a layer to serve as the flame-retardant layer **(A).**

When the heat-shielding layer is a foil layer, specifically, for example, a foil-shaped product such as a metal foil is prepared in advance and the foil-shaped product is attached to the surface of a layer to serve as the flame-retardant layer **(A).**

When the heat-shielding layer is a sputtered layer, the layer can be formed by any appropriate sputtering method.

When the heat-shielding layer is a deposited layer, the layer can be, for example, formed by any appropriate deposition method.

### (3-8-2. Production of heat-conductive layer)

The heat-conductive layer can be produced by any appropriate method.

When the heat-conductive layer is an applied layer, the heat-conductive layer can be formed by applying any appropriate heat-conductive liquid. Specifically, for example, the heat-conductive layer is formed by applying a heat-conductive liquid to the surface of a layer to serve as the flame-retardant layer **(A).** After its application, the heat-conductive liquid is dried as required. A commercially available heat-conductive liquid may be used as the heat-conductive liquid, or the liquid can be prepared by mixing any appropriate heat-conductive substance and, as required, any other additive with any appropriate solvent. The solvent is preferably, for example, an organic solvent or water. Only one kind of solvent may be used as the solvent, or a mixed solvent of two or more kinds of solvents may be used as the solvent. When the heat-conductive substance and, as required, the other additive are mixed with the solvent, the heat-conductive substance may be mixed in a powder state, or may be mixed in a slurry state or a sol state.

Any appropriate means can be adopted as means for applying the heat-conductive liquid. Examples of such means include gravure coating, spray coating, and dip coating.

After the application of the heat-conductive liquid, the applied product can be dried as required. A heating temperature for the drying is preferably 50 to 200°C. A heating time for the drying is preferably 10 seconds to 60 minutes.

After the performance of the drying, aging may be performed for a necessary time period. The aging can improve the peel strength of the coating film.

When the heat-conductive layer is a sheet layer, the sheet layer can be formed by any appropriate forming method. Specifically, for example, a sheet-shaped product is formed by any appropriate forming method and the sheet-shaped product is attached to the surface of a layer to serve as the flame-retardant layer (**A**).

### (3-8-3. Production of heat-insulating layer)

The heat-insulating layer can be produced by any appropriate method. The heat-insulating layer can be preferably produced by: applying a resin composition (such as a resin composition containing hollow bead structures) as a formation material; and drying the composition as required. Any appropriate solvent may be added as required upon application of the resin composition as a formation material.

Any appropriate means can be adopted as means for applying the resin composition. Examples of such means include gravure coating, spray coating, and dip coating.

When the resin composition is dried after its application, a heating temperature for the drying is preferably 30 to 180°C, more preferably 50 to 150°C. A heating time for the drying is preferably 10 seconds to 10 minutes.

After the application of the resin composition, the heat-insulating layer may be cured by, for example, UV irradiation or heating as required. For example, when a resin composition containing a UV-curable resin is used, the layer is preferably cured by UV irradiation, and when a resin composition containing a thermosetting resin is used, the layer is preferably cured by heating.

After its production, the heat-insulating layer may be aged for a necessary time period. The aging can improve the peel strength of the coating film.

### <<4. Highly flame-retardant article>>

A highly flame-retardant article is obtained by attaching the highly flame-retardant polymer member of the present invention to anadherend. For example, paper, lumber, a plastic material, a metal, a plaster board, glass, or a composite containing one or more thereof can be used as the adherend. The highly flame-retardant polymer member is attached to at least part of the adherend. It should be noted that the adherend may be a printed matter provided with a pattern layer on at least one surface of a sheet, or may be an adherend having design.

Examples of the paper as the adherend include woodfree paper, Japanese paper, kraft paper, glassine paper, synthetic paper, and top-coated paper.

Examples of the lumber as the adherend include: broadleaf trees such as oak, paulownia wood, keyaki, teak, and rosewood; coniferous trees such as Japanese cedar, Japanese cypress, pine, and hiba false arborvitae; assembles; and plywood.

Examples of the plastic material as the adherend include an acrylic resin, a polyester (such as a polyethylene terephthalate), an olefin-based resin (such as a polyethylene, a polypropylene, or a polystyrene), a vinyl chloride resin, an epoxy resin, a vinyl ether-based resin, and a urethane-based resin.

Upon lamination of the highly flame-retardant polymer member and the adherend, the member and the adherend may be attached to each other by applying any appropriate pressure-sensitive adhesive by any appropriate application method. When the outermost layer of the highly flame-retardant polymer member is a pressure-sensitive adhesive layer, the member may be attached to the adherend without being treated. A method of attaching the highly flame-retardant polymer member and the adherend is, for example, a method involving attaching the member and the adherend with a laminator. The flame-retardant-treated adherend thus obtained can be attached to a wall surface or glass surface of a railway vehicle or the like, or to a wall surface, decorative laminate, glass surface, or the like of a housing or the like through an attachment layer, the attachment layer being provided on the surface opposite to the surface on which the highly flame-retardant polymer member of the present invention is laminated.

The highly flame-retardant polymer member of the present invention can be suitably used as a building material in, for example, a wall material, ceiling material, roofing material, flooring material, partitioning material, or curtain of a housing, edifice, or public facility, inparticular, a wall material or ceiling material of a kitchen, or a partition of a clean room. In addition, the member can be used in, for example, a surface trim material for fire preventive equipment such as an exhaust duct, a fire door, or a fire shutter, a surface trim material for furniture such as a table, a surface trim material for a door, a surface trim material for window glass, a surface trim material for a signboard or digital signage, or a roll screen. In addition, the member can be used in a wall material, ceiling material, roofing material, or flooring material inside or outside a ship, aircraft, automobile, or railway vehicle, a surface protective material or inkjet media material for a printed matter to be attached to a glass portion inside or outside a railway vehicle, a solar cell member, a cell protective material, or an electrical and electric equipment member such as a partition inside an electrical apparatus. Further, the member can be used as a peripheral tool for an ash tray, a surface trim material for a garbage box, or a protective material for the front panel of a pachinko machine.

### Examples

Hereinafter, the present invention is described in more detail by way of examples, but the present invention is not limited to these examples.

It should be noted that a biaxially stretched polyethylene terephthalate film having a thickness of 38 µm (trade name: "MRN38," manufactured by Mitsubishi Chemical Polyester Film) one surface of which had been subjected to a silicone-based release treatment was used as each of cover films and base material films used in the following respective examples. In addition, "room temperature" means 23°C.

### (Synthesis Example 1) (Preparation of syrup (b-1))

50 Parts by weight of isobornyl acrylate, 50 parts by weight of lauryl acrylate, 0.1 part by weight of a photopolymerization initiator (trade name: "IRGACURE 651," manufactured by Ciba Specialty Chemicals Inc.), and 0.1 part by weight of a photopolymerization initiator (trade name: "IRGACURE 184," manufactured by Ciba Specialty Chemicals Inc.) were stirred in a four-necked separable flask provided with a stirring machine, a temperature gauge, a nitrogen gas-introducing tube, and a cooling tube until the mixture became uniform. After that, bubbling was performed with a nitrogen gas for 1 hour to remove dissolved oxygen. After that, UV light was applied from the outside of the flask by using a black-light lamp to perform polymerization. At the time point when a moderate viscosity was obtained, the lamp was turned off and the blowing of nitrogen was stopped. Thus, a syrupy composition having a rate of polymerization of 7% part of which had been polymerized was prepared (hereinafter, the composition is referred to as "syrup (b-1)").

### (Synthesis Example 2) (Preparation of syrup (b-2))

100 Parts by weight of 1,6-hexanediol diacrylate as a (meth)acrylic monomer, 68.4 parts by weight of a poly(oxytetramethylene)glycol having a number-average molecular weight of 650 (PTMG650 manufactured by Mitsubishi Chemical Corporation) as a polyol, and 0.01 part by weight of dibutyltin dilaurate as a catalyst were loaded into a reaction vessel provided with a cooling tube, a temperature gauge, and a stirring apparatus. While the mixture was stirred, 25.5 parts by weight of hydrogenated xylylene diisocyanate (manufactured by Mitsui Chemicals Polyurethane) were dropped to the mixture. The resultant mixture was subjected to a reaction at 65°C for 5 hours. Thus, a urethane polymer-acrylic monomer mixture (hereinafter, the mixture is referred to as "syrup (b-2) ") was prepared. It should be noted that a usage ratio "NCO/OH (equivalent ratio) " between the polyisocyanate component and the polyol component was 1.25, the concentration of the urethane polymer with respect to the syrup (b-2) was 50 wt%, and the concentration of the (meth)acrylic monomer with respect thereto was 50 wt%.

### (Synthesis Example 3) (Preparation of syrup (b-3))

50 Parts by weight of 1, 6-hexanediol diacrylate, 50 parts by weight of a fluorine-based resin (trade name: "LF710F, " manufactured by ASAHI GLASS CO., LTD.), and 0.5 part by weight of a photopolymerization initiator (trade name: "IRGACURE 819," manufactured by Ciba Specialty Chemicals Inc.) were stirred in a flask provided with a stirring machine until the mixture became uniform. Thus, a syrupy composition was prepared (hereinafter, the composition is referred to as "syrup (b-3)").

### (Synthesis Example 4) (Preparation of syrup (a-1) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 100 parts by weight of 1, 6-hexanediol diacrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-1) containing a layered inorganic compound was prepared. It should be noted that the monomer mixture to which the layered clay mineral had been added became transparent as a result of the ultrasonic treatment.

### (Synthesis Example 5) (Preparation of syrup (a-2) containing layered inorganic compound)

30 Parts by weight of a layered clay mineral (trade name: "Lucentite SPN," manufactured by Co-op Chemical Co., Ltd., shape: flat plate-like shape) were added to a monomer mixture formed of 100 parts by weight of cyclohexyl acrylate, 0.2 part by weight of a photopolymerization initiator (trade name: "IRGACURE 651," manufactured by Ciba Specialty Chemicals Inc.), and 0.2 part by weight of a photopolymerization initiator (trade name: "IRGACURE 184," manufactured by Ciba Specialty Chemicals Inc.), and then the whole was left at rest at room temperature (25°C) for 24 hours. Thus, the monomer mixture (opaque) to which the layered clay mineral had been added was obtained. After that, the monomer mixture to which the layered clay mineral had been added was irradiated with an ultrasonic wave from an ultrasonic disperser (manufactured by NIPPON SEIKI CO., LTD.) at an irradiation intensity of 500 mW for 3 minutes. Thus, a syrup (a-2) containing a layered inorganic compound was prepared. It should be noted that the monomer mixture to which the layered clay mineral had been added became transparent as a result of the ultrasonic treatment.

### (Synthesis Example 6) (Production of monomer-absorbable sheet (B-1) with base material)

100 Parts by weight of the syrup (b-1) prepared in Synthesis Example 1 was applied to the release-treated surface of the base material film so as to have a thickness of 50 µm after its curing. Thus, a syrup composition layer was formed. Then, the cover film was attached onto the layer in such a manner that its release-treated surface was in contact with the layer, and then both surfaces of the resultant were simultaneously irradiated with UV light (illuminance: 5 mW/cm²) by using a black-light lamp for 5 minutes. As a result, the layer was cured to form a monomer-absorbing layer. Thus, a monomer-absorbable sheet (B-1) with a base material in which the surface of the monomer-absorbing layer was protected with the cover film was produced.

### (Synthesis Example 7) (Production of monomer-absorbable sheet (B-2) with base material)

### (Production of monomer pre-emulsion liquid)

100 Parts by weight of cyclohexyl acrylate (CHA), 4 parts by weight of acrylic acid (AA), 0.05 part by weight of dodecanethiol (chain transfer agent), 2 parts by weight of a sodium polyoxyalkylene sulfate (manufactured by Kao Corporation, LATEMUL E-118B) as an emulsifier, and 30.6 parts by weight of water were mixed, and then the mixture was forcibly emulsified with a homomixer (manufactured by PRIMIX Corporation) under the conditions of 5, 000 rpm and 5 minutes.

### (Production of water-dispersible resin emulsion)

41.5 Parts by weight of water were charged into a reaction vessel provided with a cooling tube, a nitrogen-introducing tube, a temperature gauge, and a stirring machine, and then the inside of the vessel was replaced with nitrogen. After that, the temperature in the vessel was increased to a polymerization temperature (60°C) and then 0.1 part by weight of 2,2'-azobis[N-(2-carboxyethyl)-2-methylpropionamidine]hydrate (manufactured by Wako Pure Chemical Industries, Ltd., VA-057) was added as a polymerization initiator to the vessel. Next, the monomer pre-emulsion liquid was charged dropwise into the reaction vessel over 4 hours and then the mixture was polymerized for an additional three hours. The temperature in the reaction vessel was kept at 60°C and then polymerization was performed in a stream of nitrogen to provide a water-dispersible acrylic copolymer liquid having a solid content of 57 wt%. After the liquid had been cooled, 10% ammonia water was added to adjust the pH of the aqueous dispersion to 8. Thus, a water-dispersible resin emulsion was obtained.

### (Film-producing step)

The peel-treated surface of the base material film was coated with the produced water-dispersible resin emulsion so that its thickness after drying was 50 µm. After that, the emulsion was dried with an oven with internal air circulation at 100°C for 5 minutes. Thus, a monomer-absorbable sheet (B-2) with a base material was produced.

### <Examples and comparative examples of highly flame-retardant polymer member>

### (Example 1)

A polymerizable composition layer (thickness: 50 µm) was formed by applying the syrup (a-1) to the release-treated surface of the cover film. A glass cloth (H22-F manufactured by Unitika Limited) was placed on the resultant and then the monomer-absorbable sheet (B-1) with a base material, the monomer-absorbing layer of which had been exposed by peeling the cover film, was attached in such a manner that the glass cloth was sandwiched between the layers. Thus, a laminate was formed.

Next, the laminate was left to stand at 130 °C for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (1) was produced.

### (Example 2)

Apolymerizable composition layer (thickness: 50 µm) was formed by applying the syrup (a-1) to the release-treated surface of the cover film. A glass cloth (E06C-4W manufactured by Unitika Limited) was placed on the resultant and then the monomer-absorbable sheet (B-1) with a base material, the monomer-absorbing layer of which had been exposed by peeling the cover film, was attached in such a manner that the glass cloth was sandwiched between the layers. Thus, a laminate was formed.
Next, the laminate was left to stand at 130 °C for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (2) was produced.

### (Example 3)

Apolymerizable composition layer (thickness: 50 µm) was formed by applying the syrup (a-1) to the release-treated surface of the cover film. A glass cloth (E02Z-4W manufactured by Unitika Limited) was placed on the resultant and then the monomer-absorbable sheet (B-1) with a base material, the monomer-absorbing layer of which had been exposed by peeling the cover film, was attached in such a manner that the glass cloth was sandwiched between the layers. Thus, a laminate was formed.
Next, the laminate was left to stand at 130 °C for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (3) was produced.

### (Example 4)

A polymerizable composition layer (thickness: 50 µm) was formed by applying the syrup (a-1) to the release-treated surface of the cover film. A glass cloth (E10T-4W manufactured by Unitika Limited) was placed on the resultant and then the monomer-absorbable sheet (B-1) with a base material, the monomer-absorbing layer of which had been exposed by peeling the cover film, was attached in such a manner that the glass cloth was sandwiched between the layers. Thus, a laminate was formed.
Next, the laminate was left to stand at 130 °C for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (4) was produced.

### (Example 5)

A glass cloth (E06C-4W manufactured by Unitika Limited) was placed on the monomer-absorbable sheet (B-1) with a base material, the monomer-absorbing layer of which had been exposed by peeling the cover film, and then the syrup (a-1) was applied to the resultant so that the total thickness of the syrup and the glass cloth was 100 µm. Thus, a laminate was formed in such a manner that the glass cloth was sandwiched between the monomer-absorbing layer and the syrup (a-1).
Next, the laminate was left to stand at 130 °C for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (5) was produced.

### (Example 6)

Apolymerizable composition layer (thickness: 50 µm) was formed by applying the syrup (a-1) to the release-treated surface of the cover film. A glass cloth (E10T-4W manufactured by Unitika Limited) was placed on the resultant and then the monomer-absorbable sheet (B-2) with a base material, the monomer-absorbing layer of which had been exposed by peeling the cover film, was attached in such a manner that the glass cloth was sandwiched between the layers. Thus, a laminate was formed.
Next, the laminate was left to stand at 130 °C for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (6) was produced.

### (Example 7)

Apolymerizable composition layer (thickness: 50 µm) was formed by applying the syrup (a-2) to the release-treated surface of the cover film. A glass cloth (E10T-4W manufactured by Unitika Limited) was placed on the resultant and then the monomer-absorbable sheet (B-1) with a base material, the monomer-absorbing layer of which had been exposed by peeling the cover film, was attached in such a manner that the glass cloth was sandwiched between the layers. Thus, a laminate was formed.
Next, the laminate was left to stand at 130 °C for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (7) was produced.

### (Example 8)

Apolymerizable composition layer (thickness: 50 µm) was formed by applying the syrup (a-1) to the release-treated surface of the cover film. A glass cloth (E10T-4W manufactured by Unitika Limited) was placed on the resultant.
A polymerizable syrup layer (thickness: 50 µm) was formed by applying the syrup (b-1) to the release-treated surface of another cover film.
The polymerizable composition layer and the polymerizable syrup layer were attached to each other in such a manner that the glass cloth was sandwiched therebetween. Thus, a laminate was formed.
Next, the laminate was left to stand at room temperature for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (8) was produced.

### (Example 9)

A polymerizable composition layer (thickness: 50 µm) was formed by applying the syrup (a-2) to the release-treated surface of the cover film. A glass cloth (E10T-4W manufactured by Unitika Limited) was placed on the resultant.
A polymerizable syrup layer (thickness: 50 µm) was formed by applying the syrup (b-1) to the release-treated surface of another cover film.
The polymerizable composition layer and the polymerizable syrup layer were attached to each other in such a manner that the glass cloth was sandwiched therebetween. Thus, a laminate was formed.
Next, the laminate was left to stand at room temperature for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (9) was produced.

### (Example 10)

A polymerizable composition layer (thickness: 50 µm) was formed by applying the syrup (a-1) to the release-treated surface of the cover film. A glass cloth (E10T-4W manufactured by Unitika Limited) was placed on the resultant.
A polymerizable syrup layer (thickness: 50 µm) was formed by applying the syrup (b-2) to the release-treated surface of another cover film.
The polymerizable composition layer and the polymerizable syrup layer were attached to each other in such a manner that the glass cloth was sandwiched therebetween. Thus, a laminate was formed.
Next, the laminate was left to stand at room temperature for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (10) was produced.

### (Example 11)

A polymerizable composition layer (thickness: 50 µm) was formed by applying the syrup (a-1) to the release-treated surface of the cover film. A glass cloth (E10T-4W manufactured by Unitika Limited) was placed on the resultant.
A polymerizable syrup layer (thickness: 50 µm) was formed by applying the syrup (b-3) to the release-treated surface of another cover film.
The polymerizable composition layer and the polymerizable syrup layer were attached to each other in such a manner that the glass cloth was sandwiched therebetween. Thus, a laminate was formed.
Next, the laminate was left to stand at room temperature for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (11) was produced.

### (Comparative Example 1)

Apolymerizable composition layer (thickness: 50 µm) was formed by applying the syrup (a-1) to the release-treated surface of the cover film. An olefin-based non-woven fabric (MILIFE TY1010FE manufactured by JX Nippon ANCI Corporation) was placed on the resultant and then the monomer-absorbable sheet (B-1) with a base material, the monomer-absorbing layer of which had been exposed by peeling the cover film, was attached in such a manner that the olefin-based non-woven fabric was sandwiched between the layers. Thus, a laminate was formed.
Next, the laminate was left to stand at 130°C for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (C1) was produced.

### (Comparative Example 2)

A polymerizable composition layer (thickness: 50 µm) was formed by applying the syrup (a-1) to the release-treated surface of the cover film. The monomer-absorbable sheet (B-1) with a base material, the monomer-absorbing layer of which had been exposed by peeling the cover film, was attached to the polymerizable composition layer. Thus, a laminate was formed.
Next, the laminate was left to stand at 130°C for 1 minute. Thus, an unevenly distributed polymerizable composition layer was obtained. After that, both of its surfaces were irradiated with UV light (illuminance: 5 mW/cm²) by using a black-light lamp as a light source for 5 minutes. As a result, the unevenly distributed polymerizable composition layer was photo-cured to form an unevenly distributed polymer layer. Thus, a flame-retardant polymer sheet (C2) was produced.

The polymer sheets of the examples and the comparative examples were subjected to the following evaluations. Table 1 and Table 2 show the results. It should be noted that in the description of the column "Production method" in Table 1, the term "comma" means a method of forming a laminate involving: applying a syrup to the release-treated surface of the cover film with a comma coater to form a polymerizable composition layer; placing a glass cloth on the resultant; and attaching a monomer-absorbable sheet with a base material, the monomer-absorbing layer of which has been exposed by peeling the cover film, in such a manner that the glass cloth is sandwiched between the layers. In addition, in the description of the column "Production method" in Table 1, the term "sandwich" means a method of forming a laminate involving: placing a glass cloth on a monomer-absorbable sheet with a base material, the monomer-absorbing layer of which has been exposed by peeling the cover film; and applying a syrup to the resultant so that the total thickness of the syrup and the glass cloth may be 100 µm, to thereby sandwich the glass cloth between the monomer-absorbing layer and the syrup. Further, in the description of the column "Production method" in Table 1, the term "W/W" means a method of forming a laminate involving: applying a syrup to the release-treated surface of the cover film to form a polymerizable composition layer; placing a glass cloth on the resultant; applying a syrup to the release-treated surface of another cover film to form a polymerizable syrup layer; and attaching the polymerizable composition layer and the polymerizable syrup layer to each other in such a manner that the glass cloth is sandwiched therebetween.

### <Transparency>

The cover film and the base material film on both surfaces of a polymer sheet were peeled, and then the total light transmittance was measured with a haze meter ("HM-150" manufactured by MURAKAMI COLOR RESEARCH LABORATORY) in conformity with JIS7361.

### <Flame retardancy>

A polymer sheet was evaluated for the following flame retardancy.

An evaluation for flame retardancy was performed by the horizontal firing test illustrated in FIG. **2.** FIG. **2** illustrates a measurement method. Each polymer sheet was cut into a piece measuring 5 cm by 12 cm and then the piece was subjected to the evaluation. It should be noted that the cover films on both surfaces of each polymer sheet were peeled.
The side corresponding to the flame-retardant layer was defined as a lower surface.
A Bunsen burner was placed so that the flame port of the Bunsen burner was positioned at a lower portion distant from the central portion of the lower surface of a polymer sheet by 45 mm, and then the flame of the Bunsen burner having a height of 55 mm from the flame port was brought into contact for 30 seconds. A propane gas was used as the gas of the Bunsen burner and the test was performed in the air.

### <<Flame retardancy: *1>>

A polymer sheet was evaluated for its flame retardancy on the basis of the following criteria by subjecting the polymer sheet to the horizontal firing test and observing the presence or absence of the combustion of the polymer sheet.
○: The polymer sheet does not ignite even after 30 seconds from the flame contact, and maintains its shape.
Δ: The polymer sheet ignites within 30 seconds from the flame contact, but maintains its shape.
×: The polymer sheet ignites within 30 seconds from the flame contact, and does not maintain its shape.

### <<Flame-blocking property: *2>>

A polymer sheet was evaluated for its flame-blocking property by: placing a White Economy 314-048 (manufactured by Biznet) as copy paper at a position 3 mm above the polymer sheet; and observing the presence or absence of the combustion of the copy paper through the same horizontal firing test as that described above.
○: The copy paper 3 mm above the polymer sheet does not ignite even after 30 seconds from the flame contact.
Δ: The copy paper 3 mm above the polymer sheet ignites within 30 seconds from the flame contact, but does not ignite within 10 seconds therefrom.
×: The copy paper 3 mm above the polymer sheet ignites within 10 seconds from the flame contact.

### <<Flame retardancy of flame-retardant-treated product: *3>>

### (1) Flame-retardant treatment

A flame-retardant-treated product was evaluated for its flame retardancy as described below. A sample was obtained by attaching a White Economy 314-048 (manufactured by Biznet) as copy paper to the upper surface of a polymer sheet, and then the presence or absence of the combustion of the sample as an article subjected to a flame-retardant treatment was observed through the same horizontal firing test as that described above.
○: The flame-retardant-treated product does not ignite even after 30 seconds from the flame contact.
Δ: The flame-retardant-treated product ignites within 30 seconds from the flame contact, but does not ignite within 10 seconds from the flame contact.
×: The flame-retardant-treated product ignites within 10 seconds from the flame contact.

### (2) Flame-retardant treatment of timber

A flame-retardant-treated product was evaluated for its flame retardancy as described below. A sample was obtained by attaching a pine plate having a thickness of 6 mm to the upper surface of a polymer sheet, and then the presence or absence of the combustion of the sample as an article subjected to a flame-retardant treatment was observed through the same horizontal firing test as that described above.
○: The flame-retardant-treated product does not ignite even after 5 minutes from the flame contact.
Δ: The flame-retardant-treated product ignites within 5 minutes from the flame contact, but does not collapse.
×: The flame-retardant-treated product ignites within 5 minutes from the flame contact and collapses.

### <Shatterproof property at the time of combustion>

A polymer sheet was attached to a square float glass measuring 100 mm long by 100 mm wide by 2 mm thick, and then the flame of a Bunsen burner was brought into contact with the central portion of the polymer sheet until the glass broke. The weight of the shattered glass after the test was measured and then the extent to which the original glass was able to be maintained was evaluated.
- ○:: 95 Weight percent or more of the glass is maintained.
- ×:: Less than 95 wt% of the glass is maintained.

### <Cone calorimeter test>

A heat-generating property test was performed with a cone calorimeter tester in accordance with the flame-proof and flame-resistant performance test method, and the performance evaluation standard based on Article 2, Item 9 of the Building Standard Law and Article 108-bis of the Building Standard Law Enforcement Order for 20 minutes. Evaluation criteria are as described below.

### (Total quantity of heat to be generated)

- ⊚:: Less than 5 MJ/m²
- o:: 5 MJ/m² or more and less than 6 MJ/m²
- Δ:: 6 MJ/m² or more and less than 8 MJ/m²
- ×:: 8 MJ/m² or more
(Maximum heat generation rate) : the time period for which the heat generation rate exceeds 200 kW/m²
- ⊚:: Less than 5 seconds
- ○:: 5 seconds or more and less than 10 seconds
- ×:: 10 seconds or more

### (State after test)

○: None of deformation, melting, cracking, and any other damage, which are detrimental to fire prevention, occurs.
×: At least one of deformation, melting, cracking, and any other damage, which are detrimental to fire prevention, occurs.

**[Table 1]**

| | Syrup containing layered inorganic compound | Monomer-abs orbable sheet with base material | Photopolymer izable syrup | Inorganic base material | | Production method |
|---|---|---|---|---|---|---|
| | | | | Mesh | Thickness [µm] | |
| Example 1 | a-1 | B-1 | - | Coarse | 40 | Comma |
| Example 2 | a-1 | B-1 | - | Fine | 60 | Comma |
| Example 3 | a-1 | B-1 | - | Fine | 20 | Comma |
| Example 4 | a-1 | B-1 | - | Fine | 100 | Comma |
| Example 5 | a-1 | B-1 | - | Fine | 60 | Sandwich |
| Example 6 | a-1 | B-2 | - | Fine | 100 | Comma |
| Example 7 | a-2 | B-1 | - | Fine | 100 | Comma |
| Example 8 | a-1 | - | b-1 | Fine | 100 | W/W |
| Example 9 | a-2 | - | b-1 | Fine | 100 | W/W |
| Example 10 | a-1 | - | b-2 | Fine | 100 | W/W |
| Example 11 | a-1 | - | b-3 | Fine | 100 | W/W |
| Comparative Example 1 | a-1 | B-1 | - | Fine | 100 | Comma |
| Comparative Example 2 | a-1 | B-1 | | - | - | Comma |

**[Table 2]**

| | Evaluation | | | | | | | | |
|---|---|---|---|---|---|---|---|---|---|
| | Transparency | Flame retardancy | | | | Shatterp roof property | Cone calorimeter test | | |
| | Total light transmittance (%) | Flame retardancy *1 | Flame-block ing property *2 | Flame retardancy of flame-retardant-treated product *3 | | | Total quantity of heat to be generated (MJ/m2) | Maximum heat generati on rate (sec) | State after test |
| | | | | Flame-reta rdant treatment of paper | Flame-reta rdant treatment of timber | | | | |
| Example 1 | 89.2 | ○ | ○ | ○ | ○ | ○ | ⊚(4.21) | ○(6) | ○ |
| Example 2 | 86.5 | ○ | ○ | ○ | ○ | ○ | ⊚(3.39) | ⊚(3) | ○ |
| Example 3 | 91.2 | ○ | ○ | ○ | ○ | ○ | ⊚(4.53) | ○(8) | ○ |
| Example 4 | 81.5 | ○ | ○ | ○ | ○ | ○ | ⊚(2.22) | ⊚(0) | ○ |
| Example 5 | 86.8 | ○ | ○ | ○ | ○ | ○ | ⊚(3.85) | ○(7) | ○ |
| Example 6 | 82.1 | ○ | ○ | ○ | ○ | ○ | ⊚(3.21) | ⊚(0) | ○ |
| Example 7 | 82.3 | ○ | ○ | ○ | ○ | ○ | ⊚(3.51) | ⊚(0) | ○ |
| Example 8 | 83.4 | ○ | ○ | ○ | ○ | ○ | ⊚(2.69) | ⊚(0) | ○ |
| Example 9 | 82.7 | ○ | ○ | ○ | ○ | ○ | ⊚(2.95) | ⊚(0) | ○ |
| Example 10 | 83.4 | ○ | ○ | ○ | ○ | ○ | ⊚(2.38) | ⊚(0) | ○ |
| Example 11 | 83.1 | ○ | ○ | ○ | ○ | ○ | ⊚(3.06) | ⊚(0) | ○ |
| Comparative Example 1 | 80.5 | × | × | × | × | ○ | ⊚(4.68) | ○(7) | × |
| Comparative Example 2 | 92.3 | ○ | ○ | ○ | × | × | ⊚(3.33) | ⊚(0) | × |

Each of the polymer sheets of Examples 1 to 11 has transparency, flexibility, and a high level of flame retardancy, and as can be seen from the results of the heat-generating property test with a cone calorimeter, there is a high possibility that each of the sheets can receive the incombustible approval of the Building Standard Law alone.

### (Example 12) (Production of photocatalytic flame-retardant polymer sheet (1))

A photocatalytic coating agent (manufactured by TAYCA CORPORATION, trade name: "TKC-303," photocatalyst: titanium oxide, dry solid content: 13%, titanium oxide particle diameter=6 nm, acidic, aqueous medium) was applied onto the flame-retardant layer of the flame-retardant polymer sheet (1) obtained in Example 1, and was then dried at 120°C for 1 minute to form a photocatalyst layer. Thus, a photocatalytic flame-retardant polymer sheet (1) was produced.
The thickness of the photocatalyst layer in the resultant photocatalytic flame-retardant polymer sheet (1) was 5 µm.

### (Example 13) (Production of photocatalytic flame-retardant polymer sheet (5))

A photocatalytic coating agent (manufactured by TAYCA CORPORATION, trade name: "TKC-303," photocatalyst: titanium oxide, dry solid content: 13%, titanium oxide particle diameter=6 nm, acidic, aqueous medium) was applied onto the flame-retardant layer of the flame-retardant polymer sheet (5) obtained in Example 5, and was then dried at 120°C for 1 minute to form a photocatalyst layer. Thus, a photocatalytic flame-retardant polymer sheet (5) was produced.
The thickness of the photocatalyst layer in the resultant photocatalytic flame-retardant polymer sheet (5) was 5 µm.

### (Example 14) (Production of photocatalytic flame-retardant polymer sheet (8))

A photocatalytic coating agent (manufactured by TAYCA CORPORATION, trade name: "TKC-303," photocatalyst: titanium oxide, drysolidcontent: 13%, titanium oxide particle diameter=6 nm, acidic, aqueous medium) was applied onto the flame-retardant layer of the flame-retardant polymer sheet (8) obtained in Example 8, and was then dried at 120°C for 1 minute to form a photocatalyst layer. Thus, a photocatalytic flame-retardant polymer sheet (8) was produced.
The thickness of the photocatalyst layer in the resultant photocatalytic flame-retardant polymer sheet (8) was 5 µm.

Each of the photocatalytic flame-retardant polymer sheets (1), (5), and (8) was evaluated for its photocatalytic performance with an acetaldehyde gas. Gas concentrations (an initial concentration and a concentration after 60 minutes) in a detector tube were measured on the basis of the following evaluation test method. Table 3 shows the results.

### (Evaluation test method)

| | |
|---|---|
| Pre-irradiation of sample: | 1 mW/cm²×6 hr |
| Sample dimensions: | 5 cm×5 cm |
| Gas bag volume: | A Tedlar bag having a volume of 5 L |
| Initial gas concentration: | 20 ppm |
| Light source: | A fluorescent lamp (10,000 lux) |

**[Table 3]**

| | Photocatalytic property | |
|---|---|---|
| | Initial concentration (ppm) | Concentration after 60 minutes (ppm) |
| Example 12 | 20 | 3 |
| Example 13 | 20 | 3 |
| Example 14 | 20 | 3 |

### (Example 15) (Production of antifouling flame-retardant polymer sheet (1))

An antifouling paint (fluorine-based resin-containing aqueous top coat, trade name: "Silvia WF-400," manufactured by NIHON TOKUSHU TORYO CO., LTD.) was applied onto the flame-retardant layer of the flame-retardant polymer sheet (1) obtained in Example 1, and was then dried at 120°C for 1 minute to form an antifouling layer. Thus, an antifouling flame-retardant polymer sheet (1) was produced.
The thickness of the antifouling layer in the resultant antifouling flame-retardant polymer sheet (1) was 5 µm.

### (Example 16) (Production of antifouling flame-retardant polymer sheet (5))

An antifouling paint (fluorine-based resin-containing aqueous top coat, trade name: "Silvia WF-400," manufactured by NIHON TOKUSHU TORYO CO., LTD.) was applied onto the flame-retardant layer of the flame-retardant polymer sheet (5) obtained in Example 5, and was then dried at 120°C for 1 minute to form an antifouling layer. Thus, an antifouling flame-retardant polymer sheet (5) was produced.
The thickness of the antifouling layer in the resultant antifouling flame-retardant polymer sheet (5) was 5 µm.

### (Example 17) (Production of antifouling flame-retardant polymer sheet (8))

An antifouling paint (fluorine-based resin-containing aqueous top coat, trade name: "Silvia WF-400," manufactured by NIHON TOKUSHU TORYO CO. , LTD.) was applied onto the flame-retardant layer of the flame-retardant polymer sheet (8) obtained in Example 8, and was then dried at 120°C for 1 minute to form an antifouling layer. Thus, an antifouling flame-retardant polymer sheet (8) was produced.
The thickness of the antifouling layer in the resultant antifouling flame-retardant polymer sheet (8) was 5 µm.

A paste formed of a mixture containing carbon black and kerosene at a weight ratio of 1/2 was smeared on the antifouling layer of each of the antifouling flame-retardant polymer sheets (1), (5), and (8), and then the resultant was left to stand at room temperature for 24 hours. After that, water washing was performed with a sponge, and then the contaminated state of the surface of the polymer sheet was visually observed and evaluated in accordance with the following criteria. Table 4 shows the results.
- ○:: No contamination
- Δ:: Slight contamination
- ×:: Remarkable contamination

**[Table 4]**

| | Antifouling property |
|---|---|
| Example 15 | ○ |
| Example 16 | ○ |
| Example 17 | ○ |

### (Example 18) (Production of anti-fingerprint flame-retardant polymer sheet (1))

A syrup composition obtained by uniformly mixing 95 parts by weight of a polyfunctional acrylate (trade name: "Beam Set 575," manufactured by ARAKAWA CHEMICAL INDUSTRIES, LTD.), 5 parts by weight of a fluorine-based resin (trade name: "OPTOOL DAC," manufactured by DAIKIN INDUSTRIES, LTD.), and 0.5 part by weight of a photopolymerization initiator (trade name: "IRGACURE 819," manufactured by Ciba Specialty Chemicals Inc.) was applied to the release-treated surface of the base material film so that its thickness after curing was 5 µm. Thus, a syrup composition layer was formed. Then, the flame-retardant layer side of the flame-retardant polymer sheet (1) obtained in Example 1 was attached onto the layer, and then both surfaces of the resultant were simultaneously irradiated with UV light (illuminance: 5 mW/cm²) by using a black-light lamp for 5 minutes. As a result, the layer was cured to form an anti-fingerprint layer. Thus, an anti-fingerprint flame-retardant polymer sheet (1) was produced.
The thickness of the anti-fingerprint layer in the resultant anti-fingerprint flame-retardant polymer sheet (1) was 5 µm.

### (Example 19) (Production of anti-fingerprint flame-retardant polymer sheet (5))

A syrup composition obtained by uniformly mixing 95 parts by weight of a polyfunctional acrylate (trade name: "Beam Set 575," manufactured byARAKAWA CHEMICAL INDUSTRIES, LTD.), 5 parts by weight of a fluorine-based resin (trade name: "OPTOOL DAC," manufactured by DAIKIN INDUSTRIES, LTD.), and 0.5 part by weight of a photopolymerization initiator (trade name: "IRGACURE 819," manufactured by Ciba Specialty Chemicals Inc.) was applied to the release-treated surface of the base material film so that its thickness after curing was 5 µm. Thus, a syrup composition layer was formed. Then, the flame-retardant layer side of the flame-retardant polymer sheet (5) obtained in Example 5 was attached onto the layer, and then both surfaces of the resultant were simultaneously irradiated with UV light (illuminance: 5 mW/cm²) by using a black-light lamp for 5 minutes. As a result, the layer was cured to form an anti-fingerprint layer. Thus, an anti-fingerprint flame-retardant polymer sheet (5) was produced.
The thickness of the anti-fingerprint layer in the resultant anti-fingerprint flame-retardant polymer sheet (5) was 5 µm.

### (Example 20) (Production of anti-fingerprint flame-retardant polymer sheet (8))

A syrup composition obtained by uniformly mixing 95 parts by weight of a polyfunctional acrylate (trade name: "Beam Set 575," manufactured by ARAKAWA CHEMICAL INDUSTRIES, LTD.), 5 parts by weight of a fluorine-based resin (trade name: "OPTOOL DAC," manufactured by DAIKIN INDUSTRIES, LTD.), and 0.5 part by weight of a photopolymerization initiator (trade name: "IRGACURE 819," manufactured by Ciba Specialty Chemicals Inc.) was applied to the release-treated surface of the base material film so that its thickness after curing was 5 µm. Thus, a syrup composition layer was formed. Then, the flame-retardant layer side of the flame-retardant polymer sheet (8) obtained in Example 8 was attached onto the layer, and then both surfaces of the resultant were simultaneously irradiated with UV light (illuminance: 5 mW/cm²) by using a black-light lamp for 5 minutes. As a result, the layer was cured to form an anti-fingerprint layer. Thus, an anti-fingerprint flame-retardant polymer sheet (8) was produced.
The thickness of the anti-fingerprint layer in the resultant anti-fingerprint flame-retardant polymer sheet (8) was 5 µm.

A fingerprint was caused to adhere onto the anti-fingerprint layer of each of the anti-fingerprint flame-retardant polymer sheets (1), (5), and (8). Black paper was spreadbelow the sheet, and then the fingerprint was visually observed from a vertical direction and evaluated in accordance with the following criteria. Table 5 shows the results.
- ○:: The fingerprint is not observed.
- Δ:: The fingerprint is slightly observed.
- ×:: The fingerprint is whitely and clearly observed.

**[Table 5]**

| | Anti-fingerprint property |
|---|---|
| Example 18 | ○ |
| Example 19 | ○ |
| Example 20 | ○ |

### (Example 21) (Production of scratch-resistant flame-retardant polymer sheet (1))

An epoxy acrylate-based UV-curable resin (trade name: "Beam Set 374A," manufactured by ARAKAWA CHEMICAL INDUSTRIES, LTD.) was applied onto the flame-retardant layer of the flame-retardant polymer sheet (1) obtained in Example 1, and was then dried at 100°C for 1 minute. After that, the dried product was irradiated with UV light (light quantity: 300 mJ/cm²) by using a metal halide lamp to form a hard coat layer. Thus, a scratch-resistant flame-retardant polymer sheet (1) was produced.
The thickness of the hard coat layer in the resultant scratch-resistant flame-retardant polymer sheet (1) was 5 µm.

### (Example 22) (Production of scratch-resistant flame-retardant polymer sheet (5))

An epoxy acrylate-based UV-curable resin (trade name: "Beam Set 374A," manufactured by ARAKAWA CHEMICAL INDUSTRIES, LTD.) was applied onto the flame-retardant layer of the flame-retardant polymer sheet (5) obtained in Example 5, and was then dried at 100°C for 1 minute. After that, the dried product was irradiated with UV light (light quantity: 300 mJ/cm²) by using a metal halide lamp to form a hard coatlayer. Thus, a scratch-resistant flame-retardant polymer sheet (5) was produced.
The thickness of the hard coat layer in the resultant scratch-resistant flame-retardant polymer sheet (5) was 5 µm.

### (Example 23) (Production of scratch-resistant flame-retardant polymer sheet (8))

An epoxy acrylate-based UV-curable resin (trade name: "Beam Set 374A," manufactured by ARAKAWA CHEMICAL INDUSTRIES, LTD.) was applied onto the flame-retardant layer of the flame-retardant polymer sheet (8) obtained in Example 8, and was then dried at 100°C for 1 minute. After that, the dried product was irradiated with UV light (light quantity: 300 mJ/cm²) by using a metal halide lamp to form a hard coat layer. Thus, a scratch-resistant flame-retardant polymer sheet (8) was produced.
The thickness of the hard coat layer in the resultant scratch-resistant flame-retardant polymer sheet (8) was 5 µm.

Each of the scratch-resistant flame-retardant polymer sheets (1), (5), and (8) was cut into a piece measuring 25 mm wide by 100 mm or more long, and then the piece was attached as a sample to a glass plate. Next, a Steel Wool #0000 was uniformly attached to a smooth section of a column having a diameter of 25 mm and then the resultant was pressed against the surface of the sample under the condition of a load of 400 g. It should be noted that the column to which the steel wool had been attached was reciprocated at a speed of 100 mm/sec 10 times. After that, whether or not the surface of the sample was free of a flaw having a width of 10 µm or more was visually observed and evaluated in accordance with the following criteria. Table 6 shows the results.
- A:: No flaw is present.
- B:: A fine flaw is present.
- C:: A large flaw is present.

**[Table 6]**

| | Scratch resistance |
|---|---|
| Example 21 | A |
| Example 22 | A |
| Example 23 | A |

### (Example 24) (Production of alkali-resistant flame-retardant polymer sheet (1))

An alkali-resistant paint (trade name: "Silvia WU-200," aqueous acrylic urethane emulsion paint, manufactured by NIHON TOKUSHU TORYO CO. , LTD.) was applied onto the flame-retardant layer of the flame-retardant polymer sheet (1) obtained in Example 1, and was then dried at 100°C for 5 minutes to form an alkali-resistant layer. Thus, an alkali-resistant flame-retardant polymer sheet (1) was produced.
The thickness of the alkali-resistant layer in the resultant alkali-resistant flame-retardant polymer sheet (1) was 10 µm.

### (Example 25) (Production of alkali-resistant flame-retardant polymer sheet (5))

An alkali-resistant paint (trade name: "Silvia WU-200," aqueous acrylic urethane emulsion paint, manufactured by NIHON TOKUSHU TORYO CO., LTD.) was applied onto the flame-retardant layer of the flame-retardant polymer sheet (5) obtained in Example 5, and was then dried at 100°C for 5 minutes to form an alkali-resistant layer. Thus, an alkali-resistant flame-retardant polymer sheet (5) was produced.
The thickness of the alkali-resistant layer in the resultant alkali-resistant flame-retardant polymer sheet (5) was 10 µm.

### (Example 26) (Production of alkali-resistant flame-retardant polymer sheet (8))

An alkali-resistant paint (trade name: "Silvia WU-200," aqueous acrylic urethane emulsion paint, manufactured by NIHON TOKUSHU TORYO CO. , LTD.) was applied onto the flame-retardant layer of the flame-retardant polymer sheet (8) obtained in Example 8, and was then dried at 100°C for 5 minutes to form an alkali-resistant layer. Thus, an alkali-resistant flame-retardant polymer sheet (8) was produced.
The thickness of the alkali-resistant layer in the resultant alkali-resistant flame-retardant polymer sheet (8) was 10 µm.

Qualitative filter paper (product name: "No. 2," size: "ϕ55 mm," manufactured by ADVANTEC) sufficiently impregnated with a 10-wt% aqueous solution of sodium hydroxide was placed on the alkali-resistant layer of each of the alkali-resistant flame-retardant polymer sheets (1), (5), and (8) for 30 minutes, and then the state of the polymer sheet after the removal of the qualitative filter paper was observed. Table 7 shows the results.
- ○:: No change is observed.
- ×:: The surface has a wrinkle or a blister.

**[Table 7]**

| | Alkali resistance |
|---|---|
| Example 24 | ○ |
| Example 25 | ○ |
| Example 26 | ○ |

### (Example 27) (Production of acid-resistant flame-retardant polymer sheet (1))

An acid-resistant paint (trade name: "SULPHOTITE 10," phenol resin-based paint, manufactured by Nippon Paint Co., Ltd.) was applied onto the flame-retardant layer of the flame-retardant polymer sheet (1) obtained in Example 1, and was then dried at 120°C for 1 minute to form an acid-resistant layer. Thus, an acid-resistant flame-retardant polymer sheet (1) was produced.
The thickness of the acid-resistant layer in the resultant acid-resistant flame-retardant polymer sheet (1) was 10 µm.

### (Example 28) (Production of acid-resistant flame-retardant polymer sheet (5))

An acid-resistant paint (trade name: "SULPHOTITE 10," phenol resin-based paint, manufactured by Nippon Paint Co., Ltd.) was applied onto the flame-retardant layer of the flame-retardant polymer sheet (5) obtained in Example 5, and was then dried at 120°C for 1 minute to form an acid-resistant layer. Thus, an acid-resistant flame-retardant polymer sheet (5) was produced.
The thickness of the acid-resistant layer in the resultant acid-resistant flame-retardant polymer sheet (5) was 10 µm.

### (Example 29) (Production of acid-resistant flame-retardant polymer sheet (8))

An acid-resistant paint (trade name: "SULPHOTITE 10," phenol resin-based paint, manufactured by Nippon Paint Co., Ltd.) was applied onto the flame-retardant layer of the flame-retardant polymer sheet (8) obtained in Example 8, and was then dried at 120°C for 1 minute to form an acid-resistant layer. Thus, anacid-resistant flame-retardant polymer sheet (8) was produced.
The thickness of the acid-resistant layer in the resultant acid-resistant flame-retardant polymer sheet (8) was 10 µm.

Qualitative filter paper (product name: "No. 2," size: "ϕ55 mm," manufactured by ADVANTEC) sufficiently impregnated with a 10-vol% aqueous solution of sodium hydroxide was placed on the alkali-resistant layer of each of the acid-resistant flame-retardant polymer sheets (1), (5), and (8) for 30 minutes, and then the state of the polymer sheet after the removal of the qualitative filter paper was observed. Table 8 shows the results.
- ○:: No change is observed.
- ×:: The surface has a wrinkle or a blister.

**[Table 8]**

| | Acid resistance |
|---|---|
| Example 27 | ○ |
| Example 28 | ○ |
| Example 29 | ○ |

### (Example 30) (Production of solvent-resistant flame-retardant polymer sheet (1))

A solvent-resistant paint (trade name: "BONDIC 1310NE," water-dispersible urethane resin-based paint, manufactured by Dainippon Ink & Chemicals, Inc.) was applied onto the flame-retardant layer of the flame-retardant polymer sheet (1) obtained in Example 1, and was then dried at 120°C for 1 minute to form a solvent-resistant layer. Thus, a solvent-resistant flame-retardant polymer sheet (1) was produced.
The thickness of the solvent-resistant layer in the resultant solvent-resistant flame-retardant polymer sheet (1) was 10 µm.

### (Example 31) (Production of solvent-resistant flame-retardant polymer sheet (5))

A solvent-resistant paint (trade name: "BONDIC 1310NE," water-dispersible urethane resin-based paint, manufactured by Dainippon Ink & Chemicals, Inc.) was applied onto the flame-retardant layer of the flame-retardant polymer sheet (5) obtained in Example 5, and was then dried at 120°C for 1 minute to form a solvent-resistant layer. Thus, a solvent-resistant flame-retardant polymer sheet (5) was produced.
The thickness of the solvent-resistant layer in the resultant solvent-resistant flame-retardant polymer sheet (5) was 10 µm.

### (Example 32) (Production of solvent-resistant flame-retardant polymer sheet (8))

A solvent-resistant paint (trade name: "BONDIC 1310NE," water-dispersible urethane resin-based paint, manufactured by Dainippon Ink & Chemicals, Inc.) was applied onto the flame-retardant layer of the flame-retardant polymer sheet (8) obtained in Example 8, and was then dried at 120°C for 1 minute to form a solvent-resistant layer. Thus, a solvent-resistant flame-retardant polymer sheet (8) was produced.
The thickness of the solvent-resistant layer in the resultant solvent-resistant flame-retardant polymer sheet (8) was 10 µm.

Qualitative filter paper (product name: "No. 2, " size: "ϕ55 mm," manufactured by ADVANTEC) sufficiently impregnated with xylene was placed on the solvent-resistant layer of each of the solvent-resistant flame-retardant polymer sheets (1), (5), and (8) for 30 minutes, and then the state of the polymer sheet after the removal of the qualitative filter paper was observed. Table 9 shows the results.
- ○:: No change is observed.
- ×:: The surface has a wrinkle or a blister.

**[Table 9]**

| | Solvent resistance |
|---|---|
| Example 30 | ○ |
| Example 31 | ○ |
| Example 32 | ○ |

### (Example 33) (Production of heat-shielding flame-retardant polymer sheet (1))

A heat-shielding paint (manufactured by NIHON TOKUSHU TORYO CO., LTD., Para-Thermo) was applied onto the flame-retardant layer of the flame-retardant polymer sheet (1) obtained in Example 1, and was then dried at 100°C for 5 minutes. Thus, a heat-shielding flame-retardant polymer sheet (1) was produced.
The thickness of a heat-shielding layer in the resultant heat-shielding flame-retardant polymer sheet (1) was 5 µm.

### (Example 34) (Production of heat-shielding flame-retardant polymer sheet (5))

A heat-shielding paint (manufactured by NIHON TOKUSHU TORYO CO., LTD., Para-Thermo) was applied onto the flame-retardant layer of the flame-retardant polymer sheet (5) obtained in Example 5, and was then dried at 100°C for 5 minutes. Thus, a heat-shielding flame-retardant polymer sheet (5) was produced.
The thickness of a heat-shielding layer in the resultant heat-shielding flame-retardant polymer sheet (5) was 5 µm.

### (Example 35) (Production of heat-shielding flame-retardant polymer sheet (8))

A heat-shielding paint (manufactured by NIHON TOKUSHU TORYO CO., LTD., Para-Thermo) was applied onto the flame-retardant layer of the flame-retardant polymer sheet (8) obtained in Example 8, and was then dried at 100°C for 5 minutes. Thus, a heat-shielding flame-retardant polymer sheet (8) was produced.
The thickness of a heat-shielding layer in the resultant heat-shielding flame-retardant polymer sheet (8) was 5 µm.

A temperature sensor was attached to the back surface on the polymer layer side of each of the heat-shielding flame-retardant polymer sheets (1), (5), and (8). The resultant was irradiated with light from a position 30 cm vertically above its heat-shielding layer side by using an REF-lamp, and then the temperature at the time point when an increase in temperature of the back surface reached a saturated state was measured. Table 10 shows the results.

**[Table 10]**

| | Heat-shielding property (°C) |
|---|---|
| Example 33 | 67 |
| Example 34 | 66 |
| Example 35 | 67 |

### (Example 36) (Production of heat-insulating flame-retardant polymer sheet (1))

A heat-insulating paint (acrylic resin emulsion paint containing glass beads, trade name: "Sun Coat Thermo Shield," manufactured by NAGASHIMA SPECIAL PAINT CO. , LTD.) was applied onto the flame-retardant layer of the flame-retardant polymer sheet (1) obtained in Example 1, and was then dried at 100°C for 5 minutes to form a heat-insulating layer. Thus, a heat-insulating flame-retardant polymer sheet (1) was produced.
The thickness of the heat-insulating layer in the resultant heat-insulating flame-retardant polymer sheet (1) was 5 µm.

### (Example 37) (Production of heat-insulating flame-retardant polymer sheet (5))

A heat-insulating paint (acrylic resin emulsion paint containing glass beads, trade name: "Sun Coat Thermo Shield," manufactured by NAGASHIMA SPECIAL PAINT CO., LTD.) was applied onto the flame-retardant layer of the flame-retardant polymer sheet (5) obtained in Example 5, and was then dried at 100°C for 5 minutes to form a heat-insulating layer. Thus, a heat-insulating flame-retardant polymer sheet (5) was produced.
The thickness of the heat-insulating layer in the resultant heat-insulating flame-retardant polymer sheet (5) was 5 µm.

### (Example 38) (Production of heat-insulating flame-retardant polymer sheet (8))

A heat-insulating paint (acrylic resin emulsion paint containing glass beads, trade name: "Sun Coat Thermo Shield," manufactured by NAGASHIMA SPECIAL PAINT CO., LTD.) was applied onto the flame-retardant layer of the flame-retardant polymer sheet (8) obtained in Example 8, and was then dried at 100°C for 5 minutes to form a heat-insulating layer. Thus, a heat-insulating flame-retardant polymer sheet (8) was produced.
The thickness of the heat-insulating layer in the resultant heat-insulating flame-retardant polymer sheet (8) was 5 µm.

Each of the heat-insulating flame-retardant polymer sheets (1), (5), and (8) was floated on ice water at 0°C with its polymer layer side directed downward in a room having a room temperature of 10°C and a relative humidity of 30%RH. The surface temperature of the polymer sheet was measured and then the presence or absence of dew condensation was visually observed. Table 11 shows the results.

**[Table 11]**

| | Heat-insulating property | |
|---|---|---|
| | Surface temperature (°C) | Presence or absence of dew condensation |
| Example 36 | 7 | Absent |
| Example 37 | 7 | Absent |
| Example 38 | 7 | Absent |

### Industrial Applicability

With regard to the highly flame-retardant polymer member of the present invention, the highly flame-retardant polymer member itself can express excellent flame retardancy. In addition, an adherend can be subjected to an excellent flame-retardant treatment by attaching the member to the adherend. For example, when the highly flame-retardant polymer member of the present invention is attached to a window glass or the like, the member can express shatterproof property by which the window glass or the like can be effectively prevented from breaking and shattering owing to its combustion. When the member is attached to a timber or the like, the member can express fire spreading-preventing property by which the expansion of the combustion of the timber or the like can be prevented. In addition, when the highly flame-retardant polymer member of the present invention is a thin layer, the member can be suitably utilized as an interior member for a place where incombustible approval is required.

### Reference Signs List

- A: flame-retardant layer
- B: polymer layer
- L: inorganic base material
- a: polymerizable composition layer
- a': polymerizable composition layer
- a1: unevenly distributed polymerizable composition layer
- a2: unevenly distributed polymer layer
- a11, a21: unevenly distributed portion of layered inorganic compound
- a12, a22: non-unevenly distributed portion of layered inorganic compound
- b: monomer-absorbing layer
- b': polymerizable composition layer
- b1: monomer-absorbing layer
- b2: cured monomer-absorbing layer
- C: cover film
- D: base material film
- E: monomer-absorbable sheet with base material
- X: laminate
- f: immiscible layered inorganic compound
- m1: polymerizable monomer
- m2: polymerizable monomer
- p2: polymer

## Claims

1. A highly flame-retardant polymer member, comprising a polymer layer (**B**), an inorganic base material (**L**), and a flame-retardant layer (**A**) in the stated order, wherein the flame-retardant layer (**A**) comprises a layer containing a layered inorganic compound (**f**) in a polymer (**X**).

2. A highly flame-retardant polymer member according to claim 1, wherein the inorganic base material (**L**) comprises a fibrous inorganic base material.

3. A highly flame-retardant polymer member according to claim 2, wherein the fibrous inorganic base material comprises a glass cloth.

4. A highly flame-retardant polymer member according to claim 1, wherein in a horizontal firing test involving horizontally placing the highly flame-retardant polymer member with its side of the flame-retardant layer (**A**) as a lower surface so that the lower surface is in contact with air, placing a Bunsen burner so that a flame port of the Bunsen burner is positioned at a lower portion distant from the lower surface on the side of the flame-retardant layer (**A**) by 45 mm, and bringing a flame of the Bunsen burner having a height of 55 mm from the flame port into contact with the lower surface of the flame-retardant layer (**A**) for 30 seconds while preventing the flame from being in contact with an end portion of the highly flame-retardant polymer member, the highly flame-retardant polymer member has flame retardancy capable of blocking the flame.

5. A highly flame-retardant polymer member according to claim 1, wherein a content of ash in the flame-retardant layer (**A**) is 3 wt% or more and less than 70 wt%.

6. A highly flame-retardant polymer member according to claim 1, wherein the layered inorganic compound (f) in the flame-retardant layer (**A**) comprises a layered clay mineral.

7. A highly flame-retardant polymer member according to claim 1, wherein the highly flame-retardant polymer member is obtained by
laminating a syrupy polymerizable composition layer (**a**) formed of a polymerizable composition (**α**) containing a polymerizable monomer (**m**) and the layered inorganic compound (**f**), the inorganic basematerial (**L**), and a solid monomer-absorbing layer (**b**) containing a polymer (**p**) and capable of absorbing the polymerizable monomer (**m**), and
performing polymerization.

8. A highly flame-retardant polymer member according to claim 1, wherein the highly flame-retardant polymer member is obtained by laminating a solid layered inorganic compound-containing polymer layer (**a'**), which is obtained by polymerizing a polymerizable composition layer (**a**) formed of a polymerizable composition (**α**) containing a polymerizable monomer (**m**) and the layered inorganic compound (**f**), the inorganic base material (**L**), and a solid monomer-absorbing layer (**b**) containing a polymer (**p**) and capable of absorbing the polymerizable monomer (**m**).

9. A highly flame-retardant polymer member according to claim 1, wherein the highly flame-retardant polymer member is obtained by
laminating a syrupy polymerizable composition layer **(a')** formed of a polymerizable composition (**α**) containing a polymerizable monomer (**m1**) and the layered inorganic compound (**f**), the inorganic base material (**L**), and a syrupy polymerizable composition layer (**b'**) containing a polymerizable monomer (**m2**) and a polymer (**p2**), and
performing polymerization.

10. A flame-retardant article, which is obtained by attaching the highly flame-retardant polymer member according to claim 1 to an adherend.
